# EUROPEAN PATENT APPLICATION

(11) **EP 3 919 448 A1**
(43) Date of publication of application: **08.12.2021**
(21) Application number: 20747667.2
(22) Date of filing: 20.01.2020
(51) Int. Cl.: C02F 9/10, C02F 101/30

(54) **SUPERCRITICAL WATER ALL-IN-ONE MACHINE AND ORGANIC WASTEWATER TREATMENT METHOD**

(30) Priority: 03.02.2019 CN 201910108889; 03.02.2019 CN 201910108899; 03.02.2019 CN 201910108875; 03.02.2019 CN 201910108900; 03.02.2019 CN 201910108888
(71) Applicant: China Institute of Atomic Energy, Beijing 102413 (CN)
(72) Inventor: ZHANG, Zhentao, Beijing 102413 (CN); CHEN, Yan, Beijing 102413 (CN); LIU, Yi, Beijing 102413 (CN); PENG, Lin, Beijing 102413 (CN); LONG, Bokang, Beijing 102413 (CN); ZHANG, Yu, Beijing 102413 (CN); REN, Ren, Beijing 102413 (CN); SUN, Runjie, Beijing 102413 (CN); LI, Ruizhi, Beijing 102413 (CN); LI, Zhenyi, Beijing 102413 (CN); ZHANG, Lijun, Beijing 102413 (CN); ZHANG, Xingwang, Beijing 102413 (CN); LUO, Yongzhi, Beijing 102413 (CN); NIE, Peng, Beijing 102413 (CN); ZHANG, Weiting, Beijing 102413 (CN); ZHANG, Jianguo, Beijing 102413 (CN); WANG, Haiyun, Beijing 102413 (CN); QIU, Wenping, Beijing 102413 (CN)
(74) Representative: Stiel, Jürgen
(86) International application number: PCT/CN2020/073315
(87) International publication number: WO 2020/156337

(57) **Abstract**

The present disclosure provides a supercritical water oxidation system, including a supercritical water oxidation device, an oxidant supply device and an organic matter supply device. The supercritical water oxidation device includes a reactor and an outer self-separating barrel. The reactor is arranged inside the outer self-separating barrel and includes a reactor housing provided with an oxidant feed port, an organic matter feed port and a discharge port. The outer self-separating barrel is provided with an evaporation tank, a condensation tank and a condensation tube. The evaporation tank is in communication with the discharge port, and a back pressure valve is provided between the evaporation tank and the discharge port. The condensation tank is arranged above the evaporation tank, and the condensation tube is arranged above the condensation tank, so that a liquid obtained by liquefying a gas evaporated in the evaporation tank at the condensation tube falls back into the condensation tank. The oxidant supply device in communication with the oxidant feed port. The organic matter supply device is in communication with the organic matter feed port. The present disclosure further provides a method of treating a waste liquid.

## Description

### TECHNICAL FIELD

The present disclosure relates to a field of waste liquid treatment, and in particular to a supercritical water oxidation system and a method of treating a waste liquid.

### BACKGROUND

A supercritical water oxidation method is a new type of wet oxidation technology. By taking advantage of a complete miscibility of organic waste, water and oxygen in a supercritical water system, the organic waste is oxidized and decomposed into carbon dioxide, water and inorganic salts, etc., thereby achieving the treatment of the organic waste liquid. Generally, the supercritical water refers to water in a special state with a temperature exceeding 374 °C and a pressure exceeding 22 MPa. In the supercritical water state, the organic waste and the oxygen are completely miscible in the supercritical water system. When a temperature of the supercritical water exceeds 550 °C, a solubility of inorganic salts therein is zero. It is possible to convert an organic matter into carbon dioxide, water and inorganic salts by using this property of the supercritical water.

At present, upon researches, it is believed that the supercritical water oxidation method has high decomposition efficiency, short treatment cycle, no open flame and less secondary waste and is environmentally friendly. The supercritical water oxidation method is suitable for treating a variety of organic wastes, may be applied to environmental protection, chemical industry, coal gasification, nuclear power and thermal power, new material synthesis and many other fields, and is a treatment technology with great potential.

However, in a process of realizing the present disclosure, the inventor found that in related art, the following problems exist in a treatment of radioactive waste liquid by using the supercritical water oxidation method.

The radioactive organic waste liquid is oxidized in the supercritical water, and thus it is converted into radioactive waste water. A volume of the radioactive waste water is 10 times a volume of the original organic waste liquid. After the organic waste liquid is oxidized in supercritical water, the volume increases rather than decreases, which may be unavailable for engineering application.

The inorganic salt contained in a reaction product is prone to crystal growth in a reactor, and then deposits, sticks, and blocks the pipeline.

Generally, the treatment process is to directly mix the oxidant and the waste in the reactor. The reaction will not occur until reaching a certain temperature and pressure, which results in a long reaction time of the waste in the supercritical water oxidation reactor and affects the treatment efficiency.

After the organic matter is converted into carbon dioxide, water and inorganic salts through the supercritical water oxidation reactor, the process of separating the carbon dioxide, water and inorganic salts is complicated and requires a lot of apparatuses. For example, it generally needs a cooling apparatus, a gas-liquid separation apparatus, a liquid cooling apparatus, a gas cooling apparatus, etc., which not only has a long processing flow and needs many apparatuses, but also has a high cost.

### SUMMARY

In order to solve the above and other problems in the related art, embodiments of the present disclosure provide a supercritical water oxidation system and a method of treating a waste liquid.

An aspect of the present disclosure provides a supercritical water oxidation system, including a supercritical water oxidation device, an oxidant supply device and an organic matter supply device. The supercritical water oxidation device includes a reactor and an outer self-separating barrel, and the reactor is arranged inside the outer self-separating barrel. The reactor includes a reactor housing provided with an oxidant feed port, an organic matter feed port and a discharge port. The outer self-separating barrel is provided with an evaporation tank, a condensation tank and a condensation tube, the evaporation tank is in communication with the discharge port, a back pressure valve is provided between the evaporation tank and the discharge port, the condensation tank is arranged above the evaporation tank, and the condensation tube is arranged above the condensation tank, so that a liquid obtained by liquefying a gas evaporated in the evaporation tank at the condensation tube falls back into the condensation tank. The oxidant supply device is in communication with the oxidant feed port. The organic matter supply device is in communication with the organic matter feed port.

According to the embodiments of the present disclosure, a cooling tube is provided in the evaporation tank.

According to the embodiments of the present disclosure, a slag discharge port is provided in the evaporation tank.

According to the embodiments of the present disclosure, a draining port is provided in the condensation tank.

According to the embodiments of the present disclosure, an exhaust port is provided on a top of the outer self-separating barrel.

According to the embodiments of the present disclosure, an inner cooling barrel is provided in the outer self-separating barrel, the condensation tube is arranged inside the inner cooling barrel, the condensation tank is formed at a bottom of the inner cooling barrel, and a plurality of holes are provided on a barrel wall of the inner cooling barrel.

According to the embodiments of the present disclosure, the evaporation tank is in communication with the reactor through an outlet pipe of the reactor, a sleeve is provided in the evaporation tank, the outlet pipe of the reactor is connected to the sleeve, and the sleeve is provided with a small aperture.

According to the embodiments of the present disclosure, the oxidant supply device includes an oxygen cylinder group, an oxygen pressurized pump, a high-pressure oxygen cylinder and a one-way valve.

According to the embodiments of the present disclosure, the organic matter supply device includes a first water container, a second water container, a peristaltic pump, a high-pressure pump, and a one-way valve, wherein the peristaltic pump is in communication with the second water container, and the high-pressure pump is in communication with the first water container and the peristaltic pump.

According to the embodiments of the present disclosure, the supercritical water oxidation system further includes a monitoring system including at least one of: temperature sensors provided on the reactor housing, in the evaporation tank and/or in the condensation tank; a pressure sensor provided in the reactor housing; an online pH monitor provided at the slag discharge port; an online volatile organic matter monitor provided at the exhaust port; and/or an online chemical oxygen demand monitor provided at the draining port.

According to the embodiments of the present disclosure, the supercritical water oxidation system further includes a control system configured to control, in response to a user input or in response to a monitoring result of the monitoring system, at least one of: a pressure and/or flow rate of an oxidant supply; a pressure and/or flow rate of an organic matter supply; a temperature of the reactor and/or the evaporation tank; and/or a state of the back pressure valve.

According to the embodiments of the present disclosure, the reactor further includes a stirrer including a rotating shaft penetrating the reactor housing.

According to the embodiments of the present disclosure, the rotating shaft passes through the discharge port.

According to the embodiments of the present disclosure, the stirrer is provided with an ammeter and/or a voltmeter.

According to the embodiments of the present disclosure, the reactor further includes a heating device configured to increase a temperature in the reactor housing.

According to the embodiments of the present disclosure, the heating device includes at least one set of heating jackets arranged outside the reactor housing.

According to the embodiments of the present disclosure, the reactor further includes a cooling device including at least one set of cooling jackets arranged outside the reactor housing. The reactor housing includes a first area close to the oxidant feed port and a second area close to the discharge port, the heating device is arranged outside the first area, and the cooling device is arranged outside the second area.

According to the embodiments of the present disclosure, the reactor housing includes a first end wall, a side wall, and a second end wall opposite to the first end wall, the oxidant feed port is arranged on the first end wall, the organic matter feed port is arranged on the side wall, and the discharge port is arranged on the second end wall.

According to the embodiments of the present disclosure, the reactor further includes a liner provided on the second end wall and extending toward the first end wall, wherein the discharge port is arranged inside the liner, and wherein a distance between the organic matter feed port and the first end wall is greater than a distance between the organic matter feed port and the second end wall.

According to the embodiments of the present disclosure, the liner is processed by aluminizing, shot peening, and spraying a thermal barrier coating including a plurality of aluminum layers and a plurality of aluminum oxide layers alternately arranged.

Another aspect of the present disclosure provides a method of treating organic wastewater by using the supercritical water oxidation system described above, including: heating the reactor; feeding a first solution into the reactor housing through the organic matter feed port and feeding an oxidant into the reactor housing through the oxidant feed port, in response to a temperature in the reactor housing reaching a first temperature, until the temperature in the reactor housing reaches a second temperature, wherein the second temperature is not less than 600 °C; opening the back pressure valve in response to a pressure in the reactor housing reaching a predetermined pressure; and feeding the organic wastewater into the reactor housing through the organic matter feed port, wherein the organic wastewater is oxidized in a supercritical water environment and discharged from the discharge port into the evaporation tank to separate a harmful substance through self-evaporation.

According to the embodiments of the present disclosure, the second temperature is within a range of 650 °C to 800 °C.

According to the embodiments of the present disclosure, the first solution contains a sucrose solution.

According to the embodiments of the present disclosure, the oxidant contains oxygen.

According to the embodiments of the present disclosure, the reactor further includes a stirrer provided with an ammeter used to detect a current of the stirrer and a voltmeter used to detect a voltage of the stirrer; the method further includes reducing a feed rate of at least one of the oxidant feed port and the organic matter feed port in response to the current of the stirrer and/or the voltage of the stirrer reaching a predetermined value.

According to the embodiments of the present disclosure, the reactor further includes a heating device and a cooling device, and the reactor housing includes a first area close to the oxidant feed port and a second area close to the discharge port; the method further includes: controlling the heating device and the cooling device to control a temperature of the first area within a predetermined range and to control a temperature of the second area so that a temperature of a discharge at the discharge port is not less than 120 °C.

According to the embodiments of the present disclosure, the temperature of the discharge at the discharge port is within a range of 150 °C to 300 °C.

According to the embodiments of the present disclosure, the supercritical water oxidation system further includes a monitoring system; the method further includes controlling, in response to a user input or in response to a monitoring result of the monitoring system, at least one of: a pressure and/or flow rate of an oxidant supply; a pressure and/or flow rate of an organic matter supply; a temperature of the reactor and/or a temperature of the evaporation tank; and/or a state of the back pressure valve.

Another aspect of the present disclosure provides a supercritical water oxidation device including a reactor, in which the reactor includes a reactor housing, a heating device and a stirrer. The reactor housing is provided with an oxidant feed port, an organic matter feed port and a discharge port. The heating device is configured to increase a temperature in the reactor housing. The stirrer includes a rotating shaft penetrating the reactor housing.

According to the embodiments of the present disclosure, the rotating shaft passes through the discharge port.

According to the embodiments of the present disclosure, the stirrer is provided with an ammeter and/or a voltmeter.

According to the embodiments of the present disclosure, the reactor further includes a cooling device including at least one set of cooling jackets arranged outside the reactor housing, wherein the heating device includes at least one set of heating jackets arranged outside the reactor housing, the reactor housing includes a first area close to the oxidant feed port and a second area close to the discharge port, the heating device is arranged outside the first area, and the cooling device is arranged outside the second area.

According to the embodiments of the present disclosure, the reactor housing includes a first end wall, a side wall, and a second end wall opposite to the first end wall; the oxidant feed port is arranged on the first end wall, the organic matter feed port is arranged on the side wall, and the discharge port is arranged on the second end wall.

According to the embodiments of the present disclosure, the reactor further includes a liner provided on the second end wall and extending toward the first end wall, wherein the discharge port is arranged inside the liner, and wherein a distance between the organic matter feed port and the first end wall is greater than a distance between the organic matter feed port and the second end wall.

According to the embodiments of the present disclosure, the liner is processed by aluminizing, shot peening, and spraying a thermal barrier coating including a plurality of aluminum layers and a plurality of aluminum oxide layers alternately arranged.

According to the embodiments of the present disclosure, the supercritical water oxidation device further includes an outer self-separating barrel provided with an evaporation tank, a condensation tank and a condensation tube, wherein the reactor is arranged inside the outer self-separating barrel.

According to the embodiments of the present disclosure, the evaporation tank is in communication with the discharge port, and a back pressure valve is provided between the evaporation tank and the discharge port.

According to the embodiments of the present disclosure, the condensation tank is arranged above the evaporation tank, and the condensation tube is arranged above the condensation tank, so that a liquid obtained by liquefying a gas evaporated in the evaporation tank at the condensation tube falls back into the condensation tank.

According to the embodiments of the present disclosure, a cooling tube is provided in the evaporation tank.

According to the embodiments of the present disclosure, a slag discharge port is provided in the evaporation tank.

According to the embodiments of the present disclosure, a draining port is provided in the condensation tank.

According to the embodiments of the present disclosure, an exhaust port is provided on a top of the outer self-separating barrel.

According to the embodiments of the present disclosure, an inner cooling barrel is provided in the outer self-separating barrel, the condensation tube is arranged inside the inner cooling barrel, the condensation tank is formed at a bottom of the inner cooling barrel, and a plurality of holes are provided on a barrel wall of the inner cooling barrel.

According to the embodiments of the present disclosure, the evaporation tank is in communication with the reactor through an outlet pipe of the reactor, a sleeve is provided in the evaporation tank, the outlet pipe of the reactor is connected to the sleeve, and the sleeve is provided with a small aperture.

According to the embodiments of the present disclosure, temperature sensors are provided in the evaporation tank, in the condensation tank, and on the reactor housing.

According to the embodiments of the present disclosure, a pressure sensor is provided in the reactor housing.

According to the embodiments of the present disclosure, an online pH monitor is provided at the slag discharge port.

According to the embodiments of the present disclosure, an online volatile organic matter monitor is provided at the exhaust port.

According to the embodiments of the present disclosure, an online chemical oxygen demand monitor is provided at the draining port.

Another aspect of the present disclosure provides a method of treating organic wastewater by using the supercritical water oxidation device described above, wherein a back pressure valve is provided at a discharge port of the reactor of the supercritical water oxidation device; the method includes: heating the reactor; starting the stirrer, feeding a first solution into the reactor housing through the organic matter feed port and feeding an oxidant into the reactor housing through the oxidant feed port in response to a temperature in the reactor housing reaching a first temperature, until the temperature in the reactor housing reaches a second temperature, wherein the second temperature is not less than 600 °C; opening the back pressure valve in response to a pressure in the reactor housing reaching a predetermined pressure; and feeding the organic wastewater into the reactor housing through the organic matter feed port, wherein the organic wastewater is oxidized in a supercritical water environment and discharged from the discharge port.

According to the embodiments of the present disclosure, the second temperature is within a range of 650 °C to 800 °C.

According to the embodiments of the present disclosure, the first solution contains a sucrose solution.

According to the embodiments of the present disclosure, the oxidant contains oxygen.

According to the embodiments of the present disclosure, the stirrer is provided with an ammeter used to detect a current of the stirrer and a voltmeter used to detect a voltage of the stirrer; the method further includes reducing a feed rate of at least one of the oxidant feed port and the organic matter feed port in response to the current of the stirrer and/or the voltage of the stirrer reaching a predetermined value.

According to the embodiments of the present disclosure, the supercritical water oxidation reactor further includes a cooling device, and the reactor housing includes a first area close to the oxidant feed port and a second area close to the discharge port; the method further includes controlling the heating device and the cooling device to control a temperature of the first area within a predetermined range and to control a temperature of the second area so that a temperature of a discharge at the discharge port is not less than 120 °C.

According to the embodiments of the present disclosure, the temperature of the discharge at the discharge port is within a range of 150 °C to 300 °C.

According to the embodiments of the present disclosure, the supercritical water oxidation device further includes an outer self-separating barrel provided with an evaporation tank, a condensation tank and a condensation tube, the reactor is arranged inside the outer self-separating barrel; wherein the evaporation tank is in communication with the discharge port, a back pressure valve is provided between the evaporation tank and the discharge port, the condensation tank is arranged above the evaporation tank, and the condensation tube is arranged above the condensation tank, so that a liquid obtained by liquefying a gas evaporated in the evaporation tank at the condensation tube falls back into the condensation tank; wherein the supercritical water oxidation device further includes a monitoring system; and wherein the method further includes controlling, in response to a user input or in response to a monitoring result of the monitoring system, at least one of: a pressure and/or flow rate of an oxidant supply; a pressure and/or flow rate of an organic matter supply; a temperature of the reactor and/or the evaporation tank; and/or a state of the back pressure valve.

Another aspect of the present disclosure provides a supercritical water oxidation system, including a reactor, a separator, an oxidant supply device and an organic matter supply device. The reactor includes a reactor housing provided with an oxidant feed port, an organic matter feed port and a discharge port. The separator includes an evaporation tank, a condensation tank and a condensation tube, the condensation tank is arranged above the evaporation tank, and the condensation tube is arranged above the condensation tank, so that a liquid obtained by liquefying a gas evaporated in the evaporation tank at the condensation tube falls back into the condensation tank. The evaporation tank is in communication with the discharge port, and a back pressure valve is provided between the evaporation tank and the discharge port. The oxidant supply device is in communication with the oxidant feed port. The organic matter supply device is in communication with the organic matter feed port.

According to the embodiments of the present disclosure, the supercritical water oxidation system further includes a water supply device in communication with the oxidant feed port.

According to the embodiments of the present disclosure, the supercritical water oxidation system further includes a water chiller configured to supply water to the condensation tube.

According to the embodiments of the present disclosure, the supercritical water oxidation system further includes a protective device including a reactor protective jacket.

According to the embodiments of the present disclosure, a cooling tube is provided in the evaporation tank.

According to the embodiments of the present disclosure, a slag discharge port is provided in the evaporation tank.

According to the embodiments of the present disclosure, a draining port is provided in the condensation tank.

According to the embodiments of the present disclosure, an exhaust port is provided on a top of the separator.

According to the embodiments of the present disclosure, the supercritical water oxidation system further includes a gas filter device in communication with the exhaust port.

According to the embodiments of the present disclosure, an inner cooling barrel is provided in the separator, the condensation tube is arranged inside the inner cooling barrel, the condensation tank is formed at a bottom of the inner cooling barrel, and a plurality of holes are provided on a barrel wall of the inner cooling barrel.

According to the embodiments of the present disclosure, the evaporation tank is in communication with the reactor through an outlet pipe of the reactor, a sleeve is provided in the evaporation tank, the outlet pipe of the reactor is connected to the sleeve, and the sleeve is provided with a small aperture.

According to the embodiments of the present disclosure, the oxidant supply device includes a liquid oxygen dewar, a liquid oxygen pump, a one-way valve, a liquid oxygen water bath vaporizer and a high-pressure oxygen cylinder group.

According to the embodiments of the present disclosure, the organic matter supply device includes a liquid tank, a high-pressure pump and a one-way valve.

According to the embodiments of the present disclosure, the water supply device includes a first water container, a second water container, a peristaltic pump, a high-pressure pump, and a one-way valve, wherein the high-pressure pump is in communication with the first water container and the peristaltic pump, and the peristaltic pump is in communication with the second water container.

According to the embodiments of the present disclosure, the supercritical water oxidation system further includes a monitoring system including at least one of: temperature sensors provided on the reactor housing, in the evaporation tank and in the condensation tank; a pressure sensor provided in the reactor housing; an online pH monitor provided at the slag discharge port; an online volatile organic matter monitor provided at the exhaust port; and/or an online chemical oxygen demand monitor provided at the draining port.

According to the embodiments of the present disclosure, the supercritical water oxidation system further includes a control system configured to control, in response to a user input or in response to a monitoring result of the monitoring system, at least one of: a pressure and/or flow rate of an oxide supply; a pressure and/or flow rate of an organic matter supply; a temperature of the reactor and/or a temperature of the evaporation tank; and/or a state of the back pressure valve.

According to the embodiments of the present disclosure, the reactor further includes a turn-back tube provided inside the reactor housing, the turn-back tube includes an inner tube with both ends open and an outer tube with one end open, the outer tube is sleeved outside the inner tube, the inner tube is in communication with the organic matter feed port, and the turn-back tube is arranged at a central axis of the reactor.

According to the embodiments of the present disclosure, the reactor further includes a stirrer includes a rotating shaft penetrating through the reactor housing.

According to the embodiments of the present disclosure, the rotating shaft passes through the discharge port.

According to the embodiments of the present disclosure, the stirrer is provided with an ammeter and/or a voltmeter.

According to the embodiments of the present disclosure, the reactor further includes a heating device including at least one set of heating jackets arranged outside the reactor housing.

According to the embodiments of the present disclosure, the reactor further includes a cooling device including at least one set of cooling jackets arranged outside the reactor housing.

According to the embodiments of the present disclosure, the reactor housing includes a first area close to the organic matter feed port and a second area close to the discharge port, the heating device is arranged outside the first area, and the cooling device is arranged outside the second area.

According to the embodiments of the present disclosure, the reactor housing includes a first end wall, a side wall, and a second end wall opposite to the first end wall, the organic matter feed port is arranged on the first end wall, the oxidant feed port is arranged on the side wall, and the discharge port is arranged on the second end wall.

According to the embodiments of the present disclosure, the reactor further includes a liner provided on the second end wall and extending toward the first end wall, wherein the turn-back tube is arranged at least partially inside the liner, and the discharge port is arranged inside the liner, and wherein a distance between the oxidant feed port and the first end wall is greater than a distance between the oxidant feed port and the second end wall.

According to the embodiments of the present disclosure, the liner is processed by aluminizing, shot peening and spraying a thermal barrier coating including a plurality of aluminum layers and a plurality of aluminum oxide layers alternately arranged.

According to the embodiments of the present disclosure, the reactor further includes a wire mesh arranged between the liner and the side wall.

Another aspect of the present disclosure provides a method of treating waste liquid by using the supercritical water oxidation system described above, including: heating the reactor; feeding a first solution, an oxidant and water into the reactor housing through the oxidant feed port in response to a temperature in the reactor housing reaching a first temperature, until the temperature in the reactor housing reaches a second temperature, wherein the second temperature is not less than 600 °C; opening the back pressure valve in response to a pressure in the reactor housing reaching a predetermined pressure; and feeding the waste liquid into the reactor housing through the organic matter feed port, wherein the waste liquid is oxidized in a supercritical water environment and discharged from the discharge port into the evaporation tank of the separator to separate a harmful substance through self-evaporation.

According to the embodiments of the present disclosure, the second temperature is within a range of 650 °C to 800 °C.

According to the embodiments of the present disclosure, the first solution contains a sucrose solution.

According to the embodiments of the present disclosure, and the oxidant contains liquid oxygen.

According to the embodiments of the present disclosure, the reactor further includes a stirrer provided with an ammeter used to detect a current of the stirrer and a voltmeter used to detect a voltage of the stirrer; the method further includes reducing a feed rate of at least one of the oxidant feed port and the organic matter feed port in response to the current of the stirrer and/or the voltage of the stirrer reaching a predetermined value.

According to the embodiments of the present disclosure, the reactor further includes a heating device and a cooling device, and the reactor housing includes a first area close to the oxidant feed port and a second area close to the discharge port; the method further includes controlling the heating device and the cooling device to control a temperature of the first area within a predetermined range and to control a temperature of the second area so that a temperature of a discharge at the discharge port is not less than 120 °C.

According to the embodiments of the present disclosure, the temperature of the discharge at the discharge port is within a range of 150 °C to 300 °C.

According to the embodiments of the present disclosure, the supercritical water oxidation system further includes a monitoring system; the method further includes controlling, in response to a user input or in response to a monitoring result of the monitoring system, at least one of: a pressure and/or flow rate of an oxide supply; a pressure and/or flow rate of an organic matter supply; a temperature of the reactor and/or a temperature of the evaporation tank; and/or a state of the back pressure valve.

Another aspect of the present disclosure provides a reactor for supercritical water oxidation, including: a reactor housing provided with an oxidant feed port, an organic matter feed port and a discharge port; a heating device configured to increase a temperature in the reactor housing; and a turn-back tube provided inside the reactor housing, wherein the turn-back tube includes an inner tube with both ends open and an outer tube with one end open, the outer tube is sleeved outside the inner tube, and the inner tube is in communication with the organic matter feed port.

According to the embodiments of the present disclosure, the reactor further includes a stirrer including a rotating shaft penetrating through the reactor housing.

According to the embodiments of the present disclosure, the rotating shaft passes through the discharge port.

According to the embodiments of the present disclosure, the stirrer is provided with an ammeter and/or a voltmeter.

According to the embodiments of the present disclosure, the reactor further includes at least one temperature sensor configured to obtain a temperature of at least one position of the reactor.

According to the embodiments of the present disclosure, the reactor further includes at least one pressure sensor configured to obtain a pressure of at least one position of the reactor.

According to the embodiments of the present disclosure, the reactor housing includes a first end wall, a side wall, and a second end wall opposite to the first end wall, the organic matter feed port is arranged on the first end wall, the oxidant feed port is arranged on the side wall, and the discharge port is arranged on the second end wall.

According to the embodiments of the present disclosure, the reactor further includes a liner provided on the second end wall and extending toward the first end wall, wherein the turn-back tube is arranged at least partially inside the liner, and the discharge port is arranged inside the liner, and wherein a distance between the oxidant feed port and the first end wall is greater than a distance between the oxidant feed port and the second end wall.

According to the embodiments of the present disclosure, the liner is processed by aluminizing, shot peening and spraying a thermal barrier coating including a plurality of aluminum layers and a plurality of aluminum oxide layers alternately arranged.

According to the embodiments of the present disclosure, the reactor further includes a wire mesh arranged between the liner and the side wall.

According to the embodiments of the present disclosure, the turn-back tube is arranged at a central axis of the reactor.

According to the embodiments of the present disclosure, the reactor further includes a cooling device.

According to the embodiments of the present disclosure, the cooling device includes at least one set of cooling jackets arranged outside the reactor housing, and the heating device includes at least one set of heating jackets arranged outside the reactor housing.

According to the embodiments of the present disclosure, the reactor housing includes a first area close to the organic matter feed port and a second area close to the discharge port, the heating device is arranged outside the first area, and the cooling device is arranged outside the second area.

Another aspect of the present disclosure provides a method of treating waste liquid by using the reactor described above, wherein a back pressure valve is provided at a discharge port of the reactor. The method includes: heating the reactor; feeding a first solution into the reactor housing through the organic matter feed port and feeding an oxidant and water into the reactor housing through the oxidant feed port in response to a temperature in the reactor housing reaching a first temperature, until the temperature in the reactor housing reaches a second temperature; opening the back pressure valve in response to a pressure in the reactor housing reaching a predetermined pressure; and feeding the waste liquid into the reactor housing through the organic matter feed port, wherein the waste liquid reaches an opening of the outer tube of the turn-back tube after passing through the inner tube of the turn-back tube and the outer tube of the turn-back tube sequentially, and is oxidized in a supercritical water environment and discharged from the discharge port.

According to the embodiments of the present disclosure, the second temperature is not less than 600 °C.

According to the embodiments of the present disclosure, the second temperature is within a range of 650 °C to 800 °C.

According to the embodiments of the present disclosure, the first solution contains a sucrose solution.

According to the embodiments of the present disclosure, the oxidant contains liquid oxygen.

According to the embodiments of the present disclosure, the reactor further includes a stirrer provided with an ammeter used to detect a current of the stirrer and a voltmeter used to detect a voltage of the stirrer. The method further includes reducing a feed rate of at least one of the oxidant feed port and the organic matter feed port in response to the current of the stirrer and/or the voltage of the stirrer reaching a predetermined value.

According to the embodiments of the present disclosure, the reactor further includes a cooling device, and the reactor housing includes a first area close to the organic matter feed port and a second area close to the discharge port. The method further includes controlling the heating device and the cooling device to control a temperature of the first area within a predetermined range and to control a temperature of the second area so that a temperature of a discharge at the discharge port is not less than 120 °C, wherein the temperature of the discharge at the discharge port is within a range of 150 °C to 300 °C.

Another aspect of the present disclosure provides a separation apparatus of separating a multi-phase mixture, including: an evaporation tank configured to receive the multi-phase mixture described above, wherein the evaporation tank is provided with: a first cooling coil configured to stabilize a temperature of a solution in the evaporation tank within a target temperature range when the multi-phase mixture flows into the evaporation tank, and a slag discharge port configured to discharge a solid substance in the multi-phase mixture; and an inner cooling barrel including a second cooling coil configured to cool a steam evaporated in the evaporation tank and a condensation water tank configured to receive a liquid substance obtained after the second cooling coil cools the steam, wherein the condensation water tank is provided with a liquid drain for discharging the liquid substance; wherein the evaporation tank and the inner cooling barrel are enclosed in a housing, and the evaporation tank is arranged under the inner cooling barrel.

According to the embodiments of the present disclosure, a plurality of holes are provided on a barrel wall of the inner cooling barrel to allow the steam evaporated in the evaporation tank to enter the inner cooling barrel.

According to the embodiments of the present disclosure, a sleeve for receiving the multi-phase mixture is provided in the evaporation tank, a plurality of small apertures are distributed on a tube wall of the sleeve, and the multi-phase mixture is dispersedly discharged into the evaporation tank through the plurality of small apertures.

According to the embodiments of the present disclosure, the separation apparatus of separating a multi-phase mixture further includes a back pressure valve, wherein one end of the back pressure valve is connected to the sleeve through a pipe, and another end of the back pressure valve is connected to a discharge port of a supercritical water oxidation reactor through a pipe.

According to the embodiments of the present disclosure, a top of the housing is provided with an exhaust port for discharging a gaseous substance in the multi-phase mixture.

According to the embodiments of the present disclosure, an online volatile organic matter monitor is provided at the exhaust port.

According to the embodiments of the present disclosure, the evaporation tank and/or the inner cooling barrel are/is provided with a thermometer for monitoring a temperature of a solution in the evaporation tank and/or a temperature in the inner cooling barrel.

According to the embodiments of the present disclosure, a volume of the evaporation tank is 2 to 3 times a processing flow rate of the multi-phase mixture.

According to the embodiments of the present disclosure, the evaporation tank is provided with a level gauge, and/or the evaporation tank is provided with a pH meter for monitoring a pH value of a solution in the evaporation tank.

According to the embodiments of the present disclosure, the separation apparatus is provided with an online chemical oxygen demand monitor.

The supercritical water oxidation system and method of the present disclosure may achieve maximum reduction of volume rather than transforming into more radioactive organic wastewater, and achieves the self-evaporation by the temperature after the reaction, which improves system efficiency, saves device volume and energy, and is suitable for industry application.

The supercritical water oxidation system and method of the present disclosure may effectively prevent the inorganic salt in the product from crystal growth and further depositing, sticking and blocking the pipeline in the reactor through the disturbance of the stirrer, which improves a service life of the device.

Another aspect of the present disclosure provides a supercritical water oxidation system, including: a supercritical water oxidation device including a reactor and an outer self-separating barrel, wherein the reactor is arranged inside the outer self-separating barrel, the reactor includes a reactor housing provided with an oxidant feed port, an organic matter feed port and a discharge port; and wherein the outer self-separating barrel is provided with an evaporation tank, a condensation tank and a condensation tube, the evaporation tank is in communication with the discharge port, a back pressure valve is provided between the evaporation tank and the discharge port, the condensation tank is arranged above the evaporation tank, and the condensation tube is arranged above the condensation tank, so that in a case that gas evaporated in the evaporation tank is liquefied at the condensation tube, liquid obtained by liquefaction falls back into the condensation tank; an oxidant supply device in communication with the oxidant feed port; and an organic matter supply device in communication with the organic matter feed port; wherein the supercritical water oxidation system is an integrated system.

In the related art, the treatment process of the supercritical water oxidation reactor is generally to mix the oxidant and the waste directly in the reactor, and the reaction will not occur until a certain temperature and pressure of the oxidant and the waste are reached. However, due to a large molecular weight of the organic matter in the organic waste liquid and a stable spatial structure of molecules, it is difficult to oxidize the organic matter in a short time. In addition, the waste material fed from the outside may also reduce the temperature of the reaction zone, resulting in a long reaction time of the waste material in the supercritical water oxidation reactor and reducing the reaction efficiency. According to the embodiments of the present disclosure, the turn-back tube is provided in the reactor housing. When the temperature in the reactor housing reaches a certain temperature, the organic matter may be fully preheated, heated up, and even pyrolyzed during the flow of the organic matter in the turn-back tube, thereby improving the reaction efficiency.

In the related art, after the organic matter is converted into carbon dioxide, water and inorganic salts through the supercritical water oxidation reactor, a separation of the carbon dioxide, water and inorganic salts needs the processing by multiple apparatuses such as a cooling apparatus, a gas-liquid separation apparatus, a liquid cooling apparatus, and a gas cooling apparatus. This processing method needs a long processing flow and many apparatuses, and also has a high cost. Through the embodiments of the present disclosure, a separation apparatus is provided to process the multi-phase mixture, so that the solid substance in the multi-phase mixture is evaporated and concentrated at the bottom of the evaporation tank, for example, separated in the form of inorganic salt slags, that the liquid substance in the multi-phase mixture is evaporated in the evaporation tank, cooled by the inner cooling barrel and discharged from the draining port of the condensation water tank, and that the gaseous substance in the multi-phase mixture may be directly discharged from the top of the separation apparatus. Through the separation apparatus of the present disclosure, the separation of the multi-phase mixture may be realized at the same time, the processing flow is short, the one-time investment of the apparatus and the apparatus operating cost are effectively reduced, and the maximum reduction of volume of the multi-phase mixture is realized.

The supercritical water oxidation system of the present disclosure may integrate multiple devices together to form an integrated system, which makes the system compact and convenient to use.

### BRIEF DESCRIPTION OF THE DRAWINGS

For a more complete understanding of the present disclosure and its advantages, reference will now be made to the following description in conjunction with the accompanying drawings, in which:
FIG. 1 schematically shows a schematic diagram of a supercritical water oxidation system according to the embodiments of the present disclosure;
FIG. 2 schematically shows a schematic diagram of a supercritical water oxidation system according to the embodiments of the present disclosure;
FIG. 3 schematically shows a schematic diagram of a reactor according to the embodiments of the present disclosure;
FIG. 4 schematically shows a schematic diagram of a sleeve according to the embodiments of the present disclosure;
FIG. 5 schematically shows a schematic diagram of an inner cooling barrel according to the embodiments of the present disclosure;
FIG. 6 schematically shows a flowchart of a method of treating organic wastewater according to the embodiments of the present disclosure;
FIG. 7 schematically shows a schematic diagram of a supercritical water oxidation device according to the embodiments of the present disclosure;
FIG. 8 schematically shows a schematic diagram of a supercritical water oxidation device according to the embodiments of the present disclosure;
FIG. 9 schematically shows a schematic diagram of a supercritical water oxidation device according to the embodiments of the present disclosure;
FIG. 10 schematically shows a schematic diagram of a sleeve according to the embodiments of the present disclosure;
FIG. 11 schematically shows a schematic diagram of an inner cooling barrel according to the embodiments of the present disclosure;
FIG. 12 schematically shows a flowchart of a method of treating organic wastewater according to the embodiments of the present disclosure;
FIG. 13A schematically shows a schematic diagram of a supercritical water oxidation system according to the embodiments of the present disclosure;
FIG. 13B schematically shows a schematic diagram of a separator according to the embodiments of the present disclosure;
FIG. 14 schematically shows a schematic structural diagram of a reactor according to the embodiments of the present disclosure;
FIG. 15 schematically shows a schematic diagram of a supercritical water oxidation system according to the embodiments of the present disclosure;
FIG. 16 schematically shows a schematic diagram of a sleeve according to the embodiments of the present disclosure;
FIG. 17 schematically shows a schematic diagram of an inner cooling barrel according to the embodiments of the present disclosure;
FIG. 18 schematically shows a flowchart of a method of treating a waste liquid according to the embodiments of the present disclosure;
FIG. 19 schematically shows a schematic diagram of a reactor for supercritical water oxidation according to the embodiments of the present disclosure;
FIG. 20 schematically shows a schematic diagram of a reactor for supercritical water oxidation according to the embodiments of the present disclosure;
FIG. 21 schematically shows a schematic diagram of a cooling device according to the embodiments of the present disclosure;
FIG. 22 schematically shows a flowchart of a method of treating a waste liquid according to the embodiments of the present disclosure;
FIG. 23 schematically shows a schematic diagram of a separation apparatus for separating a multi-phase mixture according to the embodiments of the present disclosure;
FIG. 24 schematically shows a schematic diagram of an inner cooling barrel according to the embodiments of the present disclosure;
FIG. 25 schematically shows a schematic diagram of a sleeve according to the embodiments of the present disclosure; and
FIG. 26 schematically shows a schematic diagram of a separation apparatus for separating a multi-phase mixture according to the embodiments of the present disclosure.

### DETAILED DESCRIPTION OF EMBODIMENTS

The embodiments of the present disclosure will be described below with reference to the accompanying drawings. It should be understood, however, that these descriptions are merely exemplary and are not intended to limit the scope of the present disclosure. In the following detailed description, for ease of interpretation, many specific details are set forth to provide a comprehensive understanding of the embodiments of the present disclosure. However, it is clear that one or more embodiments may also be implemented without these specific details. In addition, in the following description, descriptions of well-known structures and technologies are omitted to avoid unnecessarily obscuring the concepts of the present disclosure.

The terms used herein are for the purpose of describing specific embodiments only and are not intended to limit the present disclosure. The terms "comprising", "including", etc. used herein indicate the presence of the feature, step, operation and/or component, but do not exclude the presence or addition of one or more other features, steps, operations or parts.

All terms used herein (including technical and scientific terms) have the meanings generally understood by those skilled in the art, unless otherwise defined. It should be noted that the terms used herein shall be interpreted to have meanings consistent with the context of this specification, and shall not be interpreted in an idealized or too rigid way.

In a case of using the expression similar to "at least one of A, B and C", it should be explained according to the meaning of the expression generally understood by those skilled in the art (for example, "a system having at least one of A, B and C" should include but not be limited to a system having only A, a system having only B, a system having only C, a system having A and B, a system having A and C, a system having B and C, and/or a system having A, B and C). In a case of using the expression similar to "at least one of A, B and C", it should be explained according to the meaning of the expression generally understood by those skilled in the art (for example, "a system having at least one of A, B and C" should include but not be limited to a system having only A, a system having only B, a system having only C, a system having A and B, a system having A and C, a system having B and C, and/or a system having A, B and C).

According to the embodiments of the present disclosure, in order to reduce a volume and a harmfulness of radioactive waste liquids from nuclear power plants and other nuclear facilities, the present disclosure provides a supercritical water oxidation system and method, which may convert organic wastewater into inorganic matter through supercritical water oxidation, achieve self-evaporation by using reaction residual heat, and recover radioactive metal elements in organic matter, therefore achieving a purpose of minimizing waste. In practical applications, the supercritical water oxidation system and method of the embodiments of the present disclosure have a treating capacity of 1 to 10 kg/h and a volume reduction ratio of 30-100 times in the treatment of the radioactive organic waste liquid, an effluent is reusable distilled water, and a purified gas may be directly discharged.

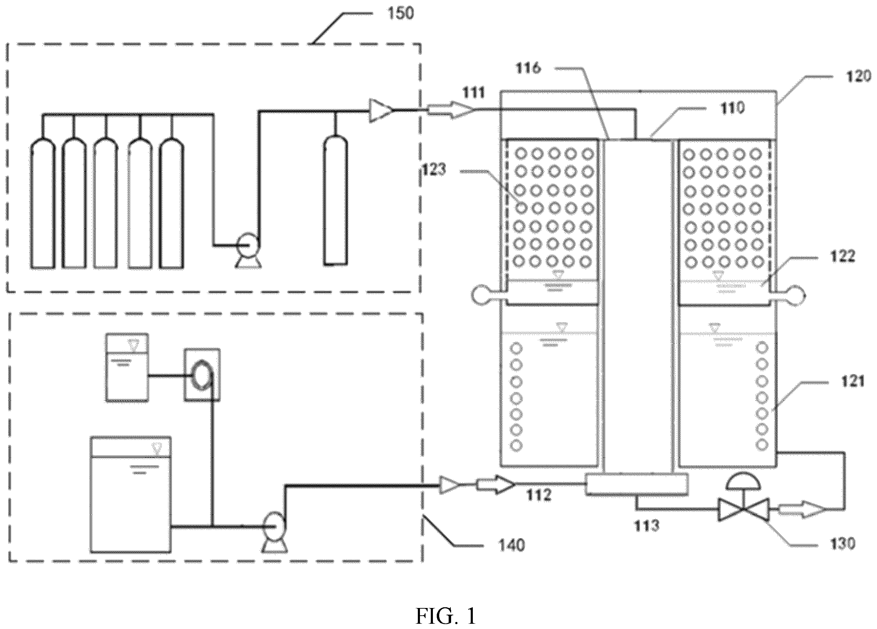

FIG. 1 schematically shows a schematic diagram of a supercritical water oxidation system according to the embodiments of the present disclosure.

As shown in FIG. 1, the supercritical water oxidation system includes a supercritical water oxidation device, an oxidant supply device 150, and an organic matter supply device 140. The supercritical water oxidation device includes a reactor 110 and an outer self-separating barrel 120. The reactor 110 is arranged inside the outer self-separating barrel 120. The reactor 110 includes a reactor housing provided with an oxidant feed port 111, an organic matter feed port 112 and a discharge port 113. The outer self-separating barrel 120 is provided with an evaporation tank 121, a condensation tank 122 and a condensation tube 123. The evaporation tank 121 is in communication with the discharge port 113. Aback pressure valve 130 is provided between the evaporation tank 121 and the discharge port 113. The condensation tank 122 is arranged above the evaporation tank 121, and the condensation tube 123 is arranged above the condensation tank 122, so that in a case that a gas evaporated in the evaporation tank 121 is liquefied in the condensation tube 123, a liquid obtained by liquefaction may fall back into the condensation tank 122. The oxidant supply device 150 is in communication with the oxidant feed port 111. The organic matter supply device 140 is in communication with the organic matter feed port 112.

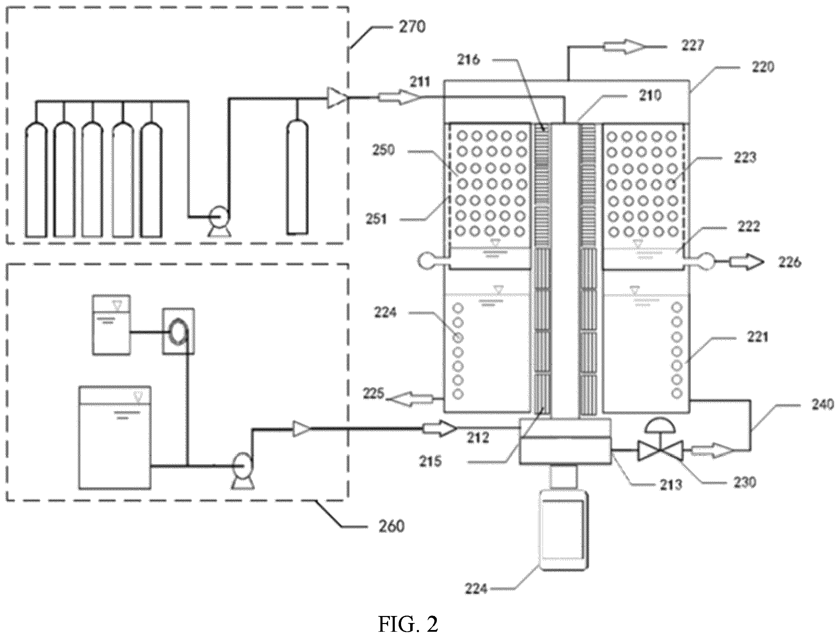

The supercritical water oxidation system will be further exemplified below in conjunction with FIG. 2 to FIG. 5.

FIG. 2 schematically shows a schematic diagram of a supercritical water oxidation system according to the embodiments of the present disclosure.

According to the embodiments of the present disclosure, the oxidant may be, for example, liquid oxygen, oxygen, hydrogen peroxide, and the like. The oxygen is used as the oxidant in the embodiments of the present disclosure. According to the embodiments of the present disclosure, the oxidant supply device 270 for supplying oxygen may include, for example, an oxygen cylinder group, an oxygen pressurized pump, a high-pressure oxygen cylinder, and a one-way valve.

According to the embodiments of the present disclosure, the organic matter supply device 260 may include, for example, a first water container, a second water container, a peristaltic pump, a high-pressure pump, and a one-way valve. The high-pressure pump is in communication with the first water container and the peristaltic pump, respectively; and the peristaltic pump is in communication with the second water container. The first water container may be used to store organic wastewater, and the second water container may be used to store a sucrose solution.

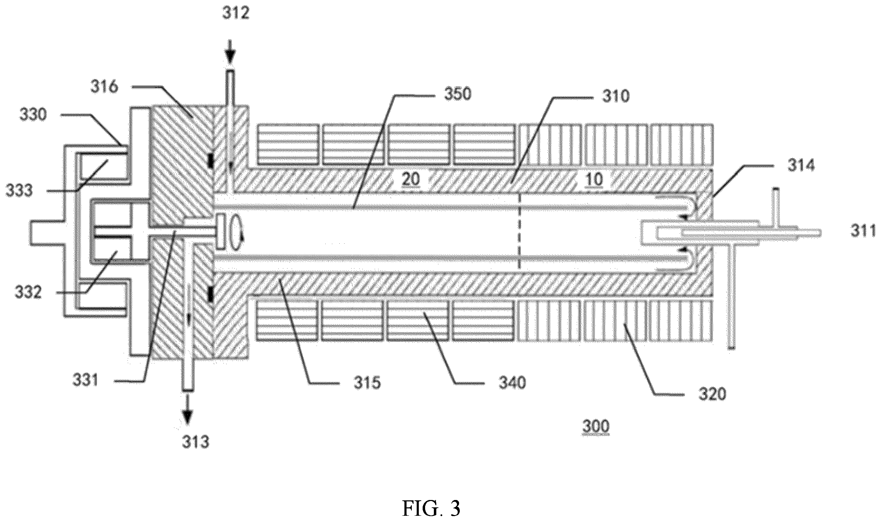

According to the embodiments of the present disclosure, an evaporation tank 221, a condensation tank 222 and a condensation tube 223 are arranged inside an outer self-separating barrel 220, and the reactor 210 is arranged inside the outer self-separating barrel 220. The reactor 210 includes an oxidant feed port 211, an organic matter feed port 212, a discharge port 213, a stirring device 224, a heating device 216, and a cooling device 215. Reference may be made to the embodiment described in FIG. 3, which will not be described in detail here. The supercritical water oxidation device is an integrated device provided with a small number of apparatuses, which has concentrated functions and high treating capacity. As the reactor 210 is a high-temperature and high-pressure apparatus, the outer self-separating barrel 220 arranged outside the reactor 210 may also protect the outside world.

According to the embodiments of the present disclosure, the evaporation tank 221 is in communication with the discharge port 213, and a back pressure valve 230 is provided between the evaporation tank 221 and the discharge port 213.

According to the embodiments of the present disclosure, the condensation tank 222 is arranged above the evaporation tank 221, and the condensation tube 223 is arranged above the condensation tank 222, so that in a case that a gas evaporated in the evaporation tank 221 is liquefied in the condensation tube 223, the liquid obtained by the liquefaction may fall back into the condensation tank 222.

According to the embodiments of the present disclosure, a pressure gradually returns to an atmospheric pressure after passing through the back pressure valve 230, and an effluent also returns from a supercritical state to a gas/liquid/solid state. The effluent from the reactor 210 is a high-temperature and high-pressure fluid, for example, the effluent has a temperature of 150~300 °C and a pressure of 25 MPa. In order to enable the high-temperature and high-pressure fluid to evaporate smoothly, a cooling tube 224 may be provided in the evaporation tank 221, so as to make the effluent always in a boiling state. That is, the cooling tube 224 stabilizes a temperature of the liquid in the evaporation tank 221 within a target temperature range, for example, about 100 °C, so that the liquid may boil stably in the evaporation tank 221.

According to the embodiments of the present disclosure, a slag discharge port 225 may be further provided in the evaporation tank 221 for discharging non-volatile salts residue in the evaporation tank 221. An online pH monitor may be provided at the slag discharge port 225. In normal working conditions, due to a production of carbon dioxide, a pH value of the discharge at the slag discharge port is about 2. If there is a significant increase, a feed flow rate of the organic matter supply device may be reduced, or a temperature or pressure of the reactor 210 may be increased.

According to the embodiments of the present disclosure, a draining port 226 is provided in the condensation tank 222 for draining water in the condensation tank 222. The draining device may include a plurality of radiant pipes and a ring pipe to improve drainage efficiency. The discharged water is distilled water, and a concentration of harmful substances is less than one in a hundred thousand. An online chemical oxygen demand (COD) monitor may be provided at the draining port 226 to monitor a water quality. If the COD content increases, the feed flow rate of the organic matter supply device may be reduced or the temperature or pressure of the reactor 210 may be increased to make the reaction more sufficient.

According to the embodiments of the present disclosure, an exhaust port 227 for exhausting purified gases such as carbon dioxide is provided at the top of the outer self-separating barrel 220. A gas filter device including, for example, an activated carbon filter column and a high efficiency filter, may be provided at the exhaust port 227 to ensure that the exhausted gases meet emission standards. According to the embodiments of the present disclosure, an online volatile organic matter (VOC) monitor may be further provided at the exhaust port 227 to monitor gases. If the VOC content increases, the feed flow rate of the organic matter supply device may be reduced or the temperature or pressure of the reactor 210 may be increased to make the reaction more sufficient.

According to the embodiments of the present disclosure, the supercritical water oxidation device further includes a water chiller for supplying water to the condensation tube 223, and may also supply water to the cooling device 215 in the reactor 210.

In the related art, after the organic matter is converted into carbon dioxide, water and inorganic salts through the supercritical water oxidation reactor, it generally needs to be treated by multiple apparatuses such as a cooling apparatus, a gas-liquid separation apparatus, a liquid cooling apparatus, and a gas cooling apparatus to separate the carbon dioxide, water and inorganic salts. The treatment manner needs a long treating flow and many devices, and also has a high cost. Through the embodiments of the present disclosure, an effluent at high temperature (120-300 °C) is treated by the outer self-separating barrel, so that the salt residue is evaporated and concentrated at the bottom of the evaporation tank, the water is evaporated in the evaporation tank, cooled by the condensation tube and then discharged from the draining port of the condensation tank, and clean gases may be discharged directly from the top of the separation apparatus. The separation apparatus of the present disclosure may realize the separation of the mixture at the same time, which not only has a short processing flow, but also effectively reduces a one-time investment and operating costs of apparatuses, and realizes the maximum reduction in the volume of radioactive waste. Taking radioactive cesium and strontium as examples, after the radioactive cesium is evaporated in the evaporation tank, a decontamination factor may reach 10⁵, and the cesium concentration in the water vapor is less than one in a hundred thousand of the cesium concentration in the water of the evaporation tank, and a decontamination factor of strontium by evaporation may reach 10⁹. Therefore, the steam may be deeply purified.

According to the embodiments of the present disclosure, the supercritical water oxidation system further includes a monitoring system, which includes at least one of: temperature sensors provided on the reactor housing, in the evaporation tank and in the condensation tank; a pressure sensor provided in the reactor housing; an online pH monitor provided at the slag discharge port; an online volatile organic matter monitor provided at the exhaust port; and/or an online chemical oxygen demand monitor provided at the draining port. The supercritical water oxidation system further includes a control system for controlling, in response to a user input or in response to a monitoring result of the monitoring system, at least one of: a pressure and/or flow rate of the oxidant supply; a pressure and/or flow rate of an organic matter supply; a temperature of the reactor and/or the evaporation tank; and/or a state of the back pressure valve 230.

FIG. 3 schematically shows a schematic diagram of a reactor 300 according to the embodiments of the present disclosure.

As shown in FIG. 3, the reactor 300 includes a reactor housing 310 provided with an oxidant feed port 311, an organic matter feed port 312 and a discharge port 313.

The embodiments of the present disclosure do not limit a shape, material, and dimension of the reactor housing 310. For example, the reactor housing 310 may be cylindrical, the material may be INCONEL625, an inner diameter of the reactor housing 310 may be 80~219 mm, such as 168 mm, a thickness may be about 25 mm, and a length may be 1000~6000 mm, such as 3000 mm.

According to the embodiments of the present disclosure, the reactor 300 may further include a stirrer 330. The stirrer 330 includes a rotating shaft 331 that penetrates the reactor housing 310. The reactor 300 may be installed obliquely, with a slope of 10%, and the discharge port 313 is located at the bottom end. The stirrer 330 is used to stir the materials in the reactor 300. Generally, the supercritical water reaction product includes ultrafine particles, and there is no condition for crystal growth. As long as there is disturbance, the particles may not deposit or stick, which effectively prevents ultrafine inorganic salts from forming crystals and blocking the discharge port 313. For example, the stirrer 330 may include an inner magnetic rotor 332 and an outer magnetic rotor 333. When energized, the inner magnetic rotor 332 is driven by the outer magnetic rotor 333, and the rotating shaft 331 and a stir bar may be driven by the inner magnetic rotor 332 to rotate. The stirrer 330 may, for example, maintain a rotation speed of 800 rpm for stirring, so that particles of the supercritical water reaction product remain suspended without depositing.

According to the embodiments of the present disclosure, the rotating shaft 331 passes through the discharge port 313. As shown in FIG. 3, the discharge port 313 is L-shaped, and the rotating shaft 331 penetrates the reactor housing 310 and partially passes through the discharge port 313 to extend into the reactor housing 310. The rotating shaft 331 stirs near the discharge port 313 to prevent the discharge port 313 from being blocked.

According to the embodiments of the present disclosure, the stirrer 330 is provided with an ammeter and/or a voltmeter for monitoring a current and voltage of the stirrer. When the current and voltage of the stirrer 330 increase and reach a predetermined value, a pressure inside the reactor 300 is high, and it is necessary to reduce a feed flow of the two feed ports 311 and 312, or even suspend the feed.

According to the embodiments of the present disclosure, the reactor 300 further includes a heating device 32 for increasing a temperature of the reactor housing 310 and thereby heating a chamber formed in the reactor housing 310. The type of the heating device 320 is not limited in the embodiments of the present disclosure. For example, the heating device 320 may be one or more sets of heating jackets. In the embodiments of the present disclosure, the heating jacket may be sleeved outside the reactor housing 310 to transfer heat to the interior of the reactor housing 310 by means of heat conduction.

According to the embodiments of the present disclosure, the reactor 300 further includes a cooling device 340 for cooling the reactor 300 after the reaction starts, so as to prevent a temperature of the reactor 300 from being too high, shortening the service life of the apparatus and even causing danger. The cooling device 340 may include, for example, at least one set of cooling jackets arranged outside the reactor housing 310. The cooling jacket may include two parts that may be fixed by fixing holes and bolts, and each part may be filled with cooling water. The cooling device of the embodiments of the present disclosure may include one or more sets of cooling jackets. When the apparatus is running, the temperature of the reactor may be controlled by adjusting a number of cooling jackets in use. Similarly, the heating device of the embodiment of the present disclosure may include one or more sets of heating jackets. When the apparatus is running, the temperature of the reactor may be controlled by adjusting a number of heating jackets in use.

According to the embodiments of the present disclosure, the reactor housing 310 includes a first area 10 close to the oxidant feed port 311 and a second area 20 close to the discharge port 313. The heating device 320 is arranged outside the first area 10, and the cooling device 340 is arranged outside the second area 20. According to the embodiments of the present disclosure, the supercritical water oxidation is completed in the first area 10. The product is cooled by the cooling device 340 while flowing through the second area 20 to the discharge port 313, and a temperature of the product at the discharge port is about 150~300 °C.

As shown in FIG. 3, according to the embodiments of the present disclosure, the reactor housing 310 includes a first end wall 314, a side wall 315, and a second end wall 316 opposite to the first end wall 314. The oxidant feed port 311 is arranged on the first end wall 314, the organic matter feed port 312 is arranged on the side wall 315, and the discharge port 313 is arranged on the second end wall 316. Optionally, the discharge port 313 may also be arranged on the side wall 315.

According to the embodiments of the present disclosure, the reactor 300 further includes a liner 350 arranged on the second end wall 316 and extending toward the first end wall 314. The discharge port 313 is arranged inside the liner 350. A distance between the organic matter feed port 312 and the first end wall 314 is greater than a distance between the organic matter feed port 312 and the second end wall 316. That is, the organic matter feed port 312 is closer to the second end wall 316. After the organic matter enters the reactor 300, it moves toward the first end wall 214 along the outside of the liner 350 until it reaches the vicinity of the oxidant feed port 311, and an oxidation reaction of the organic matter and the oxidant occurs in the supercritical water environment. This design enables the organic matter to be preheated between the liner and the housing, and prevents a temperature of the liner from being too high, which prolongs a service life of the liner.

According to the embodiments of the present disclosure, a material of the liner 350 may be, for example, a high-temperature alloy material GH4169, an inner diameter may be 40~133 mm, such as 108 mm, and a length may be 1000~6000 mm, such as 3500 mm.

According to the embodiments of the present disclosure, the liner 350 is processed by aluminizing, shot peening, and spraying a thermal barrier coating including a plurality of aluminum layers and a plurality of aluminum oxide layers alternately arranged. It is equivalent to forming an anticorrosive coating on the liner. In addition, under high temperature effect of the supercritical water, a dense gel layer is formed on the liner to prevent the supercritical water from contacting and corroding a metal of the liner.

According to the embodiments of the present disclosure, a key condition for forming the dense gel layer is that a layer of dense and special metal atoms exists between the metal and the gel layer. On the one hand, special metal atoms of this layer are bonded to a body of the metal through metal bonds. On the other hand, special metal atoms of this layer are bonded to the gel layer through chemical bonds. In order to prepare this layer of metal atoms, nickel-based metal is adopted in the embodiments of the present disclosure. Firstly, the body of the metal is aluminized, then surfaces of the metal is forged with shot peening to form a layer of dense metal aluminum atoms, and then a thermal barrier coating is sprayed. By alternately spraying 6 to 8 layers of a metal aluminum layer and an aluminum oxide ceramic layer, a thermal barrier coating with a thickness of about 2~3 mm is formed on the surfaces of the metal. After the thermal barrier coating encounters the supercritical water, thermal barrier coating may transform into the dense gel layer. The gel layer may prevent the supercritical water from contacting and corroding the metal of the liner. When a reaction center temperature is 700 °C to 800 °C, a surface temperature of the thermal barrier coating is maintained at 650 °C to 750°C, and a body temperature of the liner is maintained at 550 °C to 650°C.

According to the embodiments of the present disclosure, the reactor 300 may further include at least one temperature sensor for obtaining a temperature of at least one position of the supercritical water oxidation reactor. For example, temperature probes may be provided at both ends and in a middle of the liner 350, and may also be provided between the heating device 220 and the reactor housing 310.

According to the embodiments of the present disclosure, the reactor 300 further includes at least one pressure sensor for obtaining a pressure of at least one position of the reactor. For example, both ends of the reactor 300 may be provided with pressure gauges for detecting the pressure inside the reactor 300.

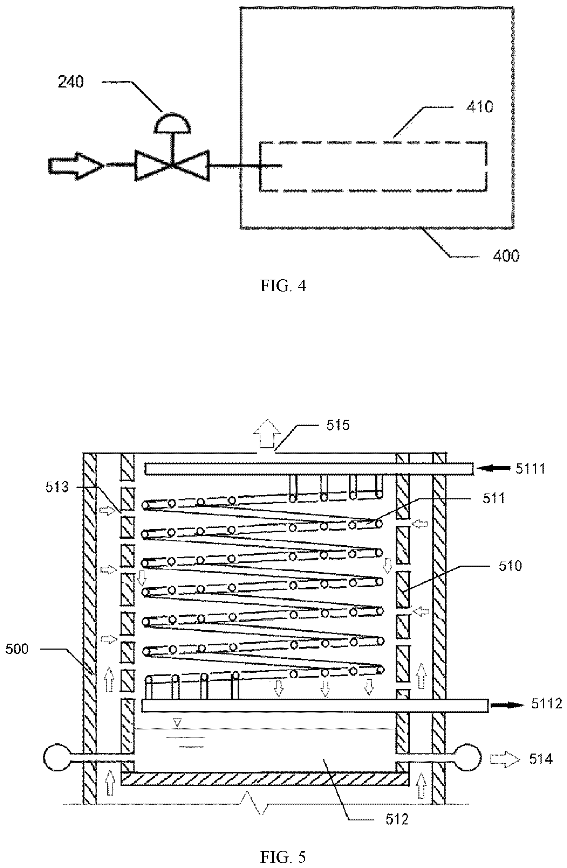

FIG. 4 schematically shows a schematic diagram of a sleeve 410 according to the embodiments of the present disclosure.

As shown in FIG. 4, an evaporation tank 400 is in communication with the reactor through an outlet pipe (240 shown in FIG. 2) of the reactor. A sleeve 410 is provided in the evaporation tank 400, and the outlet pipe of the reactor is connected inside the sleeve 410. The sleeve 410 is provided with small apertures thereon. The materials discharged from the reactor are dispersed and discharged into the evaporation tank 400 through a plurality of small apertures.

According to the embodiments of the present disclosure, a dimension and shape of the sleeve 410 are not limited. For example, a diameter of the sleeve 410 may be 42~50 mm, a wall thickness of the sleeve 410 may be 4~6 mm, and the shape of the sleeve 410 may be a straight tube or a spiral tube. The small aperture may have a diameter of, for example, 2~3 mm, and mainly functions to dissolve and disperse a high-speed fluid through the small apertures on the outlet pipe, and slowly release a pressure.

Referring back to FIG. 2, according to the embodiments of the present disclosure, an inner cooling barrel 250 is provided in the outer self-separating barrel 220. The condensation tube 223 is arranged inside the inner cooling barrel 250, and the condensation tank 222 is formed at a bottom of the inner cooling barrel 250. A plurality of holes 251 are provided on a barrel wall of the inner cooling barrel 250. The inner cooling barrel of the embodiments of the present disclosure is described below with reference to FIG. 5.

FIG. 5 schematically shows a schematic diagram of an inner cooling barrel 510 according to the embodiments of the present disclosure.

As shown in FIG. 5, a plurality of holes 513 are provided on barrel walls of the inner cooling barrel 510 to allow steams evaporated in the evaporation tank to enter the inner cooling barrel 510.

According to the embodiments of the present disclosure, cooling water may be filled into a condensation tube 511 in the inner cooling barrel 510 (for example, charged from an inlet 5111 and discharged from an outlet 5112), so that a temperature in the inner cooling barrel 510 is less than that in the evaporation tank, and a temperature of the steams may be reduced after the condensation tube 511 is filled with water.

According to the embodiments of the present disclosure, for example, in an upward flow direction as shown by arrows in FIG. 5, water vapor, oxygen and carbon dioxide evaporated in the evaporation tank may enter the inner cooling barrel 510 from the plurality of holes 513 provided on the barrel walls. After the steams encounter cold air, they are condensed to become water droplets and fall into the condensation tank 512, and then are discharged from a liquid drain 514. The oxygen and carbon dioxide may be exhausted from an exhaust port 515 at the top.

According to the embodiments of the present disclosure, a volume of the condensation tank 512 is not limited. For example, the volume of the condensation tank 512 may be 50L to 500L. The condensation tank 512 may be connected to an external annular pipe through a plurality of radiating pipes, and a water conduction capacity may be 800 kg/h to 8000 kg/h. The condensation tube 511 may be a horizontally wound spiral cooling tube, and a dimension thereof is not limited.

According to the embodiments of the present disclosure, a plurality of holes 513 are provided on the barrel walls for gases to pass through. The inner cooling barrel 510 may make water vapor above 100 °C condense into water at 60 °C to 90 °C, and a condensing capacity may be 200 kg/h to 2000 kg/h. A volume of a cooling coil is not limited. For example, the volume may be 1000L. The condensed water may be returned to the supercritical water oxidation reactor for reuse, or the condensed water may be used for other purposes or directly discharged.

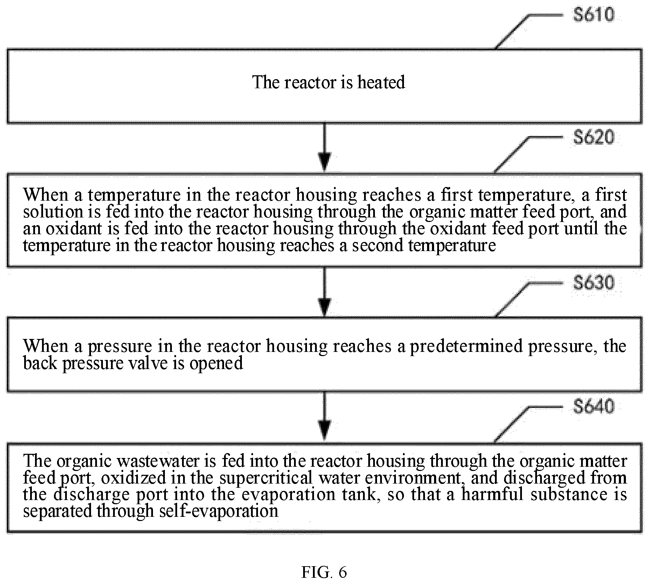

FIG. 6 schematically shows a flowchart of a method of treating organic wastewater according to the embodiments of the present disclosure.

As shown in FIG. 6, the method includes operations S610 to S640.

In operation S610, the reactor is heated.

In operation S620, when a temperature in the reactor housing reaches a first temperature, a first solution is fed into the reactor housing through the organic matter feed port, and an oxidant is fed into the reactor housing through the oxidant feed port until the temperature in the reactor housing reaches a second temperature.

In operation S630, when a pressure in the reactor housing reaches a predetermined pressure, the back pressure valve at the discharge port of the reactor is opened.

In operation S640, the organic wastewater is fed into the reactor housing through the organic matter feed port, oxidized in the supercritical water environment, and discharged from the discharge port into the evaporation tank, so that a harmful substance is separated through self-evaporation.

According to the embodiments of the present disclosure, for example, the reactor may be filled with water first, and then preheated with an electric heating jacket so that a temperature in the reactor housing reaches the first temperature, such as 300 °C. According to the embodiments of the present disclosure, the first solution may be, for example, a sucrose solution, and a concentration of sucrose is gradually increased by adjusting a ratio of the sucrose solution and water. The sucrose solution is fed into the reactor through the oxidant feed port and the oxidant is fed into the reactor at the same time. According to the embodiments of the present disclosure, the oxidant may be, for example, oxygen. In the condition of 300 °C, the oxidant reacts with sucrose to generate heat, and the temperature of the reactor continuously rises to the second temperature.

The sucrose solution used in the embodiments of the present disclosure may effectively increase the temperature of the supercritical water reaction chamber. Different from propanol, sucrose aqueous solution is a non-flammable and non-explosive material. Furthermore, a combustion heat of a concentrated sucrose aqueous solution is higher than that of propanol, and thus the temperature of the supercritical water reaction zone may be increased to a certain temperature range of 550 °C~800 °C.

Due to the liner processed by aluminizing, shot peening and spraying thermal barrier coating provided by the embodiments of the present disclosure, the reactor may withstand a higher temperature compared with that in the related art, and a life of the reactor may be extended by 5 to 10 years. According to the embodiments of the present disclosure, the second temperature is not less than 600 °C. Preferably, the second temperature is between 650 °C and 800 °C. Compared with other supercritical water reactions in the related art, the temperature range is larger, and a reaction speed is effectively improved. Moreover, due to the high reaction temperature, the reaction time is 10 times less than that in conventional supercritical water, which greatly reduces a volume of an apparatus with a same processing capacity.

According to the embodiments of the present disclosure, when the reaction conditions are met, for example, when the supercritical water oxidation temperature is maintained at 650 °C to 750 °C, and the pressure is maintained at 20~25 Mpa, the organic matter supply device is started. In normal working conditions, a temperature of a portion of the reactor liner near the oxidant feed port is 650 °C to 800 °C. Accordingly, the temperature of the reactor housing does not exceed 600 °C.

According to the embodiments of the present disclosure, the supercritical water oxidation reactor further includes a cooling device. The reactor housing includes a first area close to the organic matter feed port and a second area close to the discharge port. The method further includes controlling the heating device and the cooling device to control a temperature of the first area within a predetermined range, and to control a temperature of the second area so that the temperature of discharge at the discharge port is not less than 120 °C.

For example, the temperature of the first area may be controlled between 650 °C and 800 °C. When a concentration of the organic matter is high, more heat of oxidation is released. At this time, the reactor needs to be cooled by the cooling device so that the temperature of the first area is controlled within 800 °C. On the other hand, the temperature of the reaction product is reduced to 120 °C~ 300 °C under the cooling action of the cooling device and the fluid between the liner and the housing. Optionally, the temperature of the discharge at the discharge port may be 150 °C to 300 °C. Compared with the temperature of about 60 °C at the discharge port of the reactor in the related art, the temperature at the discharge port of the embodiments of the present disclosure is higher, for example, the temperature may reach 300 °C, which reduces the cooling burden of the supercritical water reactor and reduces the volume of the apparatus while improving the efficiency.

According to the embodiments of the present disclosure, the reactor further includes a stirrer provided with an ammeter and a voltmeter configured to detect a current and a voltage of the stirrer, respectively. The method further includes reducing a feed rate of at least one of the oxidant feed port and the organic matter feed port when the current and/or voltage of the stirrer reaches a predetermined value.

According to the embodiments of the present disclosure, the supercritical water oxidation system further includes a monitoring system. The method further includes controlling, in response to a user input or in response to a monitoring result of the monitoring system, at least one of: a pressure and/or flow rate of the oxidant supply; a pressure and/or flow rate of the organic matter supply; a temperature of the reactor and/or the evaporation tank; and/or a state of the back pressure valve. Reference may be made to the above description of the apparatuses, which will not be repeated here.

According to the embodiments of the present disclosure, in order to reduce the volume and harmfulness of radioactive waste liquid of nuclear power plants and other nuclear facilities, the present disclosure provides a supercritical water oxidation device and method, which may convert organic wastewater into inorganic matter through supercritical water oxidation, achieve the self-evaporation by using the reaction residual heat, and recover radioactive metal elements in the organic matter, thus achieving the purpose of minimizing waste. In practical applications, the supercritical water oxidation system and method of the embodiments of the present disclosure have a processing capacity of 1~10 kg/h and a volume reduction ratio of 30~100 times in the treatment of the radioactive organic waste liquid. An effluent is reusable distilled water, and purified gases may be directly discharged.

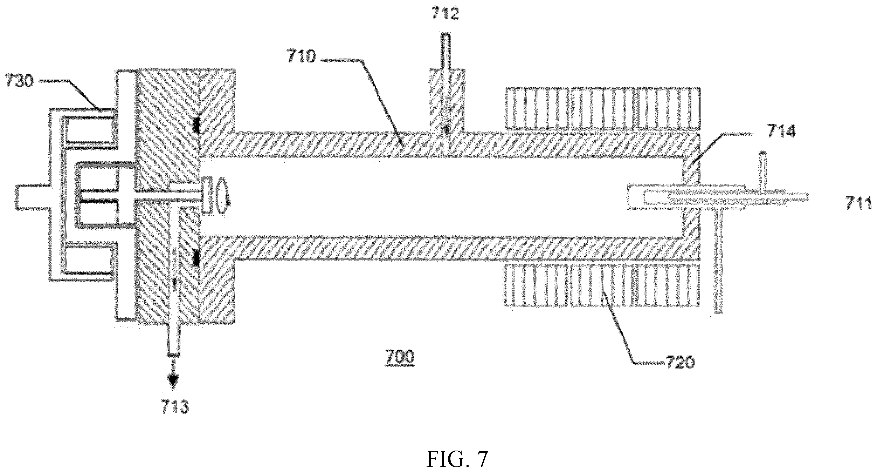

FIG. 7 schematically shows a schematic diagram of a supercritical water oxidation device according to the embodiments of the present disclosure.

As shown in FIG. 7, the supercritical water oxidation device includes a reactor 700. The reactor 700 includes a reactor housing 710, a heating device 720 and a stirrer 730. The reactor housing 710 is provided with an oxidant feed port 711, an organic matter feed port 712, and a discharge port 713. The heating device 720 is used to increase a temperature in the reactor housing 710. The stirrer 730 includes a rotating shaft that passes through the reactor housing.

The embodiments of the present disclosure do not limit a shape, material, and dimension of the reactor housing 710. For example, the reactor housing 710 may be cylindrical, and a material may be INCONEL625. An inner diameter of the reactor housing 710 may be 80~219 mm, such as 168 mm, a thickness of the reactor housing 710 may be about 25 mm, and a length of the reactor housing 710 may be 1000~6000 mm, such as 3000 mm.

According to the embodiments of the present disclosure, the heating device 720 is used to increase a temperature in the reactor housing 710, thereby heating a chamber formed in the reactor housing 710. The type of the heating device 720 is not limited in the embodiments of the present disclosure. For example, the heating device 720 may be one or more sets of heating jackets. In the embodiments of the present disclosure, the heating jacket may be sleeved outside the reactor housing 710 to transfer heat to the interior of the reactor housing 710 by means of heat conduction.

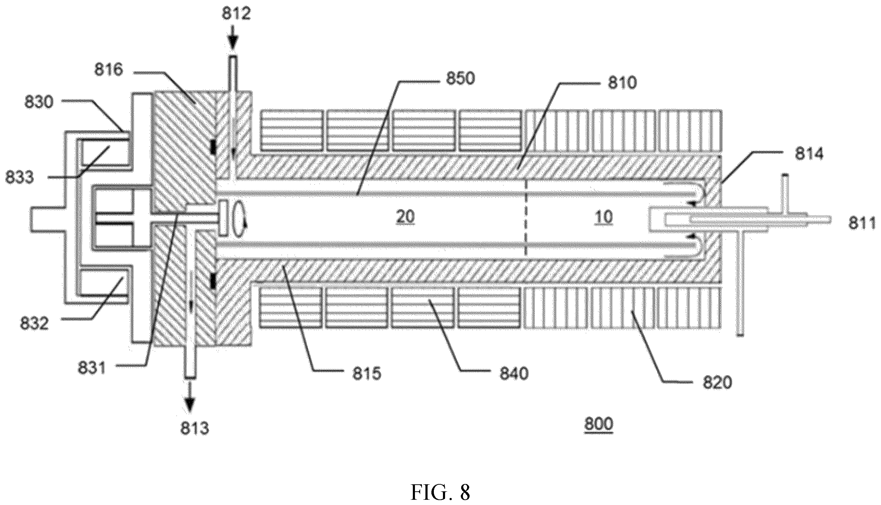

FIG. 8 schematically shows a schematic diagram of a supercritical water oxidation device 800 according to the embodiments of the present disclosure. For a reactor housing 810, a heating device 820 and a stirrer 830 shown in FIG. 8, reference may be made to the reactor housing 710, the heating device 720 and the stirrer 730 shown in FIG. 7.

According to the embodiments of the present disclosure, the stirrer 830 may include, for example, a rotating shaft 831 that penetrates the reactor housing 810. The reactor 800 may be installed obliquely, with a slope of 10%, and a discharge port 813 is located at a bottom end. The stirrer 830 is used to stir materials in the reactor 800. Generally, the supercritical water reaction product includes ultrafine particles, and there is no condition for crystal growth. As long as there is a disturbance, the particles may not deposit or stick, which effectively prevents the ultrafine inorganic salt from forming crystals and blocking the discharge port 813. For example, the stirrer 830 may include an inner magnetic rotor 832 and an outer magnetic rotor 833.When energized, the inner magnetic rotor 832 may be driven by the outer magnetic rotor 833, and the rotating shaft 831 and a stir bar may be driven by the inner magnetic rotor 832 to rotate. The stirrer 830 may, for example, maintain a rotation speed of 800 rpm for stirring, so that particles of the supercritical water reaction product remain suspended without depositing.

According to the embodiments of the present disclosure, the rotating shaft 831 passes through the discharge port 813. As shown in FIG. 8, the discharge port 813 is L-shaped, and the rotating shaft 831 penetrates the reactor housing 810 and partially passes through the discharge port 213 to extend into the reactor housing 810. The rotating shaft 831 stirs near the discharge port 813 to prevent the discharge port 813 from being blocked.

According to the embodiments of the present disclosure, the stirrer 830 is provided with an ammeter and/or a voltmeter for monitoring a current and a voltage of the stirrer. When the current and the voltage of the stirrer 830 increase and reach a predetermined value, the pressure inside the reactor 800 is high, and it is necessary to reduce the feed flow of the two feed ports 811 and 812, or even suspend the feed.

According to the embodiments of the present disclosure, the reactor 800 further includes a cooling device 840 for cooling the reactor 800 after the reaction starts, so as to prevent a temperature in the reactor 800 from being too high, which shortens a service life of the apparatus and even causes danger. The cooling device 840 may include, for example, at least one set of cooling jackets arranged outside the reactor housing 810. The cooling jacket may include two parts that may be fixed by fixing holes and bolts, and each part may be filled with cooling water. The cooling device of the embodiments of the present disclosure may include one or more sets of cooling jackets. When the apparatus is running, the temperature of the reactor may be controlled by adjusting a number of cooling jackets in use. Similarly, the heating device of the embodiments of the present disclosure may include one or more sets of heating jackets. When the apparatus is running, a temperature of the reactor may be controlled by adjusting a number of heating jackets in use.

According to the embodiments of the present disclosure, the reactor housing 810 includes a first area 10 close to the oxidant feed port 811 and a second area 20 close to the discharge port 813. The heating device 820 is arranged outside the first area 10, and the cooling device 840 is arranged outside the second area 20. According to the embodiments of the present disclosure, the supercritical water oxidation is completed in the first area 10. The product is cooled by the cooling device 840 while flowing through the second area 20 to the discharge port 813, and a temperature of the product at the discharge port is about 150~300 °C.

As shown in FIG. 8, according to the embodiments of the present disclosure, the reactor housing 810 includes a first end wall 814, a side wall 815, and a second end wall 816 opposite to the first end wall 814. The oxidant feed port 811 is arranged on the first end wall 814, the organic matter feed port 812 is arranged on the side wall 815, and the discharge port 813 is arranged on the second end wall 816. Optionally, the discharge port 813 may also be arranged on the side wall 815.

According to the embodiments of the present disclosure, the reactor 800 further includes a liner 850 arranged on the second end wall 816 and extending toward the first end wall 814. The discharge port 813 is arranged inside the liner 850. A distance between the organic matter feed port 812 and the first end wall 814 is greater than that between the organic matter feed port 812 and the second end wall 816. That is, the organic matter feed port 812 is closer to the second end wall 816. After the organic matter enters the reactor 800, the organic matter moves toward the first end wall 814 along the outside of the liner 850 until it reaches the vicinity of the oxidant feed port 811, and an oxidation reaction of the organic matter and the oxidant occurs in the supercritical water environment. This design enables the organic matter to be preheated between the liner and the housing, and prevents a temperature of the liner from being too high, which prolongs a service life of the liner.

According to the embodiments of the present disclosure, a material of the liner 850 may be, for example, a high-temperature alloy material GH4169, an inner diameter of the liner 850 may be 40~133 mm, for example, 108 mm, and a length of the liner 850 may be 1000~6000 mm, for example, 3500 mm.

According to the embodiments of the present disclosure, the liner 850 is processed by aluminizing, shot peening, and spraying a thermal barrier coating including a plurality of aluminum layers and a plurality of aluminum oxide layers alternately arranged. It is equivalent to forming an anticorrosive coating on the liner, and under a high temperature effect of supercritical water, a dense gel layer is formed on the liner to prevent the supercritical water from contacting and corroding a metal of the liner.

According to the embodiments of the present disclosure, a key condition for forming the dense gel layer is that a layer of dense and special metal atoms exists between the metal and the gel layer. On the one hand, special metal atoms of this layer are bonded to a body of the metal through metal bonds. On the other hand, special metal atoms of this layer are bonded to the gel layer through chemical bonds. In order to prepare this layer of metal atoms, nickel-based metal is adopted in the embodiments of the present disclosure. Firstly, the body of the metal is aluminized, then surfaces of the metal is forged with shot peening to form a layer of dense metal aluminum atoms, and then a thermal barrier coating is sprayed. By alternately spraying 6 to 8 layers of a metal aluminum layer and an aluminum oxide ceramic layer, a thermal barrier coating with a thickness of about 2~3 mm is formed on the surfaces of the metal. After the thermal barrier coating encounters the supercritical water, thermal barrier coating may transform into the dense gel layer. The gel layer may prevent the supercritical water from contacting and corroding the metal of the liner. When a reaction center temperature is 700 °C to 800 °C, a surface temperature of the thermal barrier coating is maintained at 650 °C to 750°C, and a body temperature of the liner is maintained at 550 °C to 650°C.

According to the embodiments of the present disclosure, the reactor 800 may further include at least one temperature sensor for obtaining a temperature of at least one position of the supercritical water oxidation reactor. For example, temperature probes may be provided at both ends and in a middle of the liner 850, and may also be provided between the heating device 820 and the reactor housing 810.

According to the embodiments of the present disclosure, the reactor 800 further includes at least one pressure sensor for obtaining a pressure of at least one position of the reactor. For example, both ends of the reactor 800 may be provided with pressure gauges for detecting a pressure inside the reactor 800.

According to the embodiments of the present disclosure, oxidant may be supplied to the reactor 800 by using an oxidant supply device. The oxidant may be, for example, liquid oxygen, oxygen, hydrogen peroxide, etc., and the embodiments of the present disclosure may use oxygen as the oxidant. According to the embodiments of the present disclosure, the oxidant supply device for supplying oxygen may include, for example, an oxygen cylinder group, an oxygen pressurized pump, a high-pressure oxygen cylinder, and a one-way valve.

According to the embodiments of the present disclosure, the reactor 800 may be fed by an organic matter supply device. The organic matter supply device may include, for example, a first water container, a second water container, a peristaltic pump, a high-pressure pump, and a one-way valve. The high-pressure pump is in communication with the first water container and the peristaltic pump, respectively. The peristaltic pump is in communication with the second water container. The first water container may be used to store organic wastewater, and the second water container may be used to store sucrose solution.

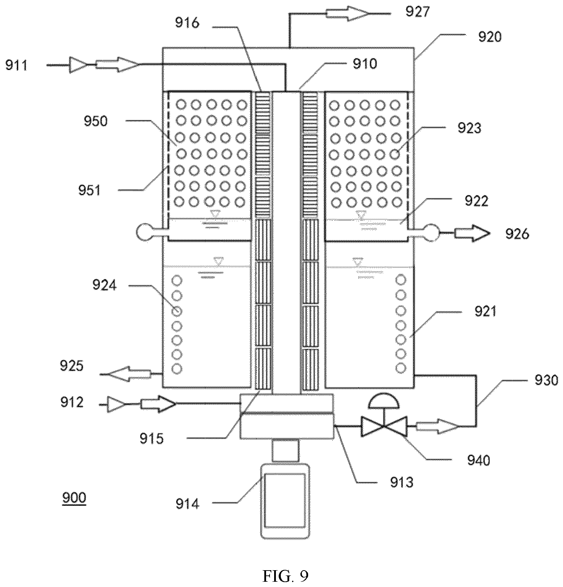

FIG. 9 schematically shows a schematic diagram of a supercritical water oxidation device 900 according to the embodiments of the present disclosure.

As shown in FIG. 9, on the basis of the above-mentioned embodiments, the supercritical water oxidation device 900 further includes an outer self-separating barrel 920 provided with an evaporation tank 921, a condensation tank 922 and a condensation tube 923. The reactor 910 is arranged inside the outer self-separating barrel 920. The reactor 910 includes an oxidant feed port 911, an organic matter feed port 912, a discharge port 913, a stirring device 914, a heating device 916, and a cooling device 915. Reference may be made to the embodiments described in FIG. 8, which will not be described in detail here. The supercritical water oxidation device is an integrated device provided with a small number of apparatuses, which has concentrated functions and a high processing capacity. Since the reactor is a high-temperature and high-pressure apparatus, the outer self-separating barrel arranged outside the reactor may also protect the outside world.

According to the embodiments of the present disclosure, the evaporation tank 921 is in communication with the discharge port 913, and a back pressure valve 940 is provided between the evaporation tank 921 and the discharge port 913.

According to the embodiments of the present disclosure, the condensation tank 922 is arranged above the evaporation tank 921, and the condensation tube 923 is arranged above the condensation tank 922, so that in a case that the gas evaporated in the evaporation tank 921 is liquefied at the condensation tube 923, the liquid obtained by liquefaction may fall back into the condensation tank 922.

According to the embodiments of the present disclosure, the pressure gradually returns to an atmospheric pressure after passing through the back pressure valve 940, and an effluent also returns from a supercritical state to a gas/liquid/solid state. The effluent from the reactor 910 is a high-temperature and high-pressure fluid, for example, the effluent has a temperature of 150~300 °C and a pressure of 25MPa. In order to enable the high-temperature and high-pressure fluid to evaporate smoothly, a cooling tube 924 may be provided in the evaporation tank 921, so as to make the effluent always in a boiling state. That is, the cooling tube 924 stabilizes a temperature of the liquid in the evaporation tank 921 within a target temperature range, for example, about 100 °C, so that the liquid may boil stably in the evaporation tank 921.

According to the embodiments of the present disclosure, a slag discharge port 925 may be further provided in the evaporation tank 921 for discharging the non-volatile salt residue in the evaporation tank 921. An online pH monitor may be provided at the slag discharge port 925. In normal working conditions, due to a production of carbon dioxide, a pH value of the discharge at the slag discharge port is about 2. If there is a significant increase, a feed flow rate of the organic matter supply device may be reduced or a temperature or pressure of the reactor 910 may be increased.

According to the embodiments of the present disclosure, a draining port 926 is provided in the condensation tank 922 for draining water in the condensation tank 922. The draining device may include a plurality of radiant pipes and a ring pipe to improve drainage efficiency. The discharged water is distilled water, and a concentration of harmful substances is less than one in a hundred thousand. An online chemical oxygen demand (COD) monitor may be provided at the draining port 926 to monitor the water quality. If the COD content increases, the feed flow rate of the organic matter supply device may be reduced or the temperature or pressure of the reactor 910 may be increased to make the reaction more sufficient.

According to the embodiments of the present disclosure, an exhaust port 927 for exhausting purified gases such as carbon dioxide is provided at the top of the outer self-separating barrel 920. A gas filter device including, for example, an activated carbon filter column and a high efficiency filter, may be provided at the exhaust port 927 to ensure that the exhausted gas meets emission standards. According to the embodiments of the present disclosure, an online volatile organic matter (VOC) monitor may be further provided at the exhaust port 927 to monitor gases. If the VOC content increases, the feed flow rate of the organic matter feed device may be reduced or the temperature or pressure of the reactor 910 may be increased to make the reaction more sufficient.

According to the embodiments of the present disclosure, the supercritical water oxidation device 900 further includes a water chiller for supplying water to the condensation tube 923, which may also supply water to the cooling device 915 in the reactor 910.

In the related art, after the organic matter is converted into carbon dioxide, water and inorganic salts through the supercritical water oxidation reactor, it generally needs to be treated by multiple apparatuses such as a cooling apparatus, a gas-liquid separation apparatus, a liquid cooling apparatus, and a gas cooling apparatus to separate the carbon dioxide, water and inorganic salts. The treatment method needs a long treating flow and many apparatuses, and also has a high cost. Through the embodiments of the present disclosure, the effluent at high temperature (120-300 °C) is treated by the outer self-separating barrel, so that the salt residue is evaporated and concentrated at the bottom of the evaporation tank, the water is evaporated in the evaporation tank, cooled by the condensation tube and then discharged from the draining port of the condensation tank, and clean gases may be discharged directly from the top of the separation apparatus. The separation apparatus of the present disclosure may realize the separation of the mixture at the same time, which not only has a short processing flow, but also effectively reduces a one-time device investment and a device operating cost, and realizes the maximum reduction in the volume of radioactive waste. Taking radioactive cesium and strontium as examples, after the radioactive cesium is evaporated in the evaporation tank, a decontamination factor may reach 10⁵, and the cesium concentration in the water vapor is less than one in a hundred thousand of the cesium concentration in the water of the evaporation tank, and a decontamination factor of strontium by evaporation may reach 10⁹. Therefore, the steam may be deeply purified.

According to the embodiments of the present disclosure, the supercritical water oxidation system further includes a monitoring system, which includes at least one of the follows: temperature sensors provided on the reactor housing, in the evaporation tank and in the condensation tank; a pressure sensor provided in the reactor housing; an online pH monitor provided at the slag discharge port; an online volatile organic matter monitor provided at the exhaust port; and/or an online chemical oxygen demand monitor provided at the draining port. The supercritical water oxidation system further includes a control system for controlling, in response to a user input or in response to a monitoring result of the monitoring system, at least one of the follows: a pressure and/or flow rate of an oxidant supply; a pressure and/or flow rate of an organic matter supply; a temperature of the reactor and/or the evaporation tank; and/or a state of the back pressure valve 940.

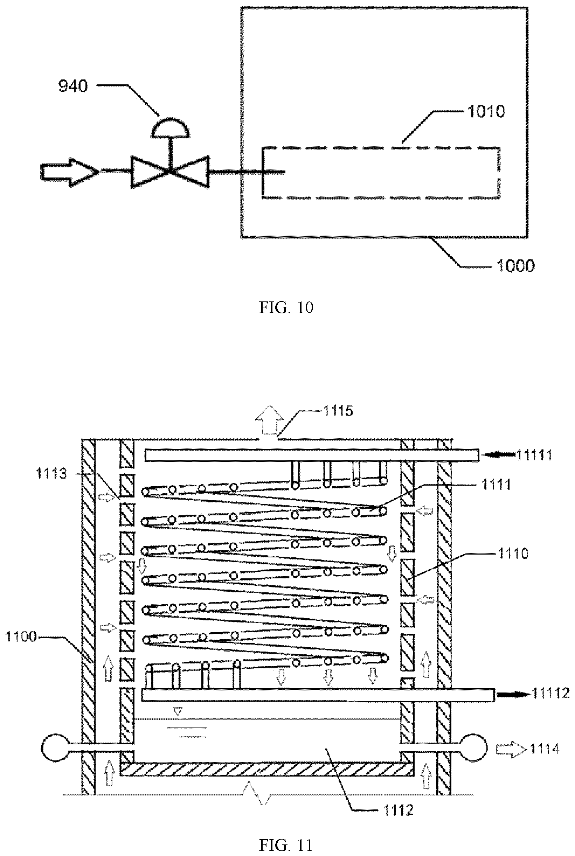

FIG. 10 schematically shows a schematic diagram of a sleeve 1010 according to the embodiments of the present disclosure.

As shown in FIG. 10, the evaporation tank 1000 is in communication with the reactor through an outlet pipe (930 shown in FIG. 9) of the reactor. A sleeve 1010 is provided in the evaporation tank 1000, and the outlet pipe of the reactor is connected inside the sleeve 1010. The sleeve 1010 is provided with small apertures thereon. The materials discharged from the reactor are dispersed and discharged into the evaporation tank 1000 through a plurality of small apertures.

According to the embodiments of the present disclosure, a dimension and shape of the sleeve 1010 are not limited. For example, a diameter of the sleeve 1010 may be 42~50 mm, a wall thickness of the sleeve 1010 may be 4~6 mm, and a shape of the sleeve 1010 may be a straight tube or a spiral tube. The small aperture may have a diameter of, for example, 2~3 mm, and mainly functions to dissolve and disperse a high-speed fluid through the small apertures on the outlet pipe, and slowly release the pressure.

Referring back to FIG. 9, according to the embodiments of the present disclosure, an inner cooling barrel 950 is provided in the outer self-separating barrel 920. The condensation tube 923 is arranged inside the inner cooling barrel 950, and the condensation tank 922 is formed at the bottom of the inner cooling barrel 950. A plurality of holes 951 are provided on a barrel wall of the inner cooling barrel 950. The inner cooling barrel of the embodiments of the present disclosure is described below with reference to FIG. 11.

FIG. 11 schematically shows a schematic diagram of an inner cooling barrel 1110 according to the embodiments of the present disclosure.

As shown in FIG. 11, a plurality of holes 1113 are provided on barrel walls of the inner cooling barrel 1110 to allow steams evaporated in the evaporation tank to enter the inner cooling barrel 1110.

According to the embodiments of the present disclosure, cooling water may be filled into a condensation tube 1111 in the inner cooling barrel 1110 (for example, charged from an inlet 11111 and discharged from an outlet 11112), so that a temperature in the inner cooling barrel 1110 is less than that in the evaporation tank, and a temperature of the steams may be reduced after the condensation tube 1111 is filled with water.

According to the embodiments of the present disclosure, for example, in an upward flow direction as shown by arrows in FIG. 11, water vapor, oxygen and carbon dioxide evaporated in the evaporation tank, may enter the inner cooling barrel 1110 from the plurality of holes 1113 provided on the barrel wall. After the steams encounter cold air, they are condensed to form water droplets and fall into the condensation tank 1112, and then are discharged from a liquid drain 1114. The oxygen and carbon dioxide may be exhausted from an exhaust port 1115 at the top.

According to the embodiments of the present disclosure, a volume of the condensation tank 1112 is not limited. For example, the volume of the condensation tank 1112 may be 50L to 500L. The condensation tank 1112 may be connected to an external annular pipe through a plurality of radiating pipes. A water conduction capacity may be 800 kg/h to 8000 kg/h. The condensation tube 1111 may be a horizontally wound spiral cooling tube, and the dimension thereof is not limited.

According to the embodiments of the present disclosure, a plurality of holes 1113 are provided on the barrel walls for gases to pass through. The inner cooling barrel 1110 may make water vapor above 100 °C condense into water at 60~90 °C, and the condensing capacity may be 200 kg/h to 2000 kg/h. A volume of a cooling coil is not limited. For example, the volume may be 1000L. The condensed water may be returned to the supercritical water oxidation reactor for reuse, or the condensed water may be used for other purposes or directly discharged.

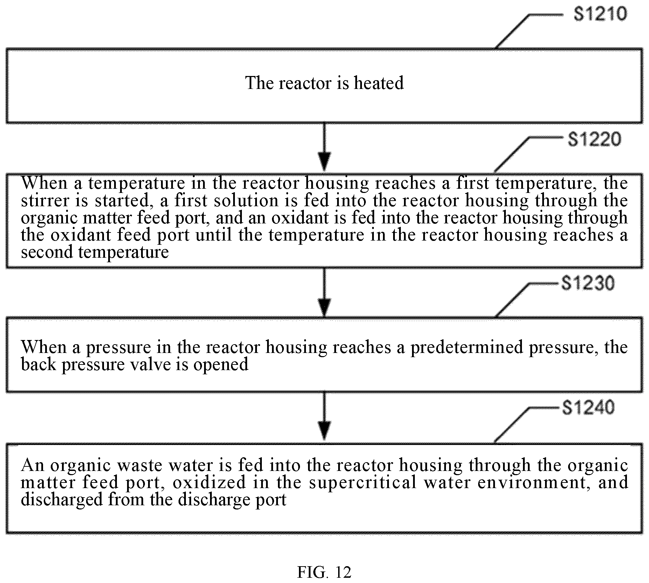

FIG. 12 schematically shows a flowchart of a method of treating organic wastewater according to the embodiments of the present disclosure.

As shown in FIG. 12, the method includes operations S1210 to S1240.

In operation S1210, the reactor is heated.

In operation S1220, when a temperature in the reactor housing reaches a first temperature, the stirrer is started, a first solution is fed into the reactor housing through the organic matter feed port, and an oxidant is fed into the reactor housing through the oxidant feed port until the temperature in the reactor housing reaches a second temperature.

In operation S1230, when a pressure in the reactor housing reaches a predetermined pressure, the back pressure valve at the discharge port of the reactor is opened.

In operation S1240, an organic wastewater is fed into the reactor housing through the organic matter feed port, oxidized in the supercritical water environment, and discharged from the discharge port.

According to the embodiments of the present disclosure, for example, the reactor may be filled with water first, and the reactor may be preheated with an electric heating jacket so that a temperature in the reactor housing reaches the first temperature, for example, 300 °C. According to the embodiments of the present disclosure, the first solution may be, for example, a sucrose solution, and a concentration of sucrose is gradually increased by adjusting a ratio of sucrose solution and water. The sucrose solution is fed into the reactor through the oxidant feed port and the oxidant is fed into the reactor at the same time. According to the embodiments of the present disclosure, the oxidant may be oxygen, for example. In the condition of 300°C, the oxidant reacts with sucrose to generate heat, and the temperature in the reactor continuously rises to the second temperature.

The sucrose solution used in the embodiments of the present disclosure may effectively increase the temperature of the supercritical water reaction chamber. Different from propanol, sucrose aqueous solution is a non-flammable and non-explosive material. Furthermore, a combustion heat of a concentrated sucrose aqueous solution is higher than that of propanol, and thus the temperature of the supercritical water reaction zone may be increased to a certain temperature range of 550~800 °C.

Due to the liner processed by aluminizing, shot peening and spraying thermal barrier coating provided by the embodiments of the present disclosure, the reactor may withstand a higher temperature compared with that in the related art, and a life of the reactor may be extended by 5 to 10 years. According to the embodiments of the present disclosure, the second temperature is not less than 600 °C. Preferably, the second temperature is between 650 °C and 800 °C. Compared with other supercritical water reactions in the related art, the temperature range is larger, and a reaction speed is effectively improved. Moreover, due to the high reaction temperature, the reaction time is 10 times less than that in conventional supercritical water, which greatly reduces a volume of apparatus with a same processing capacity.

According to the embodiments of the present disclosure, when the reaction conditions are met, for example, when a temperature of the supercritical water oxidation is maintained at 650 °C to 750 °C, and a pressure of the supercritical water oxidation is maintained at 20~25Mpa, the organic matter supply device is started. In normal working conditions, a temperature of a portion of the reactor liner near the oxidant feed port is 650~800 °C, and a temperature of a corresponding portion of the reactor housing does not exceed 600 °C.

According to the embodiments of the present disclosure, the supercritical water oxidation reactor further includes a cooling device. The reactor housing includes a first area close to the organic matter feed port and a second area close to the discharge port. The method further includes controlling the heating device and the cooling device to control a temperature of the first area within a predetermined range, and to control a temperature of the second area so that the temperature of discharge at the discharge port is not less than 120 °C.

For example, the temperature of the first area may be controlled between 650 °C and 800 °C. When a concentration of the organic matter is high, more heat of oxidation is released. At this time, the reactor needs to be cooled by the cooling device so that the temperature of the first area is controlled within 800 °C. On the other hand, the temperature of the reaction product is reduced to 120~300 °C under a cooling action of the cooling device and the fluid between the liner and the housing. Optionally, the temperature of the discharge at the discharge port may be 150 °C to 300 °C. Compared with the temperature of about 60 °C at the discharge port of the reactor in the related art, the temperature at the discharge port of the embodiments of the present disclosure is higher, for example, the temperature may reach 300 °C, which reduces a cooling burden of the supercritical water reactor and reduces a volume of the apparatus while improving the efficiency.

According to the embodiments of the present disclosure, the reactor further includes a stirrer provided with an ammeter and a voltmeter configured to detect a current and a voltage of the stirrer, respectively. The method further includes reducing a feed rate of at least one of the oxidant feed port and the organic matter feed port when the current and/or voltage of the stirrer reaches a predetermined value.

According to the embodiments of the present disclosure, the supercritical water oxidation system further includes a monitoring system. The method further includes controlling, in response to a user input or in response to a monitoring result of the monitoring system, at least one of: a pressure and/or flow rate of an oxidant supply; a pressure and/or flow rate of an organic matter supply; a temperature of the reactor and/or the evaporation tank; and/or a state of the back pressure valve. Reference may be made to the above description of the devices, which will not be repeated here.

According to the embodiments of the present disclosure, in order to reduce a volume and a harmfulness of radioactive waste liquid of nuclear power plants and other nuclear facilities, the present disclosure provides a supercritical water oxidation system and method, which may convert waste liquid into inorganic matter through supercritical water oxidation, achieve the self-evaporation by using reaction residual heat, and recover radioactive metal elements in the organic matter, thereby achieving a purpose of minimizing waste. In practical applications, the supercritical water oxidation system and method of the embodiments of the present disclosure have a treatment capacity of 10~100 L/h for radioactive organic waste liquid, and a treatment capacity of 100~1000 L/h for high-concentration radioactive organic wastewater. A volume reduction ratio of an organic solvent reaches 30~100 times, a volume reduction ratio of nuclear power waste oil reaches 50 times, a volume reduction ratio of liquid scintillation fluid reaches 90 times, and a volume reduction ratio of vacuum pump oil is not less than 100 times. The high-concentration organic wastewater is converted into distilled water, which may meet requirements for treatments of waste solvents in spent fuel reprocessing plants, treatments of nuclear power plant waste oil, treatments of nuclear fuel manufacturing plant waste TBP solvents and uranium ore purification TBP waste solvents.

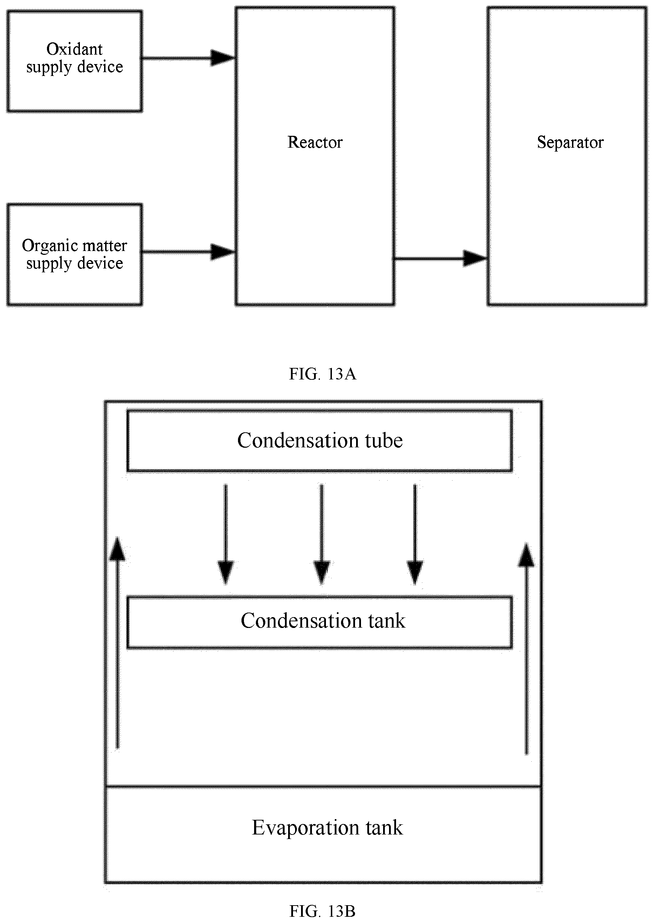

FIG. 13A and FIG. 13B schematically show schematic diagrams of a supercritical water oxidation system according to the embodiments of the present disclosure.

As shown in FIG. 13A, the supercritical water oxidation system includes an oxidant supply device, an organic matter supply device, a reactor and a separator. According to the embodiments of the present disclosure, the reactor includes a reactor housing provided with an oxidant feed port, an organic matter feed port and a discharge port. The discharge port is connected to the separator. Water required by the reactor may be supplied by the organic matter supply device, or may be supplied by the oxidant supply device, or may also be supplied to the reactor through a separate water supply device that is, for example, in communication with the oxidant feed port. A structure of the separator is shown in FIG. 13B.

As shown in FIG. 13B, the separator includes an evaporation tank, a condensation tank and a condensation tube. The condensation tank is arranged above the evaporation tank, and the condensation tube is arranged above the condensation tank, so that in a case that gases vaporized in the evaporation tank are liquefied in the condensation tube, liquids obtained by liquefaction may fall back into the condensation tank.

According to the embodiments of the present disclosure, by encapsulating the evaporation tank, the condensation tank and the condensation tube in the separator, solid-liquid-gas multi-phase substances are separated in an integrated machine, thereby eliminating needs for a cooling device, a gas-liquid separation apparatus, a liquid cooling device and a gas cooling device, thereby simplifying a processing flow.

According to the embodiments of the present disclosure, the evaporation tank is in communication with the discharge port of the reactor, and a back pressure valve is provided between the evaporation tank and the discharge port.

When reaction products flow out of the reactor, a temperature of the reaction products in the supercritical water oxidation reactor is not less than 120 °C. After entering the evaporation tank through the back pressure valve, the reaction products are self-evaporated due to their own heat, and thus harmful substances are separated, and volume reduction is achieved. After the organic matters are oxidized in the supercritical water reactor, products thereof are converted into inorganic salt, carbon dioxide and water. After purifying effluent by self-distillation, self-purification and self-separation, the products are converted into inorganic salt residue, distilled water and purified gases. Radioactive elements, heavy metals, and polar elements Cl, S, P, etc. in the organic matters all exist in a form of inorganic salts, and a total amount of these components is small, so the volume reduction of the organic waste reaches the maximum. In the self-evaporation process, the purified gases and water vapor move upwards, and the salt residue of harmful substances remains in the evaporation tank. After treatment by this process, the radioactive elements, heavy metals and polar element halogens, S, P, etc. in the organic solvents are all concentrated in the salt residue, which lays a foundation for the treatment and reuse of these components.

Only two main process devices (the reactor and the separator) are provided in the embodiments of the present disclosure. Compared with the related art, the process is simplified, the device is small in size, and the processing capacity is high. For the organic radioactive waste liquid, the radioactive elements therein are finally completely separated, concentrated and collected in a form of salt residue, with a recovery rate of over 99%. A concentration of the radioactive elements remaining in the distilled water is one in 10⁵ of that of the radioactive elements in the water in the evaporation tank.

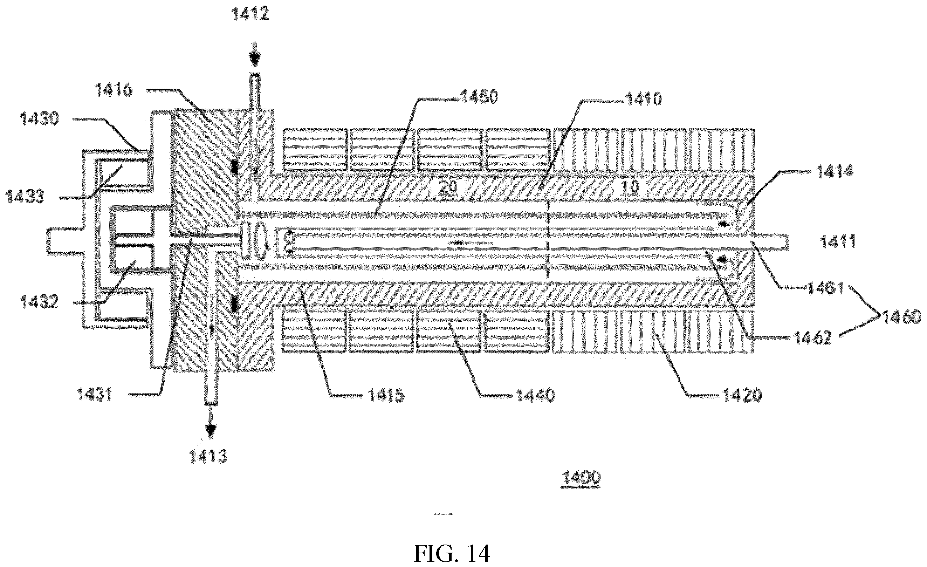

Each part of the supercritical water oxidation system of the embodiments of the present disclosure will be exemplarily described below with reference to FIG. 14 to FIG. 17.

FIG. 14 schematically shows a schematic structural diagram of a reactor 1400 according to the embodiments of the present disclosure.

As shown in FIG. 14, the reactor 1400 includes a reactor housing 1410 provided with an oxidant feed port 1412, an organic matter feed port 1411 and a discharge port 1413.

The embodiments of the present disclosure do not limit a shape, material, and size of the reactor housing 1410. For example, the reactor housing 1410 may be cylindrical, and the material may be INCONEL625. An inner diameter of the reactor housing 1410 may be 80~219 mm, and a length of the reactor housing 1410 may be 1000~6000 mm.

According to the embodiments of the present disclosure, the reactor 1400 further includes a turn-back tube 1460 arranged inside the reactor housing 1410. The turn-back tube 1460 includes an inner tube 1461 with two ends open and an outer tube 1462 with one end open. The outer tube 1462 is sleeved outside the inner tube 1461, and the inner tube 1461 is in communication with the organic matter feed port 1411.

The turn-back tube 1460 is arranged inside the reactor housing 1410. An organic liquid enters from the organic matter feed port 1411 and passes through the inner tube 1461, flows to another end of the inner tube and enters the outer tube 1462, and then continues to flow in an opposite direction until the organic liquid flows out of one end of an opening of the outer tube 1462 to encounter the oxidant inside the reactor housing 1410 and is oxidized in the supercritical water environment. During a flow process of the organic liquid in the turn-back tube 1460, the organic liquid may be fully preheated and even pyrolyzed into small organic molecules as much as possible, so that the oxidation efficiency is improved. The turn-back tube 1460 may be arranged, for example, along a central axis of the reactor 1400, so that the heating temperature may reach the highest.

According to the embodiments of the present disclosure, a shape, material and size of the inner tube 1461 and the outer tube 1462 are not limited. For example, a diameter of the inner tube 1461 may be ø25~ø42 mm, a wall thickness of the inner tube 1461 may be 4~6 mm, and a material of the inner tube 1461 may be INCONEL625. A diameter of the outer tube 1462 may be 42 mm or more, a wall thickness of the outer tube 1462 may be 4~6 mm, and a material of the outer tube 1462 may be GH4169. A length of the inner tube 1461 and a length of the outer tube 1462 may both be between 3000 mm and 6000 mm. According to the embodiments of the present disclosure, the turn-back tube 1460 has a moderate size, which may effectively reduce a production cost and is beneficial to market applications. According to the embodiments of the present disclosure, when a flow rate of the organic matter is 10 L/h, a residence time of the organic matter in the turn-back tube is at least 8 seconds. When at 600 °C, a pyrolysis of the organic matter generally only takes about 1 second, which fully meets a theoretically required time.

In the related art, no turn-back tube is provided, and the organic matter is directly fed. Then, the organic matter may cool the temperature of the reaction zone and reduce the reaction effect. When the reaction temperature is 600 °C, the pyrolysis of the organic matter takes about Is, whereas when the reaction temperature is 550 °C, the pyrolysis of the organic matter takes 5 min, and the pyrolysis process may seriously affect the reaction efficiency. Thus, compared with the related art, the present disclosure has a very fast response time and improves a processing efficiency.

According to the embodiments of the present disclosure, the reactor 1400 further includes a heating device 1420 for increasing the temperature in the reactor housing 1410 and further for heating a chamber formed in the reactor housing 1410. The type of the heating device 1420 is not limited in the embodiments of the present disclosure. For example, the heating device 1420 may be one or more sets of heating jackets. In the embodiments of the present disclosure, the heating jacket may be sleeved outside the reactor housing 1410 to transfer heat to the interior of the reactor housing 1410 by means of heat conduction.

According to the embodiments of the present disclosure, the reactor 1400 further includes a cooling device 1440 for cooling the reactor 1400 after the reaction starts, to prevent the temperature of the reactor 1400 from being too high, shortening the service life of the apparatus and even causing danger. The cooling device 1440 may include, for example, at least one set of cooling jackets arranged outside the reactor housing 1410. The cooling jacket may include two parts that may be fixed by fixing holes and bolts, and each part may be filled with cooling water. The cooling device of the embodiments of the present disclosure may include one or more sets of cooling jackets. When the apparatus is running, the temperature of the reactor may be controlled by adjusting a number of cooling jackets in use. Similarly, the heating device of the embodiments of the present disclosure may include one or more sets of heating jackets. When the apparatus is running, the temperature of the reactor may be controlled by adjusting the number of heating jackets in use.

According to the embodiments of the present disclosure, the reactor housing 1410 includes a first area 10 close to the organic matter feed port 1411 and a second area 20 close to the discharge port 1413. The heating device 1420 is arranged outside the first area 10, and the cooling device 1440 is arranged outside the second area 20. According to the embodiments of the present disclosure, the supercritical water oxidation is completed in the first area 10. The product is cooled by the cooling device 1440 while flowing through the second area 20 to the discharge port 1413, and a temperature of the product at the discharge port is about 150 to 300 °C.

According to the embodiments of the present disclosure, the reactor 1400 may further include a stirrer 1430. The stirrer 1430 includes a rotating shaft 1431 that penetrates the reactor housing 1410. The reactor 1400 may be installed obliquely, with a slope of 10%, and the discharge port 1413 is located at the bottom end. The stirrer 1430 is used to stir materials in the reactor 1400. Generally, the supercritical water reaction product includes ultrafine particles, and there is no condition for crystal growth. As long as there is a disturbance, the particles may not deposit or stick, which effectively prevents the ultrafine inorganic salt from forming crystals and blocking the discharge port 1413. For example, the stirrer 1430 may include an inner magnetic rotor 1432 and an outer magnetic rotor 1433. When energized, the inner magnetic rotor 1432 is driven by the outer magnetic rotor 1433, and the rotating shaft 1431 and a stir bar are driven by the inner magnetic rotor 1432 to rotate. The stirrer 1430 may, for example, maintain a rotation speed of 800 rpm for stirring, so that particles of the supercritical water reaction product remain suspended without depositing.

According to the embodiments of the present disclosure, the rotating shaft 1431 passes through the discharge port 1413. As shown in FIG. 14, the discharge port 1413 is L-shaped, and the rotating shaft 1431 penetrates the reactor housing 1410 and partially passes through the discharge port 1413 to extend into the reactor housing 1410. The rotating shaft 1431 stirs near the discharge port 1413 to prevent the discharge port 1413 from being blocked.

According to the embodiments of the present disclosure, the stirrer 1430 is provided with an ammeter and/or a voltmeter for monitoring a current and voltage of the stirrer. When the current and voltage of the stirrer 1430 increase and reach a predetermined value, the pressure inside the reactor 1400 is high, and it is necessary to reduce a feed flow of the two feed ports 1411 and 1412, or even suspend the feed.

As shown in FIG. 14, according to the embodiments of the present disclosure, the reactor housing 1410 includes a first end wall 1414, a side wall 1415, and a second end wall 1416 opposite to the first end wall 1414. The organic matter feed port 1411 is arranged on the first end wall 1414, the oxidant feed port 1412 is arranged on the side wall 1415, and the discharge port 1413 is arranged on the second end wall 1416. Optionally, the discharge port 1413 may also be arranged on the side wall 1415.

According to the embodiments of the present disclosure, the reactor 1400 further includes a liner 1450 arranged on the second end wall 1416 and extending toward the first end wall 1414. The turn-back tube 1460 is arranged at least partially inside the liner 1450. The discharge port 1413 is arranged inside the liner 1450. A distance between the oxidant feed port 1412 and the first end wall 1414 is greater than that between the oxidant feed port 1412 and the second end wall 1416. That is, the oxidant feed port 1412 is closer to the second end wall 1416. After the oxidant enters the reactor 1400, it moves toward the first end wall 1414 along the outside of the liner 1450 until it reaches the vicinity of the outer tube 1462 of the turn-back tube 1460 and an oxidation reaction of the waste liquid and the oxidant occurs in the supercritical water environment. This design enables the oxidant to be preheated between the liner and the housing, and prevents a temperature of the liner from being too high, which prolongs a service life of the liner.

According to the embodiments of the present disclosure, a material of the liner 1450 may be, for example, a high-temperature alloy material GH4169, an inner diameter of the liner 1450 may be 40~133 mm, and a length of the liner 1450 may be 1000~6000 mm.

According to the embodiments of the present disclosure, the liner 1450 is processed by aluminizing, shot peening, and spraying a thermal barrier coating including a plurality of aluminum layers and a plurality of aluminum oxide layers alternately arranged. It is equivalent to forming an anticorrosive coating on the liner, and under a high temperature effect of supercritical water, a dense gel layer is formed on the liner to prevent the supercritical water from contacting and corroding a metal of the liner.

According to the embodiments of the present disclosure, a key condition for forming the dense gel layer is that a layer of dense and special metal atoms exists between the metal and the gel layer. On the one hand, special metal atoms of this layer are bonded to a body of the metal through metal bonds. On the other hand, special metal atoms of this layer are bonded to the gel layer through chemical bonds. In order to prepare this layer of metal atoms, nickel-based metal is adopted in the embodiments of the present disclosure. Firstly, the body of the metal is aluminized, then surfaces of the metal is forged with shot peening to form a layer of dense metal aluminum atoms, and then a thermal barrier coating is sprayed. By alternately spraying 6 to 8 layers of a metal aluminum layer and an aluminum oxide ceramic layer, a thermal barrier coating with a thickness of about 2~3 mm is formed on the surfaces of the metal. After the thermal barrier coating encounters the supercritical water, thermal barrier coating may transform into the dense gel layer. The gel layer may prevent the supercritical water from contacting and corroding the metal of the liner. When a reaction center temperature is 700 °C to 800 °C, a surface temperature of the thermal barrier coating is maintained at 650 °C to 750°C, and a body temperature of the liner is maintained at 550 °C to 650°C.

According to the embodiments of the present disclosure, the reactor 1400 further includes a metal wire mesh arranged between the liner 1450 and the side wall 1415, so that a heat dissipation area of a liner pipe is increased by 10 to 100 times. By means of a function of fluid cross-flowing, a temperature of the liner pipe drops quickly, which effectively reduces the temperature of the liner pipe, and reduces a corrosion tendency of the liner pipe.

According to the embodiments of the present disclosure, the reactor 1400 may further include at least one temperature sensor for obtaining a temperature of at least one position of the supercritical water oxidation reactor. For example, temperature probes may be provided at both ends and in a middle of the liner 1450, and may also be provided between the heating device 1420 and the reactor housing 1410.

According to the embodiments of the present disclosure, the reactor 1400 further includes at least one pressure sensor for obtaining a pressure of at least one position of the reactor. For example, both ends of the reactor 1400 may be provided with pressure gauges for detecting the pressure inside the reactor 1400.

According to the embodiments of the present disclosure, the supercritical water oxidation system further includes a protective device. The protective device includes a reactor protective jacket that protects the outside world when the high-temperature and high-pressure reactor is in danger.

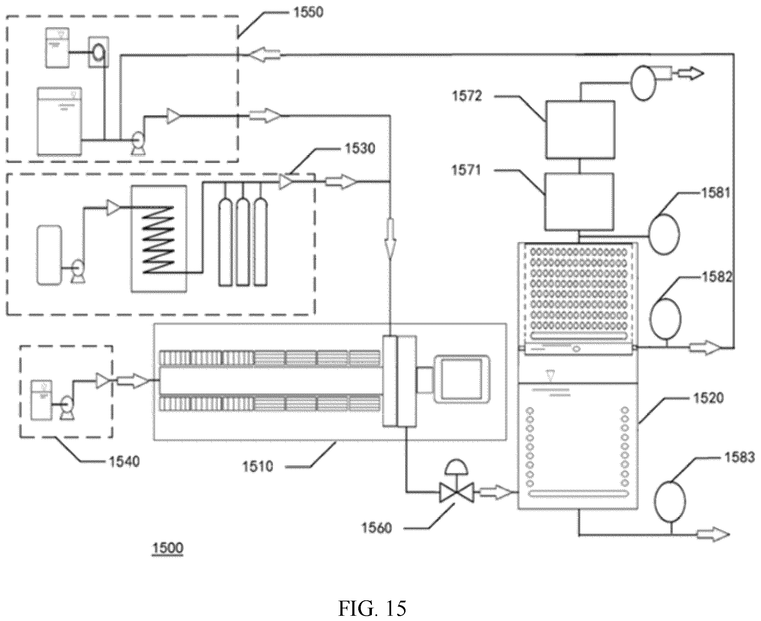

FIG. 15 schematically shows a schematic diagram of a supercritical water oxidation system 1500 according to the embodiments of the present disclosure.

As shown in FIG. 15, the supercritical water oxidation system 1500 includes a reactor 1510, a separator 1520, an oxidant supply device 1530 and an organic matter supply device 1540. A discharge port of the reactor 1510 is in communication with an evaporation tank of the separator 1520 through a back pressure valve 1560. For the reactor 1510, reference may be made, for example, to the reactor 1400 described in FIG. 14, which will not be repeated here.

According to the embodiments of the present disclosure, the supercritical water oxidation system 1500 may further include a water supply device 1550. The water supply device 1550 may include, for example, a first water container, a second water container, a peristaltic pump, a high-pressure pump, and a one-way valve. The high-pressure pump is in communication with the first water container and the peristaltic pump, and the peristaltic pump is in communication with the second water container. The first water container may be used to store water, and the second water container may be used to store sucrose solution.

The sucrose solution used in the embodiments of the present disclosure may effectively increase the temperature of the supercritical water reaction chamber. Different from propanol, sucrose aqueous solution is a non-flammable and non-explosive material. Furthermore, a combustion heat of a concentrated sucrose aqueous solution is higher than that of propanol, and thus the temperature of the supercritical water reaction zone may be increased to a certain temperature range of 550∼800 °C.

According to the embodiments of the present disclosure, the oxidant may be, for example, liquid oxygen, oxygen, hydrogen peroxide, and the like. Preferably, the liquid oxygen is used as the oxidant in the embodiments of the present disclosure. According to the embodiments of the present disclosure, the oxidant supply device 1530 for supplying liquid oxygen may include, for example, a liquid oxygen dewar, a liquid oxygen pump, a one-way valve, a liquid oxygen bath vaporizer, and a high-pressure oxygen cylinder group.

According to the embodiments of the present disclosure, the organic matter supply device 1540 may include, for example, a liquid tank, a high-pressure pump, and a one-way valve.

According to the embodiments of the present disclosure, after passing through the back pressure valve, a pressure gradually returns to an atmospheric pressure, and an effluent also returns from a supercritical state to a gas/liquid/solid state. The effluent from the reactor is a high-temperature and high-pressure fluid, for example, the effluent has a temperature of 150∼300 °C and a pressure of 25MPa. In order to enable the high-temperature and high-pressure fluid to evaporate smoothly, a cooling tube may be provided in the evaporation tank to make the effluent always in a boiling state. That is, the cooling tube stabilizes a temperature of the liquid in the evaporation tank within a target temperature range, for example, about 100 °C, so that the liquid may boil stably in the evaporation tank.

According to the embodiments of the present disclosure, a slag discharge port may be further provided in the evaporation tank for discharging non-volatile salts residue in the evaporation tank. An online pH monitor 1583 may be provided at the slag discharge port. In normal working conditions, due to a production of carbon dioxide, a pH value of the discharge at the slag discharge port is about 2. If there is a significant increase, a feed flow rate of the organic matter supply device may be reduced, or a temperature or pressure of the reactor may be increased.

According to the embodiments of the present disclosure, a draining port is provided in the condensation tank for draining water in the condensation tank. The draining device may include a plurality of radiant pipes and a ring pipe to improve drainage efficiency. The discharged water is distilled water, and a concentration of harmful substances is less than one in a hundred thousand. An online chemical oxygen demand (COD) monitor 1582 may be provided at the draining port to monitor a water quality. If the COD content increases, the feed flow rate of the organic matter supply device may be reduced or the temperature or pressure of the reactor may be increased to make the reaction more sufficient.

According to the embodiments of the present disclosure, an exhaust port for exhausting purified gases such as carbon dioxide is provided at the top of the separator. A gas filter device including, for example, an activated carbon filter column 1571 and a high efficiency filter 1572, may be provided at the exhaust port to ensure that the exhausted gases meet emission standards. According to the embodiments of the present disclosure, an online volatile organic matter (VOC) monitor 1581 may be further provided at the exhaust port to monitor gases. If the VOC content increases, the feed flow rate of the organic matter supply device may be reduced or the temperature or pressure of the reactor 210 may be increased to make the reaction more sufficient.

According to the embodiments of the present disclosure, the supercritical water oxidation system further includes a water chiller for supplying water to the condensation tube, which may also supply water to the cooling device in the reactor.

In the related art, after the organic matter is converted into carbon dioxide, water and inorganic salts through the supercritical water oxidation reactor, it generally needs to be treated by multiple apparatuses such as a cooling apparatus, a gas-liquid separation apparatus, a liquid cooling apparatus, and a gas cooling apparatus to separate the carbon dioxide, water and inorganic salts. The treatment manner needs a long treating flow and many devices, and also has a high cost. Through the embodiments of the present disclosure, an effluent at high temperature (120-300 °C) is treated by the separator, so that the salt residue is evaporated and concentrated at the bottom of the evaporation tank, the water is evaporated in the evaporation tank, cooled by the condensation tube and then discharged from the draining port of the condensation tank, and clean gases may be discharged directly from the top of the separation apparatus. The separation apparatus of the present disclosure may realize the separation of the mixture at the same time, which not only has a short processing flow, but also effectively reduces a one-time investment and operating costs of apparatuses, and realizes the maximum reduction in the volume of radioactive waste. Taking radioactive cesium and strontium as examples, after the radioactive cesium is evaporated in the evaporation tank, a decontamination factor may reach 10⁵, and the cesium concentration in the water vapor is less than one in a hundred thousand of the cesium concentration in the water of the evaporation tank, and a decontamination factor of strontium by evaporation may reach 10⁹. Therefore, the steam may be deeply purified.

According to the embodiments of the present disclosure, the supercritical water oxidation system further includes a monitoring system. The monitoring system includes at least one of: temperature sensors provided on the reactor housing, in the evaporation tank, and in the condensation tank; a pressure sensor provided in the reactor housing; an online pH monitor provided at the slag discharge port; an online volatile organic matter monitor provided at the exhaust port; and/or an online chemical oxygen demand monitor provided at the draining port. The supercritical water oxidation system further includes a control system for controlling, in response to a user input or in response to a monitoring result of the monitoring system, at least one of: a pressure and/or flow rate of an oxidant supply; a pressure and/or flow rate of an organic matter supply; a temperature of the reactor and/or the evaporation tank; and/or a state of the back pressure valve 1560.

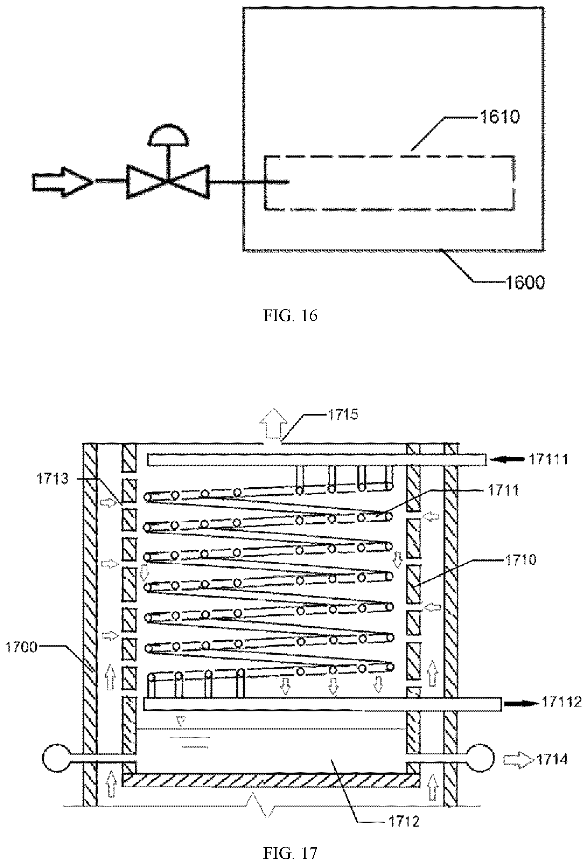

FIG. 16 schematically shows a schematic diagram of a sleeve 1610 according to the embodiments of the present disclosure.

As shown in FIG. 16, the evaporation tank 1600 is in communication with the reactor through an outlet pipe of the reactor. A sleeve 1610 is provided in the evaporation tank 1600, and the outlet pipe of the reactor is connected inside the sleeve 1610. The sleeve 1610 is provided with small apertures thereon. The materials discharged from the reactor is dispersed and discharged into the evaporation tank 1600 through a plurality of small apertures.

According to the embodiments of the present disclosure, a dimension and shape of the sleeve 1610 are not limited. For example, a diameter of the sleeve 1610 may be 42∼50 mm, a wall thickness of the sleeve 1610 may be 4~6 mm, and the shape of the sleeve 1610 may be a straight tube or a spiral tube. The small aperture may have a diameter of, for example, 2~3 mm, and mainly functions to dissolve and disperse a high-speed fluid through the small apertures on the outlet pipe, and slowly release a pressure.

According to the embodiments of the present disclosure, an inner cooling barrel is provided in the separator, the condensation tube is arranged inside the inner cooling barrel, the condensation tank is formed at a bottom of the inner cooling barrel, and a plurality of holes are provided on a barrel wall of the inner cooling barrel. The inner cooling barrel of the embodiments of the present disclosure is described below with reference to FIG. 17.

FIG. 17 schematically shows a schematic diagram of an inner cooling barrel 1710 according to the embodiments of the present disclosure.

As shown in FIG. 17, a plurality of holes 1713 are provided on barrel walls of the inner cooling barrel 1710 to allow steams evaporated in the evaporation tank to enter the inner cooling barrel 1710.

According to the embodiments of the present disclosure, cooling water may be filled into a condensation tube 1711 in the inner cooling barrel 1710 (for example, charged from an inlet 17111 and discharged from an outlet 17112), so that a temperature in the inner cooling barrel 1710 is less than that in the evaporation tank, and a temperature of the steams may be reduced after the condensation tube 1711 is filled with water.

According to the embodiments of the present disclosure, for example, in an upward flow direction as shown by arrows in FIG. 17, water vapor, oxygen, and carbon dioxide evaporated in the evaporation tank may enter the inner cooling barrel 1710 from the plurality of holes 1713 provided on the barrel walls. After the steams encounter cold air, they are condensed to become water droplets and fall into the condensation tank 1712, and then are discharged from a liquid drain 1714. The oxygen and carbon dioxide may be exhausted from an exhaust port 1715 at the top.

According to the embodiments of the present disclosure, a volume of the condensation tank 1712 is not limited. For example, the volume of the condensation tank 1712 may be 50∼500L. The condensing tank 1712 may be connected to an external annular pipe through a plurality of radiating pipes, and a water conduction capacity may be 800∼8000 kg/h. The condensation tube 1711 may be a horizontally wound spiral cooling tube, and a dimension thereof is not limited.

According to the embodiments of the present disclosure, the plurality of holes 1713 are provided on the barrel walls for gases to pass through. The inner cooling barrel 1710 may make water vapor above 100 °C condense into water at 60~90°C, and a condensing capacity may be 200∼2000 kg/h. A volume of a cooling coil is not limited. For example, the volume may be 1000L. The condensed water may be returned to the supercritical water oxidation reactor for reuse, or the condensed water may be used for other purposes or directly discharged.

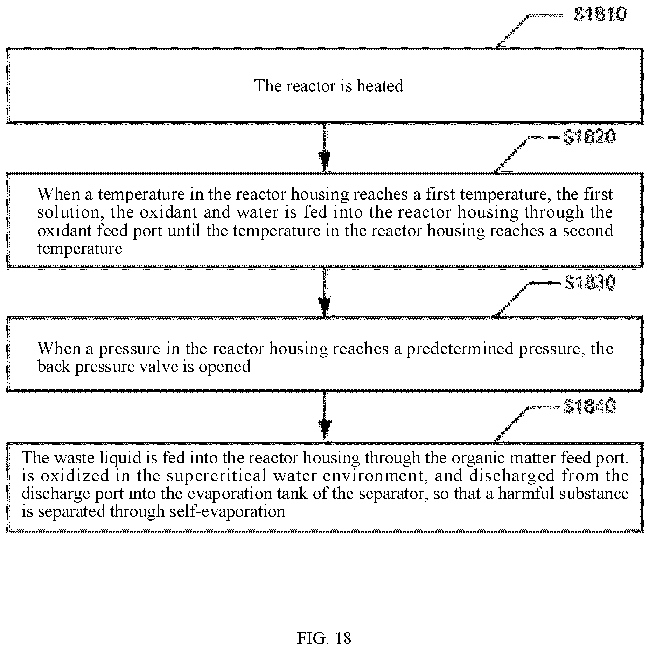

FIG. 18 schematically shows a flowchart of a method of treating a waste liquid according to the embodiments of the present disclosure.

As shown in FIG. 18, the method includes operations S1810 to S1840.

In operation S1810, the reactor is heated.

In operation S1820, when a temperature in the reactor housing reaches a first temperature, the first solution is fed into the reactor housing through the organic matter feed port, and the oxidant and water is fed into the reactor housing through the oxidant feed port until the temperature in the reactor housing reaches a second temperature.

In operation S1830, when a pressure in the reactor housing reaches a predetermined pressure, the back pressure valve at the discharge port of the reactor is opened.

In operation S1840, the waste liquid is fed into the reactor housing through the organic matter feed port. The waste liquid reaches the opening of the outer tube of the turn-back tube after passing through the inner tube and the outer tube, is oxidized in the supercritical water environment, and discharged from the discharge port into the evaporation tank of the separator, so that a harmful substance is separated through self-evaporation.

According to the embodiments of the present disclosure, for example, the reactor may be filled with water first, and the reactor may be preheated with an electric heating jacket so that a temperature in the reactor housing reaches the first temperature, for example, 300 °C. According to the embodiments of the present disclosure, the first solution may be, for example, a sucrose solution, and a concentration of sucrose is gradually increased by adjusting a ratio of sucrose solution and water. The sucrose solution is fed into the reactor through the oxidant feed port and the oxidant is fed into the reactor at the same time. According to the embodiments of the present disclosure, the oxidant may be, for example, liquid oxygen. Under the temperature of 300 °C, the oxidant reacts with sucrose to generate heat, and the temperature of the reactor continuously rises to the second temperature.

Due to the liner processed by aluminizing, shot peening, and spraying a thermal barrier coating provided by the embodiments of the present disclosure, the reactor may withstand a higher temperature compared with that in the related art, and a life of the reactor may be extended by 5 to 10 years. According to the embodiments of the present disclosure, the second temperature is not less than 600 °C. Preferably, the second temperature is between 650 °C and 800 °C. Compared with other supercritical water reactions in the related art, the temperature range is larger, and a reaction speed is effectively improved. Moreover, due to the high reaction temperature, the reaction time is 10 times less than that in conventional supercritical water, which greatly reduces a volume of an apparatus with a same processing capacity.

A turn-back tube is provided in the liner of the reactor. After the organic solvent flows into the turn-back tube, the temperature gradually increases, and the organic molecules are gradually pyrolyzed. When the organic molecules reach an outlet of the outer tube of the turn-back tube, most of the organic matter is pyrolyzed into small molecules, and an oxidation reaction occurs immediately, which releases a large amount of heat. The heat is transferred to the organic matter when the fluid flows through an outer wall of the turn-back tube, so that the heat of the oxidation reaction is effectively used, the temperature of the tube wall is reduced, and the corrosion of the apparatus is reduced.

According to the embodiments of the present disclosure, when the reaction conditions are met, for example, when a temperature of the supercritical water oxidation is maintained at 650 to 750 °C, and a pressure of the supercritical water oxidation is maintained at 20 to 25Mpa, the organic matter supply device is started to feed the organic waste liquid to the turn-back tube through the organic matter feed port. In normal working conditions, a temperature of a portion of the reactor liner near the organic matter feed port is 650∼800 °C, and a temperature of a corresponding portion of the reactor housing does not exceed 600 °C.

According to the embodiments of the present disclosure, the supercritical water oxidation reactor further includes a cooling device. The reactor housing includes a first area close to the organic matter feed port and a second area close to the discharge port. The method further includes controlling the heating device and the cooling device to control a temperature of the first area within a predetermined range, and to control a temperature of the second area so that the temperature of the discharge at the discharge port is not less than 120 °C.

For example, the temperature of the first area may be controlled between 650 °C and 800 °C. When a concentration of the organic matter is high, more heat of oxidation is released. At this time, the reactor needs to be cooled by the cooling device so that the temperature of the first area is controlled within 800 °C. On the other hand, the temperature of the reaction product is reduced to 120∼300 °C under the cooling action of the cooling device and the fluid between the liner and the housing. Optionally, the temperature of the discharge at the discharge port may be 150~300°C. Compared with the temperature of about 60 °C of the reactor outlet in the related art, the temperature of the discharge port of the embodiments of the present disclosure is higher, for example, the temperature may reach 300 °C, which reduces the cooling burden of the supercritical water reactor and reduces the volume of the apparatus while improving the efficiency.

According to the embodiments of the present disclosure, the reactor further includes a stirrer provided with an ammeter and a voltmeter configured to detect a current and a voltage of the stirrer, respectively. The method further includes reducing a feed rate of at least one of the oxidant feed port and the organic matter feed port when the current and/or voltage of the stirrer reaches a predetermined value.

According to the embodiments of the present disclosure, the supercritical water oxidation system further includes a monitoring system. The method further includes controlling, in response to a user input or in response to a monitoring result of the monitoring system, at least one of: a pressure and/or flow rate of an oxidant supply; a pressure and/or flow rate of an organic matter supply; a temperature of the reactor and/or the evaporation tank; and/or a state of the back pressure valve. Reference may be made to the above description of the system, which will not be repeated here.

The embodiments of the present disclosure provide a reactor for supercritical water oxidation, including: a reactor housing provided with an oxidant feed port, an organic matter feed port and a discharge port; a heating device configured to increase the temperature in the reactor housing, and a turn-back tube provided in the reactor housing. The turn-back tube includes an inner tube with two ends open and an outer tube with one end open, the outer tube is sleeved outside of the inner tube, and the inner tube is in communication with the organic matter feed port.

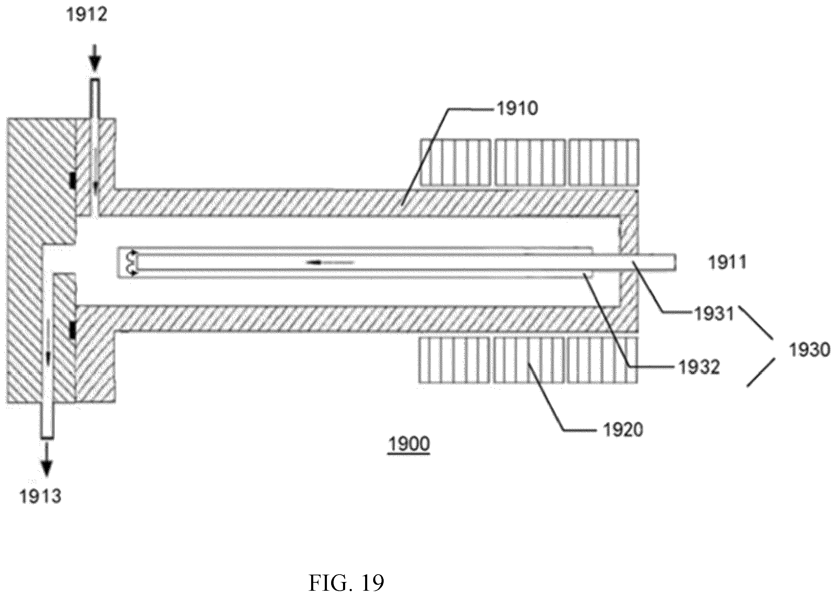

FIG. 19 schematically shows a schematic diagram of a reactor 1900 for supercritical water oxidation according to the embodiments of the present disclosure.

As shown in FIG. 19, the reactor 1900 for supercritical water oxidation includes a reactor housing 1910, a heating device 1920 and a turn-back tube 1930. The reactor housing 1910 is provided with an oxidant feed port 1912, an organic matter feed port 1911, and a discharge port 1913. The turn-back tube 1930 includes an inner tube 1931 with both ends open and an outer tube 1932 with one end open. The outer tube 1932 is sleeved outside the inner tube 1931. The inner tube 1931 is in communication with the organic matter feed port 1911.

The embodiments of the present disclosure do not limit a shape, material, and size of the reactor housing 1910. For example, the reactor housing 1910 may be cylindrical, and the material may be INCONEL625. An inner diameter of the reactor housing 1910 may be 80~219 mm, and a length of the reactor housing 1910 may be 1000∼6000 mm.

The heating device 1920 is used to increase a temperature of the reactor housing 1910 and further to heat a chamber formed in the reactor housing. The type of the heating device 1920 is not limited in the embodiments of the present disclosure. For example, the heating device 1920 may be one or more sets of heating jackets. In the embodiments of the present disclosure, the heating jacket may be sleeved outside the reactor housing 1910 to transfer heat to the interior of the reactor housing 1910 by means of heat conduction.

The turn-back tube 1930 is arranged inside the reactor housing 1910. The organic liquid enters from the organic matter feed port 1911 and passes through the inner tube 1931, flows to another end of the inner tube and enters the outer tube 1932, and then continues to flow in an opposite direction until the organic liquid flows out of one end of an opening of the outer tube 1932 to encounter the oxidant inside the reactor housing 1910 and is oxidized in the supercritical water environment. During a flow process of the organic liquid in the turn-back tube 1930, the organic liquid may be fully preheated and even pyrolyzed into small organic molecules as much as possible, so that the oxidation efficiency is improved.

According to the embodiments of the present disclosure, the turn-back tube 1930 may be arranged, for example, along a central axis of the reactor 1900, so that the heating temperature may reach the highest.

According to the embodiments of the present disclosure, a shape, material and size of the inner tube 1931 and the outer tube 1932 are not limited. For example, a diameter of the inner tube 1931 may be ø25~ø42 mm, a wall thickness of the inner tube 1931 may be 4~6 mm, and a material of the inner tube 1931 may be INCONEL625. A diameter of the outer tube 1932 may be 42 mm or more, a wall thickness of the outer tube 1932 may be 4~6 mm, and a material of the outer tube 1932 may be GH4169. A length of the inner tube 1461 and a length of the outer tube 1462 may both be between 3000 mm and 6000 mm. According to the embodiments of the present disclosure, the turn-back tube 1930 has a moderate size, which may effectively reduce a production cost and is beneficial to market applications. According to the embodiments of the present disclosure, when a flow rate of the organic matter is 10 L/h, a residence time of the organic matter in the turn-back tube is at least 8 seconds. When at 600 °C, a pyrolysis of the organic matter generally only takes about 1 second, which fully meets a theoretically required time.

In the related art, no turn-back tube is provided, and the organic matter is directly fed. The organic matter may cool the temperature of the reaction zone and reduce the reaction effect. When the reaction temperature is 600 °C, the pyrolysis of the organic matter takes about Is, whereas when the reaction temperature is 550 °C, the pyrolysis of the organic matter takes 5 min, and the pyrolysis process may seriously affect the reaction efficiency. Thus, compared with the related art, the present disclosure has a very fast response time and improves a processing efficiency.

The embodiments of the present disclosure do not limit the type of oxidant, for example, it may be liquid oxygen, oxygen, hydrogen peroxide, etc.

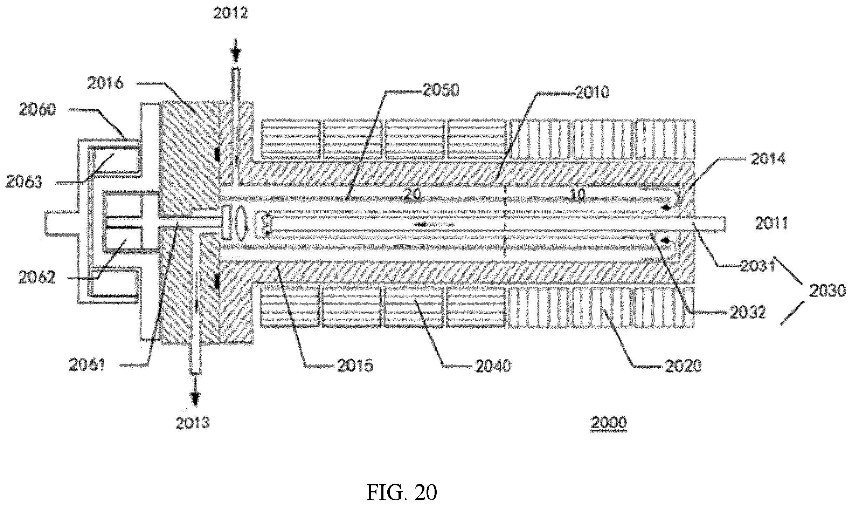

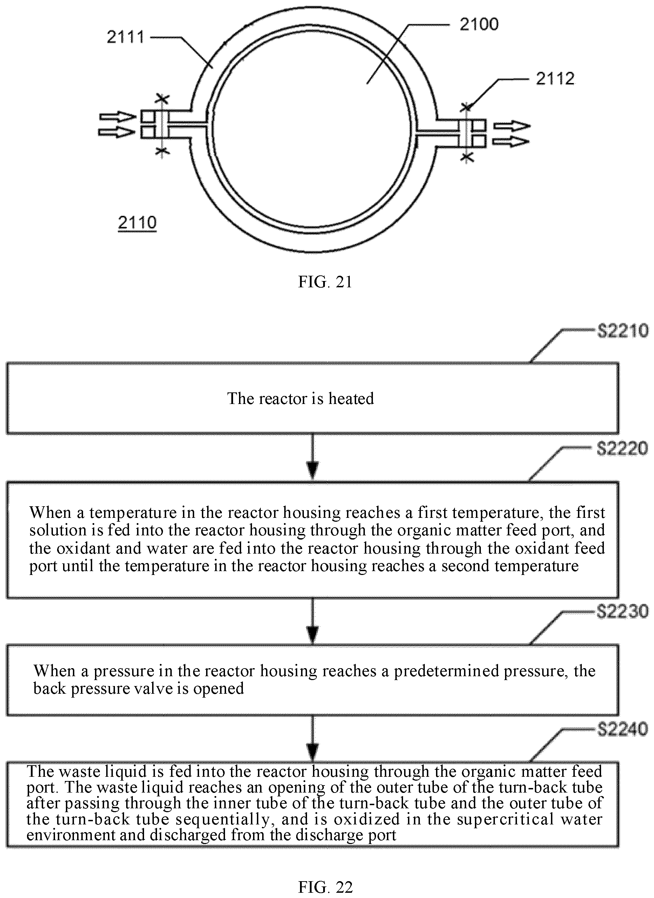

The reactor shown in FIG. 19 will be further described below with reference to FIG. 20 and FIG. 21 in combination with specific embodiments.

FIG. 20 schematically shows a schematic diagram of a reactor 2000 for supercritical water oxidation according to the embodiments of the present disclosure. It should be noted that, a reactor housing 2010, a heating device 2020 and a turn-back tube 2030 in the embodiments of the present disclosure may refer to the description of the reactor housing 1910, the heating device 1920 and the turn-back tube 1930 in FIG. 19 in the present disclosure, which will not be repeated here for the sake of brevity.

As shown in FIG. 20, the reactor 2000 may further include a stirrer 2060 on the basis of the foregoing embodiments. The stirrer 2060 includes a rotating shaft 2061 that penetrates the reactor housing 2010. The reactor 2000 may be installed obliquely, with a slope of 10%, and the discharge port 2013 is located at the bottom end. The stirrer 2060 is used to stir materials in the reactor 2000. Generally, the supercritical water reaction product includes ultrafine particles, and there is no condition for crystal growth. As long as there is a disturbance, the particles may not deposit or stick, which effectively prevents the ultrafine inorganic salt from forming crystals and blocking the discharge port 2013. For example, the stirrer 2060 may include an inner magnetic rotor 2062 and an outer magnetic rotor 2063. When energized, the inner magnetic rotor 2062 is driven by the outer magnetic rotor 2063, the rotating shaft 2061 and a stir bar are driven by the inner magnetic rotor 2062 to rotate. The stirrer 2060 may, for example, maintain a rotation speed of 800 rpm for stirring, so that particles of the supercritical water reaction product remain suspended without depositing.

According to the embodiments of the present disclosure, the rotating shaft 2061 passes through the discharge port 2013. As shown in FIG. 20, the discharge port 2013 is L-shaped, and the rotating shaft 2061 penetrates the reactor housing 2010 and partially passes through the discharge port 2013 to extend into the reactor housing 2010. The rotating shaft 2061 stirs near the discharge port 2013 to prevent the discharge port 2013 from being blocked.

According to the embodiments of the present disclosure, the stirrer 2060 is provided with an ammeter and/or a voltmeter for monitoring a current and voltage of the stirrer. When the current and voltage of the stirrer 2060 increase and reach a predetermined value, the pressure inside the reactor 2000 is high, and it is necessary to reduce a feed flow of the two feed ports 2011 and 2012, or even suspend the feed.

As shown in FIG. 20, according to the embodiments of the present disclosure, the reactor housing 2010 includes a first end wall 2014, a side wall 2015, and a second end wall 2016 opposite to the first end wall 2014. The organic matter feed port 2011 is arranged on the first end wall 2014, the oxidant feed port 2012 is arranged on the side wall 2015, and the discharge port 2013 is arranged on the second end wall 2016. Optionally, the discharge port 2013 may also be arranged on the side wall 2015.

According to the embodiments of the present disclosure, the reactor 2000 further includes a liner 2050 arranged on the second end wall 2016 and extending toward the first end wall 2014. The turn-back tube 2030 is arranged at least partially inside the liner 2050. The discharge port 2013 is arranged inside the liner 2050. A distance between the oxidant feed port 2012 and the first end wall 2014 is greater than that between the oxidant feed port 2012 and the second end wall 2016. That is, the oxidant feed port 2012 is closer to the second end wall 2016. After the oxidant enters the reactor 2000, it moves toward the first end wall 2014 along the outside of the inner liner 2050 until the oxidant reaches the vicinity of the outer tube 2032 of the turn-back tube 2030 and an oxidation reaction of the oxidant and the waste liquid occurs in the supercritical water environment. This design enables the oxidant to be preheated between the liner and the housing, and prevents a temperature of the liner from being too high, which prolongs a service life of the liner.

According to the embodiments of the present disclosure, a material of the liner 2050 may be, for example, a high-temperature alloy material GH4169, an inner diameter of the liner 2050 may be 40 to 133 mm, and a length of the liner 2050 may be 1000 to 6000 mm.

According to the embodiments of the present disclosure, the liner 2050 is processed by aluminizing, shot peening, and spraying a thermal barrier coating including a plurality of aluminum layers and a plurality of aluminum oxide layers alternately arranged. It is equivalent to forming an anticorrosive coating on the liner, and under a high temperature effect of supercritical water, a dense gel layer is formed on the liner to prevent the supercritical water from contacting and corroding a liner metal.

According to the embodiments of the present disclosure, a key condition for forming the dense gel layer is that a layer of dense and special metal atoms exists between the metal and the gel layer. On the one hand, special metal atoms of this layer are bonded to a body of the metal through metal bonds. On the other hand, special metal atoms of this layer are bonded to the gel layer through chemical bonds. In order to prepare this layer of metal atoms, nickel-based metal is adopted in the embodiments of the present disclosure. Firstly, the body of the metal is aluminized, then surfaces of the metal is forged with shot peening to form a layer of dense metal aluminum atoms, and then a thermal barrier coating is sprayed. By alternately spraying 6 to 8 layers of a metal aluminum layer and an aluminum oxide ceramic layer, a thermal barrier coating with a thickness of about 2~3 mm is formed on the surfaces of the metal. After the thermal barrier coating encounters the supercritical water, thermal barrier coating may transform into the dense gel layer. The gel layer may prevent the supercritical water from contacting and corroding the metal of the liner. When a reaction center temperature is 700 °C to 800 °C, a surface temperature of the thermal barrier coating is maintained at 650 °C to 750°C, and a body temperature of the liner is maintained at 550 °C to 650°C.

According to the embodiments of the present disclosure, the reactor 2000 further includes a metal wire mesh arranged between the liner 2050 and the side wall 2015, so that a heat dissipation area of the liner pipe is increased by 10 to 100 times. By means of a function of fluid cross-flowing, a temperature of the liner pipe drops quickly, which effectively reduces the temperature of the liner pipe, and reduces a corrosion tendency of the liner pipe.

According to the embodiments of the present disclosure, the reactor further includes a cooling device for cooling the reactor after the reaction starts, so as to prevent a temperature of the reactor from being too high, shortening a service life of the apparatus and even causing danger.

According to the embodiments of the present disclosure, the cooling device includes at least one set of cooling jackets arranged outside the reactor housing, and the heating device includes at least one set of heating jackets arranged outside the reactor housing.

FIG. 21 schematically shows a schematic diagram of a cooling device 2110 according to the embodiments of the present disclosure.

As shown in FIG. 21, the cooling jacket 2110 may include two parts 2111 and 2112 that may be fixed by fixing holes and bolts 2113. Each of the parts 2111 and 2112 may be filled with cooling water. The cooling device of the embodiments of the present disclosure may include one or more sets of cooling jackets 2110. When the apparatus is running, a temperature of the reactor 2100 may be controlled by adjusting a number of cooling jackets in use. Similarly, the heating device of the embodiments of the present disclosure may include one or more sets of heating jackets. When the apparatus is running, a temperature of the reactor may be controlled by adjusting a number of heating jackets in use.

Referring back to FIG. 20, according to the embodiments of the present disclosure, the reactor housing 2010 includes a first area 10 close to the organic matter feed port 2011 and a second area 20 close to the discharge port 2013. The heating device 2020 is arranged outside the first area 10, and the cooling device 2040 is arranged outside the second area 20. According to the embodiments of the present disclosure, the supercritical water oxidation is completed in the first area 10. The product is cooled by the cooling device 2040 while flowing through the second area 20 to the discharge port 2013, and a temperature of the product at the discharge port is with a range of about 150 to 300 °C.

According to the embodiments of the present disclosure, the reactor 2000 may further include at least one temperature sensor for obtaining a temperature of at least one position of the supercritical water oxidation reactor. For example, temperature probes may be provided at both ends and in a middle of the liner 2050, and may also be provided between the heating device 2020 and the reactor housing 2010.

According to the embodiments of the present disclosure, the reactor 2000 further includes at least one pressure sensor for obtaining a pressure of at least one position of the reactor. For example, both ends of the reactor 2000 may be provided with pressure gauges for detecting a pressure inside the reactor 2000.

According to the embodiments of the present disclosure, by providing a turn-back tube in the reactor housing, the organic matter may be fully preheated, heated up, and even pyrolyzed during a flow process of the organic matter in the turn-back tube, thereby improving the reaction efficiency.

The embodiments of the present disclosure further provide a method of treating a waste liquid by using the reactor described above, which is described below with reference to the embodiments shown in FIG. 22.

FIG. 22 schematically shows a flowchart of a method of treating a waste liquid according to the embodiments of the present disclosure.

As shown in FIG. 22, the method includes operations S2210 to S2240.

In operation S2210, the reactor is heated.

In operation S2220, when a temperature in the reactor housing reaches a first temperature, the first solution is fed into the reactor housing through the organic matter feed port, and the oxidant and water are fed into the reactor housing through the oxidant feed port until the temperature in the reactor housing reaches a second temperature.

In operation S2230, when a pressure in the reactor housing reaches a predetermined pressure, the back pressure valve at the discharge port of the reactor is opened.

In operation S2240, the waste liquid is fed into the reactor housing through the organic matter feed port. The waste liquid reaches an opening of the outer tube of the turn-back tube after passing through the inner tube of the turn-back tube and the outer tube of the turn-back tube sequentially, and is oxidized in the supercritical water environment and discharged from the discharge port.

According to the embodiments of the present disclosure, for example, the reactor may be filled with water first, and the reactor may be preheated with an electric heating jacket so that a temperature in the reactor housing reaches the first temperature, for example, 300 °C. According to the embodiments of the present disclosure, a first solution may be, for example, a sucrose solution, and a concentration of sucrose is gradually increased by adjusting a ratio of sucrose solution and water. The sucrose solution is fed into the reactor through the oxidant feed port and the oxidant is fed into the reactor at the same time. According to the embodiments of the present disclosure, the oxidant may be, for example, liquid oxygen. Under the temperature of 300 °C, the oxidant reacts with sucrose to generate heat, and the temperature of the reactor continuously rises to the second temperature.

The sucrose solution used in the embodiments of the present disclosure may effectively increase the temperature of the supercritical water reaction chamber. Different from propanol, sucrose aqueous solution is a non-flammable and non-explosive material. Furthermore, a combustion heat of a concentrated sucrose aqueous solution is higher than that of propanol, and thus the temperature of the supercritical water reaction zone may be increased to a certain temperature range of 550 to 800 °C.

Due to the liner processed by aluminizing, shot peening and spraying the thermal barrier coating provided by the embodiments of the present disclosure, the reactor may withstand a higher temperature compared with that in the related art, and a life of the reactor may be extended by 5 to 10 years. According to the embodiments of the present disclosure, the second temperature is not less than 600 °C. Preferably, the second temperature is between 650 °C and 800 °C. Compared with other supercritical water reactions in the related art, the temperature range is larger, and a reaction speed is effectively improved. Moreover, due to the high reaction temperature, the reaction time is 10 times less than that in conventional supercritical water, which greatly reduces a volume of an apparatus with a same processing capacity.

A turn-back tube is provided in the liner of the reactor. After the organic solvent flows into the turn-back tube, the temperature gradually increases, and the organic molecules are gradually pyrolyzed. When the organic molecules reach an outlet of the outer tube of the turn-back tube, most of the organic matter is pyrolyzed into small molecules and an oxidation reaction occurs immediately, which releases a large amount of heat. The heat is transferred to the organic matter when the fluid flows through the outer wall of the turn-back tube, so that the heat of the oxidation reaction is effectively used, the temperature of the tube wall is reduced, and the corrosion of the apparatus is reduced.

According to the embodiments of the present disclosure, when the reaction conditions are met, for example, when a temperature of the supercritical water oxidation is maintained at 650 to 750 °C, and a pressure of the supercritical water oxidation is maintained at 20 to 25Mpa, the organic matter supply device is started to feed the organic waste liquid to the turn-back tube through the organic matter feed port. In normal working conditions, a temperature of a portion of the reactor liner near the organic matter feed port is 650 to 800 °C, and a temperature of a corresponding portion of the reactor housing does not exceed 600 °C.

According to the embodiments of the present disclosure, the supercritical water oxidation reactor further includes a cooling device. The reactor housing includes a first area close to the organic matter feed port and a second area close to the discharge port. The method further includes controlling the heating device and the cooling device to control a temperature of the first area within a predetermined range, and to control a temperature of the second area so that the temperature of the discharge at the discharge port is not less than 120 °C.

For example, the temperature of the first area may be controlled between 650 °C and 800 °C. When a concentration of the organic matter is high, more heat of oxidation is released. At this time, the reactor needs to be cooled by the cooling device so that the temperature of the first area is controlled within 800 °C. On the other hand, the temperature of the reaction product is reduced to 120∼300 °C under a cooling action of the cooling device and the fluid between the liner and the housing. Optionally, the temperature of the discharge at the discharge port may be 150~300°C. Compared with the temperature of about 60 °C of the discharge port of the reactor in the related art, the temperature of the discharge port of the embodiments of the present disclosure is higher, for example, the temperature may reach 300 °C, which reduces a cooling burden of the supercritical water reactor and reduces a volume of the apparatus while improving the efficiency.

According to the embodiments of the present disclosure, the reactor further includes a stirrer provided with an ammeter and a voltmeter configured to detect a current and a voltage of the stirrer, respectively. The method further includes reducing a feed rate of at least one of the oxidant feed port and the organic matter feed port when the current and/or voltage of the stirrer reaches a predetermined value.

The embodiments of the present disclosure provide a separation apparatus for separating a multi-phase mixture. The separation apparatus includes: an evaporation tank configured to receive the multi-phase mixture, in which the evaporation tank is provided with a first cooling coil configured to stabilize a temperature of a solution in the evaporation tank within a target temperature range after the multi-phase mixture flows into the evaporation tank, and a slag discharge port configured to discharge a solid substance in the multi-phase mixture; an inner cooling barrel including a second cooling coil configured to cool a steam evaporated in the evaporation tank and a condensation water tank configured to receive a liquid substance obtained after the second cooling coil cools the steam, in which the condensation water tank is provided with a draining port for discharging the liquid substance. The evaporation tank and the inner cooling barrel are encapsulated in a housing, and the evaporation tank is arranged under the inner cooling barrel.

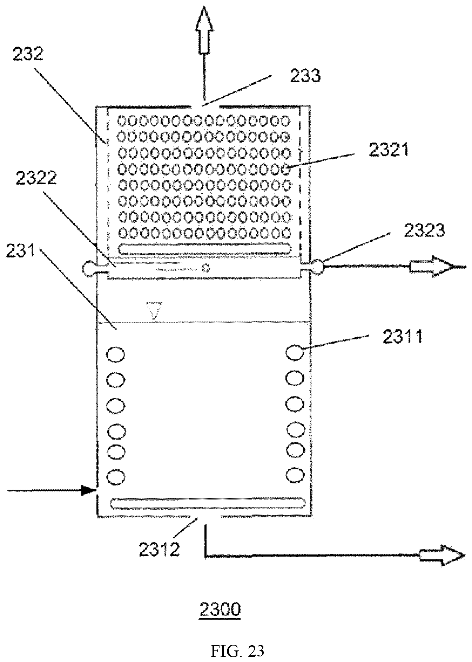

FIG. 23 schematically shows a schematic diagram of a separation apparatus for separating a multi-phase mixture according to the embodiments of the present disclosure.

It should be noted that FIG. 23 is only an example of the separation apparatus for separating the multi-phase mixture to which the embodiments of the present disclosure may be applied to help those skilled in the art understand technical content of the present disclosure, but it does not mean that the separation apparatus for separating the multi-phase mixture of the present disclosure may not be constructed in other ways.

As shown in FIG. 23, a separation apparatus 2300 for separating the multi-phase mixture includes an evaporation tank 231 and an inner cooling barrel 232.

According to the embodiments of the present disclosure, the evaporation tank 231 is used to receive the multi-phase mixture. The evaporation tank 231 is provided with a first cooling coil 2311 and a slag discharge port 2312. The first cooling coil 2311 is used to stabilize the temperature of the solution in the evaporation tank 231 within the target temperature range after the multi-phase mixture flows into the evaporation tank 231. The slag discharge port 2312 is used to discharge the solid substance in the multi-phase mixture.

According to the embodiments of the present disclosure, the evaporation tank 231 may receive an effluent from the supercritical water reactor, and the effluent may be a multi-phase mixture. The evaporation tank 231 may evaporate and concentrate the effluent, and then recover a solid substance. A steam rises into the inner cooling barrel 232.

According to the embodiments of the present disclosure, the effluent from the supercritical water reactor may be a high-temperature and high-pressure fluid, for example, the effluent of the reaction has a temperature of 150 to 300 °C and a pressure of 25MPa. In order to enable the high-temperature and high-pressure fluid to evaporate smoothly, a cooling coil may be provided in the evaporation tank 231 to make the effluent always in a boiling state. That is, the first cooling tube 2311 stabilizes the temperature of the solution in the evaporation tank 231 within a target temperature range, for example, about 100 °C, so that the solution may boil stably in the evaporation tank 231. The evaporated steam may rise into the inner cooling barrel 232, and the radioactive metal elements contained in the effluent of the reaction may flow out of the slag discharge port 2312 in a form of inorganic salts and may be recovered.

According to the embodiments of the present disclosure, a volume of the evaporation tank may be determined according to a processing flow rate of the multi-phase mixture. Optionally, a volume of the evaporation tank is 2 to 3 times the processing flow rate of the multi-phase mixture.

Specifically, the volume of the evaporation tank 231 may be 100L to 5000L. According to the embodiments of the present disclosure, the evaporation tank 231 may always be in a boiling state, for example, the temperature is maintained at about 100 °C. Assuming that the evaporation rate is considered equal to an output of the multi-phase mixture, considering that a ratio of an evaporation rate of water at 100 °C to a volume thereof is 2 to 3 times, if the output of the multi-phase mixture is 150 kg/h, the volume of the evaporation tank 231 may be 300L.

According to the embodiments of the present disclosure, the multi-phase mixture may include two or more of a solid substance, a liquid substance and a gaseous substance. For example, the multi-phase mixture contains both the solid substance and the gaseous substance, or contains the solid substance, the liquid substance and the gaseous substance at the same time.

According to the embodiments of the present disclosure, the multi-phase mixture may be a mixture obtained after an organic solvent distillation residue is treated by the supercritical water oxidation technology. For example, it may be an effluent obtained after the organic solvent distillation residue is treated by the supercritical water oxidation reactor. Generally, the supercritical water oxidation liquid effluent is salty wastewater, or radioactive wastewater, or inorganic brine.

The organic solvent distillation residue is a radioactive organic waste produced during a regeneration and reuse process of extractants in large commercial reprocessing plants. Part of a contaminated solvent from the main post-processing plant is returned to use after rapid distillation and extraction agent preparation. The distillation residue produced after rapid distillation contains radiolysis products of TBP/kerosene (DBP, MBP, butanol, long-chain alkyl phosphate, organic nitro compounds, organic nitroso compounds, nitrate esters, high boiling point polymers, etc.), and the composition is complex. Some of the radiolysis products have strong complexing ability to uranium, plutonium and fission products. The distillation residue has a strong radioactivity, and almost concentrates all radioactivity in the contaminated solvent.

According to the embodiments of the present disclosure, non-C, H, O (or radioactive elements, or heavy metals, or polar non-metals such as halogen, S, P, etc.) in the organic matter are processed by the separation apparatus, then evaporated and concentrated into salt slags at the bottom of the evaporation tank 101, and then separated in a form of inorganic salt slags, which effectively realizes a maximum reduction in the volume of the organic matter and lays the foundation for the treatment and reuse of the inorganic salt slags.

According to the embodiments of the present disclosure, the inner cooling barrel 232 includes a second cooling coil 2321 and a condensation water tank 2322. The second cooling coil 2321 is used to cool a steam evaporated in the evaporation tank 231, and the condensation water tank 2322 is used to receive a liquid substance obtained after the second cooling coil 2321 cools the steam. The condensation water tank 2322 is provided with a liquid discharge port 2323 for discharging the liquid substance. The evaporation tank 231 and the inner cooling barrel 232 are encapsulated in a housing, and the evaporation tank 231 is arranged under the inner cooling barrel 232.

According to the embodiments of the present disclosure, the liquid substance may be water. Distilled water may be obtained after the second cooling coil 2321 cools the steam, and the recycling of water resources may be achieved.

According to the embodiments of the present disclosure, types of the first cooling coil 2311 and the second cooling coil 2321 are not limited. For example, the first cooling coil 2311 and the second cooling coil 2321 may be spiral cooling tubes. An arrangement of the first cooling coil 2311 and the second cooling coil 2321 is not limited, as long as respective functions of the first cooling coil 2311 and the second cooling coil 2321 may be achieved.

According to the embodiments of the present disclosure, an exhaust port 233 is provided at the top of the housing of the separation apparatus 2300, and used to discharge gaseous substances in the multi-phase mixture.

According to the embodiments of the present disclosure, by encapsulating the evaporation tank 231 and the inner cooling barrel 232 in a same housing, the solid and liquid and gas multi-phase substances are separated in an integrated machine, which eliminates needs for a cooling apparatus, a gas-liquid separation apparatus, a liquid cooling apparatus and a gas cooling apparatus, and simplifies a processing flow.

In the related art, after the organic matter is converted into carbon dioxide, water and inorganic salts through the supercritical water oxidation reactor, separation of the carbon dioxide, water and inorganic salts needs the processing of multiple apparatuses such as a cooling apparatus, a gas-liquid separation apparatus, a liquid cooling apparatus, and a gas cooling apparatus. This processing manner not only needs a long processing flow and a lot of apparatuses, but also has a high cost.

Through the embodiments of the present disclosure, a separation apparatus is used to process the multi-phase mixture, so that the solid substance in the multi-phase mixture is evaporated and concentrated at the bottom of the evaporation tank, for example, separated in a form of an inorganic salt residue, and so that the liquid substance in the multi-phase mixture is evaporated in the evaporation tank, cooled by the inner cooling barrel, and discharged from the draining port of the condensation water tank, and so that the gaseous substance in the multi-phase mixture may be directly discharged from the top of the separation apparatus. Through the separation apparatus of the present disclosure, the separation of the multi-phase mixture may be realized at the same time, the processing flow is short, one-time investment and operating cost of the apparatuses are effectively reduced, and the maximum reduction in a volume of the multi-phase mixture is realized.

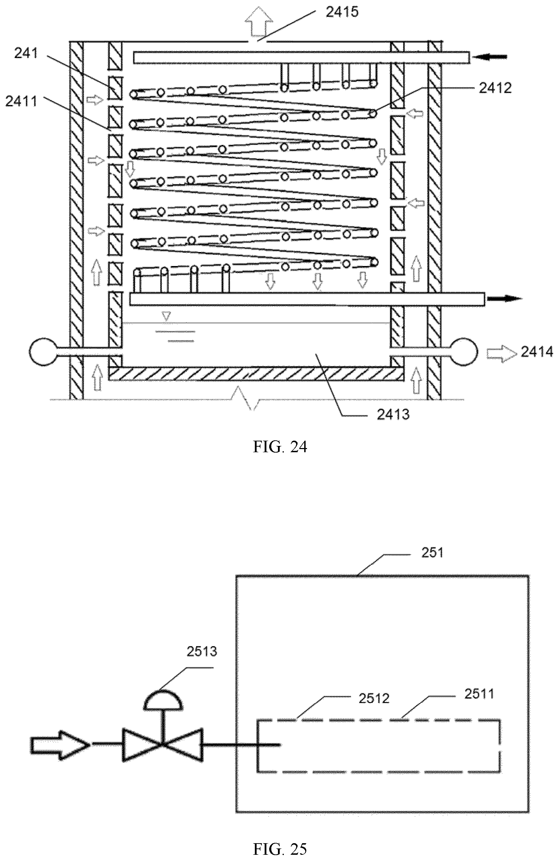

The separation apparatus shown in FIG. 23 will be further described below with reference to FIG. 24 to FIG. 26 in conjunction with specific embodiments.

FIG. 24 schematically shows a schematic diagram of an inner cooling barrel according to the embodiments of the present disclosure.

As shown in FIG. 24, a plurality of holes 2411 are provided on barrel walls of the inner cooling barrel 241 to allow steams evaporated in the evaporation tank to enter the inner cooling barrel 241.

It should be noted that, for the inner cooling barrel 241 in the embodiments of the present disclosure, reference may be made to the description of FIG. 23 in the present disclosure, which will not be repeated for the sake of brevity.

According to the embodiments of the present disclosure, the second cooling coil 2412 in the inner cooling barrel 241 may be filled with cooling water, so that a temperature in the inner cooling barrel 241 is less than a temperature in the evaporation tank. After the second cooling coil 2412 is filled with water, a temperature of the steams may be reduced.

According to the embodiments of the present disclosure, for example, in an upward flow direction as shown by arrows in FIG. 24, water vapor, oxygen, and carbon dioxide evaporated in the evaporation tank may enter the inner cooling barrel 241 from the plurality of holes 2411 provided on the barrel walls. After the steams encounter cold air, they are condensed to become water droplets and fall into the condensation water tank 2413, and then are discharged from the liquid drain 2414. The oxygen and carbon dioxide may be exhausted from an exhaust port 2415 at the top.

According to the embodiments of the present disclosure, a volume of the condensation water tank 2413 is not limited. For example, the volume of the condensation water tank 2413 may be 50L to 500L. The condensation water tank 2413 may be connected to an external annular pipe through a plurality of radiating pipes, and a water conduction capacity may be 200 to 2000 kg/h. The condensation coil 2412 may be a horizontally wound spiral cooling tube, and a dimension thereof is not limited.

According to the embodiments of the present disclosure, a plurality of holes 2411 are provided on the barrel walls for gases to pass through. The inner cooling barrel 241 may make water vapor above 100 °C condense into water at 60~90°C, and the condensing capacity may be 200 to 2000 kg/h. A volume of a cooling coil is not limited. For example, the volume may be 1000L. Most of the condensed water is returned to a water supply container of the supercritical water oxidation reactor for reuse, and a small amount of the condensed water may be discharged.

Through the separation apparatus of the present disclosure, the separation of the multi-phase mixture may be realized at the same time, the processing flow is short, the one-time investment and the operating cost of the apparatuses are effectively reduced, and the maximum reduction in the volume of the multi-phase mixture is realized.

FIG. 25 schematically shows a schematic diagram of a sleeve according to the embodiments of the present disclosure.

It should be noted that, for the evaporation tank 251 in the embodiments of the present disclosure, reference may be made to the description of FIG. 23 in the present disclosure, which will not be repeated here for the sake of brevity.

As shown in FIG. 25, the evaporation tank 251 is provided with a sleeve 2511 for receiving the multi-phase mixture. A plurality of small apertures 2512 are distributed on a tube wall of the sleeve 2511, and the multi-phase mixture is dispersed and discharged through the plurality of small apertures 2512 into the evaporation tank 251.

According to the embodiments of the present disclosure, a dimension of the sleeve 2511 is not limited. For example, a diameter of the sleeve 2511 may be Φ42~Φ50 mm, and a wall thickness of the sleeve 2511 may be 4~6 mm. A size of the small aperture 2512 is not limited. For example, the small aperture may have a diameter of 2 to 3 mm, and mainly functions to dissolve and disperse a high-speed fluid through the small apertures on the outlet tube.

According to the embodiments of the present disclosure, the type of the sleeve 2511 is not limited. For example, the sleeve 2511 may be a straight tube or a spiral tube.

According to the embodiments of the present disclosure, as shown in FIG. 25, the separation apparatus may further include a back pressure valve 2513. One end of the back pressure valve 2513 is connected to the sleeve 2511 through a pipe, and another end of the back pressure valve 2513 is connected to the discharge port of the supercritical water oxidation reactor through the pipe.

According to the embodiments of the present disclosure, a temperature of the effluent from the supercritical water oxidation reactor is much higher than that of a conventional effluent. Generally, when the effluent from the supercritical water oxidation reactor, that is, an oxidation product, is discharged from the discharge port, a temperature of the oxidation product discharged from the discharge port may be between 150 °C and 300 °C, while a temperature of the conventional effluent is generally 100 °C. When the separation apparatus of the present disclosure is used to separate the oxidation product, the temperature of the oxidation product discharged from the supercritical water reactor may be higher, which reduces a burden of cooling the supercritical water reactor. After increasing the temperature of the effluent from the supercritical water oxidation reactor, necessary conditions for self-evaporation are created for the subsequent effluent separation apparatus.

According to the embodiments of the present disclosure, taking organic radioactive waste as an example, the oxidation product first enters the evaporation tank after being discharged from the discharge port of the supercritical water oxidation reactor. In the evaporation tank, the oxidation product achieves a purpose of evaporation depending on its own temperature. After evaporation, the effluent may be separated into three parts: radioactive metal salt residue, distilled water, and purified gas.

According to the embodiments of the present disclosure, the radioactive elements in the effluent are intermittently discharged as salt slags in a form of metal salts. The steam evaporated in the evaporation tank is cooled above the evaporation tank and recycled in a form of distilled water. Oxygen and carbon dioxide in the effluent are purified after being washed in the evaporation tank and washed by steam condensed water.

Take radioactive cesium and strontium as examples, after the radioactive cesium is evaporated in the evaporation tank, a decontamination factor may reach 10⁵, and a cesium concentration in the water vapor is less than one in a hundred thousand of a cesium concentration in the water in the evaporation tank, and a decontamination factor of strontium by evaporation may reach 10⁹. Therefore, the steam may be deeply purified.

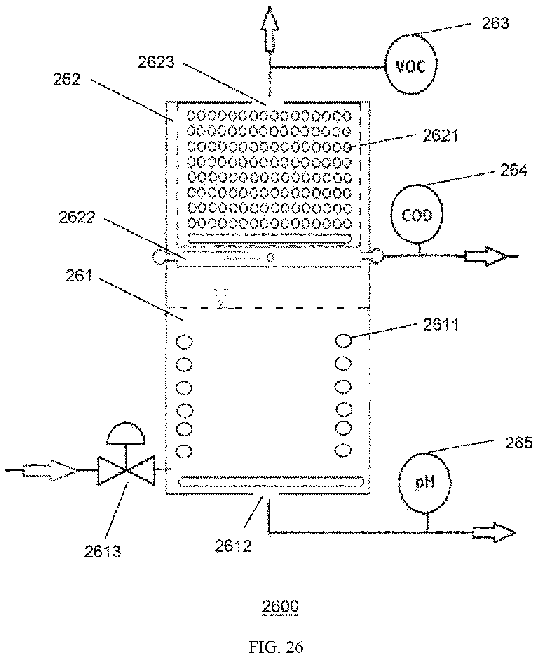

FIG. 26 schematically shows a schematic diagram of a separation apparatus for separating a multi-phase mixture according to the embodiments of the present disclosure.

As shown in FIG. 26, a separation apparatus 2600 for separating the multi-phase mixture includes an evaporation tank 261 and an inner cooling barrel 262.

According to the embodiments of the present disclosure, the evaporation tank 261 is used to receive the multi-phase mixture. The evaporation tank 261 is provided with a first cooling coil 2611 and a slag discharge port 2612. The first cooling coil 2611 is used to stabilize a temperature of the solution in the evaporation tank 261 within a target temperature range after the multi-phase mixture flows into the evaporation tank 261. The slag discharge port 2612 is used to discharge solid substances in the multi-phase mixture.

According to the embodiments of the present disclosure, the evaporation tank 261 may receive an effluent from the supercritical water reactor, which may be a multi-phase mixture. The evaporation tank 261 may evaporate and concentrate the effluent, and then recover solid substances. Steams rise into the inner cooling barrel 262. The inner cooling barrel 262 may include a second cooling coil 2621 and a condensation water tank 2622.

According to the embodiments of the present disclosure, the separation apparatus 2600 may further include a back pressure valve 2613.

For the evaporation tank 261, the inner cooling barrel 262, the first cooling coil 2611, the slag discharge port 2612, the second cooling coil 2621, the condensation water tank 2622, etc. in the embodiments of the present disclosure, reference may be made to the description for FIG. 23 to FIG. 25 in the present disclosure, which will not be repeated here for the sake of brevity.

According to the embodiments of the present disclosure, as shown in FIG. 26, an online volatile organic matter (VOC) monitor 263 is provided at an exhaust port 2623.

According to the embodiments of the present disclosure, the evaporation tank 261 and/or the inner cooling barrel 262 are provided with a thermometer (not shown in FIG. 26) for monitoring a temperature of the solution in the evaporation tank 261 and/or a temperature in the inner cooling barrel 262.

According to the embodiments of the present disclosure, the evaporation tank 261 is provided with a level gauge (not shown in FIG. 26), and/or the evaporation tank 261 is provided with a pH meter 265 for monitoring a pH value of the solution in the evaporation tank 261. The pH meter 265 may be arranged in the evaporation tank 261 or outside the evaporation tank 261, such as on a pipe connected to the slag discharge port 2612.

According to the embodiments of the present disclosure, as shown in FIG. 26, the separation apparatus is provided with an online chemical oxygen demand (COD) monitor 264 for detecting a chemical oxygen demand of the condensed water discharged from the condensation water tank 2622.

According to the embodiments of the present disclosure, the effluent from the supercritical water oxidation reactor flows through the back pressure valve through a pipe. After the back pressure valve is opened, the effluent may spiral around in the evaporation tank when passing through the evaporation tank through a sleeve, and heat therein are transferred to water at 100 °C. After that, the effluent may also pass through the inner cooling barrel through a pipe and be connected to the back pressure valve, return to the evaporation tank after decompression, and a gas-water mixture in the effluent may be sprayed into the evaporation tank (at 100 °C and an atmospheric pressure).

The inner cooling barrel may be provided with a spiral cooling tube to condense a second-evaporated steam into liquid water. A temperature of the liquid water may be 65°C, and most of the liquid water may be reused as a source of water supply. Excess oxygen (such as 50% excess) in the reaction effluent is discharged. The evaporated substances in the evaporation tank are mainly salts of metal radioactive elements, which are discharged through a slag discharge pipe and then are collected, thus achieving a goal of recycling of radioactive elements in the organic matter and an inorganization of the organic matter.

According to the embodiments of the present disclosure, the separation apparatus is used to treat the multi-phase mixture, so that solid substances in the multi-phase mixture are evaporated and concentrated at the bottom of the evaporation tank, for example, separated in a form of inorganic salt residue, and so that liquid substances in the multi-phase mixture are evaporated in the evaporation tank, cooled by the inner cooling barrel and discharged from the draining port of the condensation water tank, and so that gaseous substances in the multi-phase mixture may be directly discharged from the top of the separation apparatus. Through the separation apparatus of the present disclosure, the separation of the multi-phase mixture may be realized at the same time, the processing flow is short, one-time investment and operating cost of the apparatus are effectively reduced, and the maximum reduction in the volume of the multi-phase mixture is realized.

Those skilled in the art may understand that the various embodiments of the present disclosure and/or the features described in the claims may be combined in various ways, even if such combinations are not explicitly described in the present disclosure. In particular, without departing from the spirit and teachings of the present disclosure, the various embodiments of the present disclosure and/or the features described in the claims may be combined in various ways. All these combinations fall within the scope of the present disclosure.

Although the present disclosure has been shown and described with reference to specific exemplary embodiments of the present disclosure, those skilled in the art should understand that without departing from the spirit and scope of the present disclosure defined by the appended claims and their equivalents, various changes in form and details may be made to the present disclosure. Therefore, the scope of the present disclosure should not be limited to the above-mentioned embodiments, but should be defined by the appended claims and their equivalents.

## Claims

1. A supercritical water oxidation system, comprising:
a supercritical water oxidation device comprising:
a reactor; and
an outer self-separating barrel,
wherein the reactor is arranged inside the outer self-separating barrel and comprises a reactor housing provided with an oxidant feed port, an organic matter feed port and a discharge port,
wherein the outer self-separating barrel is provided with an evaporation tank, a condensation tank and a condensation tube, the evaporation tank is in communication with the discharge port, and a back pressure valve is provided between the evaporation tank and the discharge port, and
wherein the condensation tank is arranged above the evaporation tank, and the condensation tube is arranged above the condensation tank, so that a liquid obtained by liquefying a gas evaporated in the evaporation tank at the condensation tube falls back into the condensation tank;
an oxidant supply device in communication with the oxidant feed port; and
an organic matter supply device in communication with the organic matter feed port.

2. The supercritical water oxidation system of claim 1, wherein,
a cooling tube and a slag discharge port are provided in the evaporation tank, a draining port is provided in the condensation tank, and an exhaust port is provided on a top of the outer self-separating barrel, and
wherein an inner cooling barrel is provided in the outer self-separating barrel, the condensation tube is arranged inside the inner cooling barrel, the condensation tank is formed at a bottom of the inner cooling barrel, and a plurality of holes are provided on a barrel wall of the inner cooling barrel;
the evaporation tank is in communication with the reactor through an outlet pipe of the reactor, a sleeve is provided in the evaporation tank, the outlet pipe of the reactor is connected to the sleeve, and the sleeve is provided with a small aperture;
the oxidant supply device comprises an oxygen cylinder group, an oxygen pressurized pump, a high-pressure oxygen cylinder and a one-way valve; and
the organic matter supply device comprises a first water container, a second water container, a peristaltic pump, a high-pressure pump, and a one-way valve, wherein the high-pressure pump is in communication with the first water container and the peristaltic pump, and the peristaltic pump is in communication with the second water container.

3. The supercritical water oxidation system of claim 2, further comprising a monitoring system comprising at least one of:
temperature sensors provided on the reactor housing, in the evaporation tank and/or in the condensation tank;
a pressure sensor provided in the reactor housing;
an online pH monitor provided at the slag discharge port;
an online volatile organic matter monitor provided at the exhaust port; and/or
an online chemical oxygen demand monitor provided at the draining port.

4. The supercritical water oxidation system of claim 3, further comprising a control system configured to control, in response to a user input or in response to a monitoring result of the monitoring system, at least one of:
a pressure and/or a flow rate of an oxidant supply;
a pressure and/or a flow rate of an organic matter supply;
a temperature of the reactor and/or a temperature of the evaporation tank; and/or
a state of the back pressure valve.

5. The supercritical water oxidation system of claim 1, wherein the reactor further comprises:
a stirrer comprising a rotating shaft penetrating the reactor housing, wherein the rotating shaft passes through the discharge port, and the stirrer is provided with an ammeter and/or a voltmeter;
a heating device configured to increase a temperature in the reactor housing, wherein the heating device comprises at least one set of heating jackets arranged outside the reactor housing; and/or
a cooling device comprising at least one set of cooling jackets arranged outside the reactor housing, wherein the reactor housing comprises a first area close to the oxidant feed port and a second area close to the discharge port, the heating device is arranged outside the first area, and the cooling device is arranged outside the second area.

6. The supercritical water oxidation system of claim 1, wherein the reactor housing comprises a first end wall, a side wall, and a second end wall opposite to the first end wall, the oxidant feed port is arranged on the first end wall, the organic matter feed port is arranged on the side wall, and the discharge port is arranged on the second end wall;
wherein the reactor further comprises a liner provided on the second end wall and extending toward the first end wall, and the discharge port is arranged inside the liner;
wherein a distance between the organic matter feed port and the first end wall is greater than a distance between the organic matter feed port and the second end wall; and
wherein the liner is processed by aluminizing, shot peening, and spraying a thermal barrier coating comprising a plurality of aluminum layers and a plurality of aluminum oxide layers alternately arranged.

7. A method of treating organic wastewater implemented by the supercritical water oxidation system of claim 1, comprising:
heating the reactor;
feeding a first solution into the reactor housing through the organic matter feed port and feeding an oxidant into the reactor housing through the oxidant feed port in response to a temperature in the reactor housing reaching a first temperature, until the temperature in the reactor housing reaches a second temperature, wherein the second temperature is not less than 600 °C;
opening the back pressure valve in response to a pressure in the reactor housing reaching a predetermined pressure; and
feeding the organic wastewater into the reactor housing through the organic matter feed port, wherein the organic wastewater is oxidized in a supercritical water environment and discharged from the discharge port into the evaporation tank, so as to separate a harmful substance through self-evaporation.

8. The method of claim 7, wherein the second temperature is within a range of 650 °C to 800 °C, the first solution contains a sucrose solution, and the oxidant contains oxygen; and/or
the reactor further comprises a stirrer provided with an ammeter used to detect a current of the stirrer and a voltmeter used to detect a voltage of the stirrer, and the method further comprises reducing a feed rate of at least one of the oxidant feed port and the organic matter feed port in response to the current of the stirrer and/or voltage of the stirrer reaching a predetermined value.

9. The method of claim 7, wherein the reactor further comprises a heating device and a cooling device, and the reactor housing comprises a first area close to the oxidant feed port and a second area close to the discharge port, and the method further comprises:
controlling the heating device and the cooling device to control a temperature of the first area within a predetermined range and to control a temperature of the second area so that a temperature of a discharge at the discharge port is not less than 120 °C, wherein the temperature of the discharge at the discharge port is within a range of 150 °C to 300 °C.

10. The method of claim 7, wherein the supercritical water oxidation system further comprises a monitoring system, and the method further comprises: controlling, in response to a user input or in response to a monitoring result of the monitoring system, at least one of:
a pressure and/or a flow rate of an oxidant supply;
a pressure and/or a flow rate of an organic matter supply;
a temperature of the reactor and/or a temperature of the evaporation tank; and/or
a state of the back pressure valve.

11. A supercritical water oxidation device, comprising a reactor, wherein the reactor comprises:
a reactor housing provided with an oxidant feed port, an organic matter feed port and a discharge port;
a heating device configured to increase a temperature in the reactor housing; and
a stirrer comprising a rotating shaft penetrating the reactor housing.

12. The supercritical water oxidation device of claim 11, wherein,
the rotating shaft passes through the discharge port;
the stirrer is provided with an ammeter and/or a voltmeter; and/or
the reactor further comprises a cooling device comprising at least one set of cooling jackets arranged outside the reactor housing, the heating device comprises at least one set of heating jackets arranged outside the reactor housing, the reactor housing comprises a first area close to the oxidant feed port and a second area close to the discharge port, the heating device is arranged outside the first area, and the cooling device is arranged outside the second area.

13. The supercritical water oxidation device of claim 11, wherein the reactor housing comprises a first end wall, a side wall, and a second end wall opposite to the first end wall, the oxidant feed port is arranged on the first end wall, the organic matter feed port is arranged on the side wall, and the discharge port is arranged on the second end wall;
wherein the reactor further comprises a liner provided on the second end wall and extending toward the first end wall, and the discharge port is arranged inside the liner;
wherein a distance between the organic matter feed port and the first end wall is greater than a distance between the organic matter feed port and the second end wall; and
wherein the liner is processed by aluminizing, shot peening, and spraying a thermal barrier coating comprising a plurality of aluminum layers and a plurality of aluminum oxide layers alternately arranged.

14. The supercritical water oxidation device of claim 11, further comprising:
an outer self-separating barrel provided with an evaporation tank, a condensation tank and a condensation tube, wherein the reactor is arranged inside the outer self-separating barrel, the evaporation tank is in communication with the discharge port, and a back pressure valve is provided between the evaporation tank and the discharge port, and wherein the condensation tank is arranged above the evaporation tank, and the condensation tube is arranged above the condensation tank, so that a liquid obtained by liquefying a gas evaporated in the evaporation tank at the condensation tube falls back into the condensation tank.

15. The supercritical water oxidation device of claim 14, wherein,
a cooling tube is provided in the evaporation tank, a slag discharge port is provided in the evaporation tank, a draining port is provided in the condensation tank, and an exhaust port is provided on a top of the outer self-separating barrel;
an inner cooling barrel is provided in the outer self-separating barrel, the condensation tube is arranged inside the inner cooling barrel, the condensation tank is formed at a bottom of the inner cooling barrel, and a plurality of holes are provided on a barrel wall of the inner cooling barrel; and/or
the evaporation tank is in communication with the reactor through an outlet pipe of the reactor, a sleeve is provided in the evaporation tank, the outlet pipe of the reactor is connected to the sleeve, and the sleeve is provided with a small aperture.

16. The supercritical water oxidation device of claim 15, wherein,
temperature sensors are provided in the evaporation tank, in the condensation tank, and on the reactor housing;
a pressure sensor is provided in the reactor housing;
an online pH monitor is provided at the slag discharge port;
an online volatile organic matter monitor is provided at the exhaust port; and/or
an online chemical oxygen demand monitor is provided at the draining port.

17. A method of treating organic wastewater implemented by the supercritical water oxidation device of claim 11, wherein a back pressure valve is provided at the discharge port of the supercritical water oxidation reactor, the method comprising:
heating the reactor;
starting the stirrer, feeding a first solution into the reactor housing through the organic matter feed port and feeding an oxidant into the reactor housing through the oxidant feed port in response to a temperature in the reactor housing reaching a first temperature, until the temperature in the reactor housing reaches a second temperature, wherein the second temperature is not less than 600 °C;
opening the back pressure valve in response to a pressure in the reactor housing reaching a predetermined pressure; and
feeding the organic wastewater into the reactor housing through the organic matter feed port, wherein the organic wastewater is oxidized in a supercritical water environment and discharged from the discharge port.

18. The method of claim 17, wherein,
the second temperature is within a range of 650 °C to 800 °C, the first solution contains a sucrose solution, and the oxidant contains oxygen; and/or
the stirrer is provided with an ammeter used to detect a current of the stirrer and a voltmeter used to detect a voltage of the stirrer, the method further comprises reducing a feed rate of at least one of the oxidant feed port and the organic matter feed port in response to the current of the stirrer and/or the voltage of the stirrer reaching a predetermined value.

19. The method of claim 17, wherein the supercritical water oxidation reactor further comprises a cooling device, and the reactor housing comprises a first area close to the oxidant feed port and a second area close to the discharge port, and the method further comprises:
controlling the heating device and the cooling device to control a temperature of the first area within a predetermined range and to control a temperature of the second area so that a temperature of a discharge at the discharge port is not less than 120 °C, wherein the temperature of the discharge at the discharge port is within a range of 150 °C to 300 °C.

20. The method of claim 17, wherein the supercritical water oxidation device further comprises an outer self-separating barrel provided with an evaporation tank, a condensation tank and a condensation tube, the reactor is arranged inside the outer self-separating barrel, wherein the evaporation tank is in communication with the discharge port, and a back pressure valve is provided between the evaporation tank and the discharge port, wherein the condensation tank is arranged above the evaporation tank, and the condensation tube is arranged above the condensation tank, so that a liquid obtained by liquefying a gas evaporated in the evaporation tank at the condensation tube falls back into the condensation tank, and wherein the supercritical water oxidation device further comprises a monitoring system, and the method further comprises controlling, in response to a user input or in response to a monitoring result of the monitoring system, at least one of:
a pressure and/or a flow rate of an oxidant supply;
a pressure and/or a flow rate of an organic matter supply;
a temperature of the reactor and/or a temperature of the evaporation tank; and/or
a state of the back pressure valve.

21. A supercritical water oxidation system, comprising:
a reactor comprising a reactor housing provided with an oxidant feed port, an organic matter feed port and a discharge port;
a separator comprising an evaporation tank, a condensation tank and a condensation tube, wherein the condensation tank is arranged above the evaporation tank, and the condensation tube is arranged above the condensation tank, so that a liquid obtained by liquefying a gas evaporated in the evaporation tank at the condensation tube falls back into the condensation tank, and wherein the evaporation tank is in communication with the discharge port, and a back pressure valve is provided between the evaporation tank and the discharge port;
an oxidant supply device in communication with the oxidant feed port; and
an organic matter supply device in communication with the organic matter feed port.

22. The supercritical water oxidation system of claim 21, further comprising at least one of:
a water supply device in communication with the oxidant feed port;
a water chiller configured to supply water to the condensation tube; and
a protective device comprising a reactor protective jacket,
wherein a cooling tube is provided in the evaporation tank, a slag discharge port is provided in the evaporation tank, a draining port is provided in the condensation tank, an exhaust port is provided on a top of the separator, and the supercritical water oxidation system further comprises a gas filter device in communication with the exhaust port;
wherein an inner cooling barrel is provided in the separator, the condensation tube is arranged inside the inner cooling barrel, the condensation tank is formed at a bottom of the inner cooling barrel, and a plurality of holes are provided on a barrel wall of the inner cooling barrel;
wherein the evaporation tank is in communication with the reactor through an outlet pipe of the reactor, a sleeve is provided in the evaporation tank, the outlet pipe of the reactor is connected to the sleeve, and the sleeve is provided with a small aperture;
wherein the oxidant supply device comprises a liquid oxygen dewar, a liquid oxygen pump, a one-way valve, a liquid oxygen water bath vaporizer and a high-pressure oxygen cylinder group;
wherein the organic matter supply device comprises a liquid tank, a high-pressure pump and a one-way valve; and/or
wherein the water supply device comprises a first water container, a second water container, a peristaltic pump, a high-pressure pump, and a one-way valve, wherein the peristaltic pump is in communication with the second water container, and the high-pressure pump is in communication with the first water container and the peristaltic pump.

23. The supercritical water oxidation system of claim 21, further comprising a monitoring system comprising at least one of:
temperature sensors provided on the reactor housing, in the evaporation tank and in the condensation tank;
a pressure sensor provided in the reactor housing;
an online pH monitor provided at the slag discharge port;
an online volatile organic matter monitor provided at the exhaust port; and/or
an online chemical oxygen demand monitor provided at the draining port.

24. The supercritical water oxidation system of claim 23, further comprising a control system configured to control, in response to a user input or in response to a monitoring result of the monitoring system, at least one of:
a pressure and/or a flow rate of an oxide supply;
a pressure and/or a flow rate of an organic matter supply;
a temperature of the reactor and/or a temperature of the evaporation tank; and/or
a state of the back pressure valve.

25. The supercritical water oxidation system of claim 21, wherein the reactor further comprises at least one of:
a turn-back tube provided inside the reactor housing, wherein the turn-back tube comprises an inner tube with both ends open and an outer tube with one end open, the outer tube is sleeved outside the inner tube, the inner tube is in communication with the organic matter feed port, and the turn-back tube is arranged at a central axis of the reactor;
a stirrer comprising a rotating shaft penetrating the reactor housing, wherein the rotating shaft passes through the discharge port, and the stirrer is provided with an ammeter and/or a voltmeter;
a heating device comprising at least one set of heating jackets arranged outside the reactor housing; and
a cooling device comprising at least one set of cooling jackets arranged outside the reactor housing, wherein the reactor housing comprises a first area close to the oxidant feed port and a second area close to the discharge port, the heating device is arranged outside the first area, and the cooling device is arranged outside the second area.

26. The supercritical water oxidation system of claim 21, wherein the reactor housing comprises a first end wall, a side wall, and a second end wall opposite to the first end wall, the organic matter feed port is arranged on the first end wall, the oxidant feed port is arranged on the side wall, and the discharge port is arranged on the second end wall;
wherein the reactor further comprises a liner provided on the second end wall and extending toward the first end wall, the turn-back tube is arranged at least partially inside the liner, and the discharge port is arranged inside the liner;
wherein a distance between the oxidant feed port and the first end wall is greater than a distance between the oxidant feed port and the second end wall;
wherein the liner is processed by aluminizing, shot peening and spraying a thermal barrier coating comprising a plurality of aluminum layers and a plurality of aluminum oxide layers alternately arranged; and
wherein the reactor further comprises a metal wire mesh arranged between the liner and the side wall.

27. A method of treating waste liquid implemented by the supercritical water oxidation system of claim 21, comprising:
heating the reactor;
feeding a first solution, an oxidant and water into the reactor housing through the oxidant feed port in response to a temperature in the reactor housing reaching a first temperature, until the temperature in the reactor housing reaches a second temperature, wherein the second temperature is not less than 600 °C;
opening the back pressure valve in response to a pressure in the reactor housing reaching a predetermined pressure; and
feeding the waste liquid into the reactor housing through the organic matter feed port, wherein the waste liquid is oxidized in a supercritical water environment and discharged from the discharge port into the evaporation tank of the separator to separate a harmful substance through self-evaporation.

28. The method of claim 27, wherein,
the second temperature is within a range of 650 °C to 800 °C, the first solution contains a sucrose solution, and the oxidant contains liquid oxygen; and/or
the reactor further comprises a stirrer provided with an ammeter used to detect a current of the stirrer and a voltmeter used to detect a voltage of the stirrer, and the method further comprises reducing a feed rate of at least one of the oxidant feed port and the organic matter feed port in response to the current of the stirrer and/or voltage of the stirrer reaching a predetermined value.

29. The method of claim 27, wherein the reactor further comprises a heating device and a cooling device, and the reactor housing comprises a first area close to the organic matter feed port and a second area close to the discharge port, and the method further comprises:
controlling the heating device and the cooling device to control a temperature of the first area within a predetermined range and to control a temperature of the second area so that a temperature of a discharge at the discharge port is not less than 120 °C, wherein the temperature of the discharge at the discharge port is within a range of 150 °C to 300 °C.

30. The method of claim 27, wherein the supercritical water oxidation system further comprises a monitoring system, and the method further comprises controlling, in response to a user input or in response to a monitoring result of the monitoring system, at least one of:
a pressure and/or a flow rate of an oxide supply;
a pressure and/or a flow rate of an organic matter supply;
a temperature of the reactor and/or a temperature of the evaporation tank; and/or
a state of the back pressure valve.

31. A reactor for supercritical water oxidation, comprising:
a reactor housing provided with an oxidant feed port, an organic matter feed port and a discharge port;
a heating device configured to increase a temperature in the reactor housing; and
a turn-back tube provided inside the reactor housing, wherein the turn-back tube comprises an inner tube with both ends open and an outer tube with one end open, the outer tube is sleeved outside the inner tube, and the inner tube is in communication with the organic matter feed port.

32. The reactor of claim 31, further comprising:
a stirrer comprising a rotating shaft penetrating the reactor housing, wherein the rotating shaft passes through the discharge port, and the stirrer is provided with an ammeter and/or a voltmeter;
at least one temperature sensor configured to obtain a temperature of at least one position of the reactor; and/or
at least one pressure sensor configured to obtain a pressure of at least one position of the reactor.

33. The reactor of claim 31, wherein the reactor housing comprises a first end wall, a side wall, and a second end wall opposite to the first end wall, the organic matter feed port is arranged on the first end wall, the oxidant feed port is arranged on the side wall, and the discharge port is arranged on the second end wall.

34. The reactor of claim 33, further comprising:
a liner provided on the second end wall and extending toward the first end wall, wherein the turn-back tube is arranged at least partially inside the liner, and the discharge port is arranged inside the liner,
wherein a distance between the oxidant feed port and the first end wall is greater than a distance between the oxidant feed port and the second end wall,
wherein the liner is processed by aluminizing, shot peening and spraying a thermal barrier coating comprising a plurality of aluminum layers and a plurality of aluminum oxide layers alternately arranged, and
wherein the reactor further comprises a metal wire mesh arranged between the liner and the side wall.

35. The reactor of any one of claims 31 to 34, wherein the turn-back tube is arranged at a central axis of the reactor.

36. The reactor of claim 31, further comprising:
a cooling device comprising at least one set of cooling jackets arranged outside the reactor housing,
wherein the heating device comprises at least one set of heating jackets arranged outside the reactor housing, the reactor housing comprises a first area close to the oxidant feed port and a second area close to the discharge port, the heating device is arranged outside the first area, and the cooling device is arranged outside the second area.

37. A method of treating waste liquid implemented by the reactor of claim 31, wherein a back pressure valve is provided at a discharge port of the reactor, and the method comprises:
heating the reactor;
feeding a first solution into the reactor housing through the organic matter feed port and feeding an oxidant and water into the reactor housing through the oxidant feed port in response to a temperature in the reactor housing reaching a first temperature, until the temperature in the reactor housing reaches a second temperature, wherein the second temperature is not less than 600 °C;
opening the back pressure valve in response to a pressure in the reactor housing reaching a predetermined pressure; and
feeding the waste liquid into the reactor housing through the organic matter feed port, wherein the waste liquid reaches an opening of the outer tube of the turn-back tube after passing through the inner tube of the turn-back tube and the outer tube of the turn-back tube sequentially, and is oxidized in a supercritical water environment and discharged from the discharge port.

38. The method of claim 37, wherein the second temperature is with a range of 650 °C to 800 °C, the first solution contains a sucrose solution, and the oxidant contains liquid oxygen.

39. The method of claim 37, wherein the reactor further comprises a stirrer provided with an ammeter used to detect a current of the stirrer and a voltmeter used to detect a voltage of the stirrer,
the method further comprising:
reducing a feed rate of at least one of the oxidant feed port and the organic matter feed port in response to the current of the stirrer and/or the voltage of the stirrer reaching a predetermined value.

40. The method of claim 37, wherein the reactor further comprises a cooling device, and the reactor housing comprises a first area close to the oxidant feed port and a second area close to the discharge port,
the method further comprising:
controlling the heating device and the cooling device to control a temperature of the first area within a predetermined range and to control a temperature of the second area so that a temperature of a discharge at the discharge port is not less than 120 °C, wherein the temperature of the discharge at the discharge port is within a range of 150 °C to 300 °C.

41. A separation apparatus of separating a multi-phase mixture, comprising:
an evaporation tank configured to receive a multi-phase mixture, wherein the evaporation tank is provided with: a first cooling coil configured to stabilize a temperature of a solution in the evaporation tank within a target temperature range when the multi-phase mixture flows into the evaporation tank, and a slag discharge port configured to discharge a solid substance in the multi-phase mixture; and
an inner cooling barrel comprising: a second cooling coil configured to cool a steam evaporated in the evaporation tank, and a condensation water tank configured to receive a liquid substance obtained after the second cooling coil cools the steam, wherein the condensation water tank is provided with a liquid drain for discharging the liquid substance;
wherein the evaporation tank and the inner cooling barrel are enclosed in a housing, and the evaporation tank is arranged under the inner cooling barrel.

42. The separation apparatus of claim 41, wherein a plurality of holes are provided on a barrel wall of the inner cooling barrel to allow the steam evaporated in the evaporation tank to enter the inner cooling barrel.

43. The separation apparatus of claim 41, wherein a sleeve for receiving the multi-phase mixture is provided in the evaporation tank, a plurality of small apertures are distributed on a tube wall of the sleeve, and the multi-phase mixture is dispersedly discharged into the evaporation tank through the plurality of small apertures.

44. The separation apparatus of claim 43, further comprising a back pressure valve, wherein one end of the back pressure valve is connected to the sleeve through a pipe, and another end of the back pressure valve is connected to a discharge port of a supercritical water oxidation reactor through a pipe.

45. The separation apparatus of claim 41, wherein a top of the housing is provided with an exhaust port for discharging a gaseous substance in the multi-phase mixture.

46. The separation apparatus of claim 45, wherein an online volatile organic matter monitor is provided at the exhaust port.

47. The separation apparatus of claim 41, wherein the evaporation tank and/or the inner cooling barrel are/is provided with a thermometer for monitoring a temperature of a solution in the evaporation tank and/or a temperature in the inner cooling barrel.

48. The separation apparatus of claim 41, wherein a volume of the evaporation tank is 2 to 3 times a processing flow rate of the multi-phase mixture.

49. The separation apparatus of claim 41, wherein the evaporation tank is provided with a level gauge, and/or the evaporation tank is provided with a pH meter for monitoring a pH value of a solution in the evaporation tank.

50. The separation apparatus of claim 41, wherein the separation apparatus is provided with an online chemical oxygen demand monitor.

51. A supercritical water oxidation system, comprising:
a supercritical water oxidation device comprising a reactor and an outer self-separating barrel, wherein the reactor is arranged inside the outer self-separating barrel and comprises a reactor housing provided with an oxidant feed port, an organic matter feed port and a discharge port, wherein the outer self-separating barrel is provided with an evaporation tank, a condensation tank and a condensation tube, the evaporation tank is in communication with the discharge port, and a back pressure valve is provided between the evaporation tank and the discharge port, and wherein the condensation tank is arranged above the evaporation tank, and the condensation tube is arranged above the condensation tank, so that a liquid obtained by liquefying a gas evaporated in the evaporation tank at the condensation tube falls back into the condensation tank;
an oxidant supply device in communication with the oxidant feed port; and
an organic matter supply device in communication with the organic matter feed port;
wherein the supercritical water oxidation system is an integrated system.
